# EUROPÄISCHE PATENTSCHRIFT

(11) **EP 2 085 454 B1**
(45) Veröffentlichungstag und Bekanntmachung des Hinweises auf die Patenterteilung: **10.08.2011**
(21) Anmeldenummer: 09001050.5
(22) Anmeldetag: 27.01.2009
(51) Int. Cl.: C09K 19/42

(54) **Flüssigkristallines Medium und Flüssigkristallanzeige**
Liquid crystal medium and liquid crystal display
Milieu à cristaux liquides et affichage à cristaux liquides

(30) Priorität: 01.02.2008 DE 102008007242
(43) Veröffentlichungstag der Anmeldung: 05.08.2009
(73) Patentinhaber: Merck Patent GmbH, 64293 Darmstadt (DE)
(72) Erfinder: Wittek, Michael Dr., 64285 Darmstadt (DE); Schuler, Brigitte, 63762 Grossostheim (DE); Graulich, Renate, 64560 Riedstadt (DE)

(56) Entgegenhaltungen:
- EP-A- 1 310 542
- WO-A-2004/044093
- WO-A-2005/017067
- WO-A-2005/123880
- WO-A-2008/025533
- US-A1- 2005 040 365

## Beschreibung

### Gebiet der Erfindung

Die vorliegende Erfindung betrifft flüssigkristalline Medien und diese Medien enthaltende Flüssigkristallanzeigen, speziell Anzeigen, die durch eine Aktivmatrix adressiert werden und insbesondere Anzeigen des Typs Twisted Nematic (TN), In Plane Switching (IPS) oder Fringe Field Switching (FFS).

### Stand der Technik und zu lösendes Problem

Flüssigkristallanzeigen (Liquid Crystal Displays - LCDs) werden in vielen Bereichen genutzt, um Informationen anzuzeigen. LCDs werden sowohl für Direktsichtanzeigen als auch für Anzeigen des Projektionstyps verwendet. Als elektrooptische Modi werden beispielsweise Twisted Nematic (TN), Super Twisted Nematic (STN), Optically Compensated Bend (OCB) und Electrically Controlled Birefringence (ECB) zusammen mit ihren verschiedenen Modifikationen sowie andere verwendet. Alle diese Modi nutzen ein elektrisches Feld, das im Wesentlichen rechtwinklig zu den Substraten beziehungsweise zur Flüssigkristallschicht verläuft. Neben diesen Modi gibt es auch elektrooptische Modi, die ein elektrisches Feld nutzen, das im Wesentlichen parallel zu den Substraten beziehungsweise der Flüssigkristallschicht verläuft, wie etwa der In-Plane Switching (IPS) Modus (wie z.B. in DE 40 00 451 und EP 0 588 568 offenbart) und im Fringe Field Switching (FFS) Modus, in dem ein starkes sogenanntes "fringe field" vorliegt, also ein starkes elektrisches Feld nahe am Rand der Elektroden und in der gesamten Zelle ein elektrisches Feld, welches sowohl eine starke vertikale Komponente als auch eine starke horizontale Komponente aufweist. Vor allem diese beiden letzteren elektrooptischen Modi werden für LCDs in modernen Tischmonitoren verwendet und sind für die Nutzung in Anzeigen für Fernseher und Multimedia-Anwendungen vorgesehen. Die Flüssigkristalle gemäß der vorliegenden Erfindung werden vorzugsweise in Anzeigen dieser Art verwendet. Generell werden in FFS-Displays dielektrisch positive, flüssigkristalline Medien mit eher kleineren Werten der dielektrischen Anisotropie verwendet, aber auch bei IPS-Displays werden teilweise flüssigkristalline Medien mit einer dielektrischen Anisotropie von nur ca. 3 oder sogar darunter verwendet.

Für diese Anzeigen sind neue flüssigkristalline Medien mit verbesserten Eigenschaften erforderlich. Insbesondere müssen die Ansprechzeiten für viele Arten von Anwendungen verbessert werden. Es sind daher flüssigkristalline Medien mit geringeren Viskositäten (η), speziell mit geringeren Rotationsviskositäten (γ₁) erforderlich. Die Rotationsviskosität sollte insbesondere für Monitoranwendungen 80 mPa·s oder weniger, vorzugsweise 60 mPa·s oder weniger und speziell 55 mPa·s oder weniger betragen. Neben diesem Parameter müssen die Medien über einen Bereich der nematischen Phase mit geeigneter Breite und Lage, sowie eine geeignete Doppelbrechung (Δn) verfügen und dielektrische Anisotropie (Δε) sollte hoch genug sein, um eine einigermaßen niedrige Betriebsspannung zu ermöglichen. Vorzugsweise sollte Δε höher als 2 und sehr bevorzugt höher als 3, vorzugsweise jedoch nicht höher als 15 und insbesondere nicht höher als 12 liegen, da dies einem zumindest einigermaßen hohen spezifischen Widerstand entgegenstehen würde.

Für Anwendungen als Displays für Notebooks oder andere mon'bile Anwendungen solite die Rotationsviskosität bevorzugt 120 mPa·s oder weniger und besonders bevorzugt 100 mPa·s oder weniger betragen. Hier sollte die dielektrische Anisotropie (Δε) vorzugsweise höher als 8 und besonders bevorzugt höher als 12 sein.

Vorzugsweise werden die Anzeigen gemäß der vorliegenden Erfindung durch eine Aktivmatrix (active matrix LCDs, kurz AMDs), bevorzugt durch eine Matrix aus Dünnschichttransistoren (TFTs), adressiert. Die erfindungsgemäßen Flüssigkristalle können jedoch in vorteilhafter Weise auch in Anzeigen mit anderen bekannten Adressierungsmitteln verwendet werden.

Es gibt zahlreiche unterschiedliche Anzeigemodi, die Verbundsysteme aus niedrigmolekularen Flüssigkristallmaterialien zusammen mit Polymermaterialien verwenden. Es sind dies z.B. PDLC- (polymer dispersed liquid crystal), NCAP- (nematic curvilinearily aligned phase) und PN-Systeme (polymer network), wie beispielsweise in WO 91/05 029 offenbart, oder ASM-Systeme (axially symmetric microdomain) und andere. Im Gegensatz hierzu verwenden die gemäß der vorliegenden Erfindung speziell bevorzugten Modi das Flüssigkristallmedium als solches, auf Oberflächen ausgerichtet. Diese Oberflächen werden typischerweise vorbehandelt, um eine uniforme Orientierung des Flüssigkristallmaterials zu erzielen. Die Anzeigemodi gemäß der vorliegenden Erfindung verwenden vorzugsweise ein elektrisches Feld, das im Wesentlichen parallel zur Verbundschicht verläuft.

Verschiedene Flüssigkristallzusammensetzungen sind dem Fachmann bekannt.

WO 2005/017067, EP 1 310 542 A1, US 2005/040365 A1, WO 2005/123880 und WO 2008/025533 beschreiben verschiedene Flüssigkristallmedien, alle für die Anwendung in TN-Anzeigen.

WO 2004/044093 beschreibt Flüssigkristallmedien zur Verwendung in einer ihrer optisch isotropen Phasen.

Flüssigkristallzusammensetzungen, die sich für LCDs und speziell für IPS-Anzeigen eignen, sind z.B. aus JP 07-181 439 (A), EP 0 667 555, EP 0 673 986, DE 195 09 410, DE 195 28 106, DE 195 28 107, WO 96/23 851 und WO 96/28 521 bekannt. Diese Zusammensetzungen sind jedoch mit gravierenden Nachteilen behaftet. Die meisten von ihnen führen, neben anderen Mängeln, zu unvorteilhaft langen Ansprechzeiten, weisen zu geringe Werte für den spezifischen Widerstand auf und/oder erfordern Betriebsspannungen, die zu hoch sind. Außerdem besteht der Bedarf das Tieftemperaturverhalten der LCDs zu verbessern. Hier sind sowohl eine Verbesserung der Betriebseigenschaften, wie auch der Lagerfähigkeit nötig.

Es besteht daher ein erheblicher Bedarf an flüssigkristallinen Medien mit geeigneten Eigenschaften für praktische Anwendungen, wie einem breiten nematischen Phasenbereich, geeigneter optischer Anisotropie Δn entsprechend dem verwendeten Anzeigetyp, einem hohen Δε und speziell geringen Viskositäten für besonders kurze Schaltzeiten.

### Vorliegende Erfindung

Überraschenderweise wurde nun gefunden, dass flüssigkristalline Medien mit einem geeignet hohen Δε, einem geeigneten Phasenbereich und Δn verwirklicht werden können, welche die Nachteile der Materialien des Standes der Technik nicht oder zumindest nur in erheblich geringerem Maße aufweisen.

Diese verbesserten flüssigkristallinen Medien gemäß der vorliegenden Anmeldung enthalten mindestens die folgenden Komponenten:
- eine erste dielektrisch positive Komponente, Komponente A, enthaltend eine oder mehrere dielektrisch positive Verbindungen der Formel IA, eine oder mehrere dielektrisch positive Verbindungen der Formel IB und eine oder mehrere dielektrisch positive Verbindungen der Formel IC 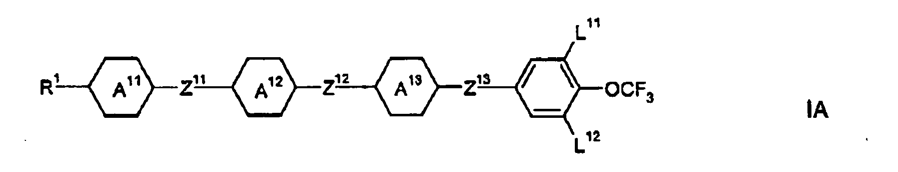 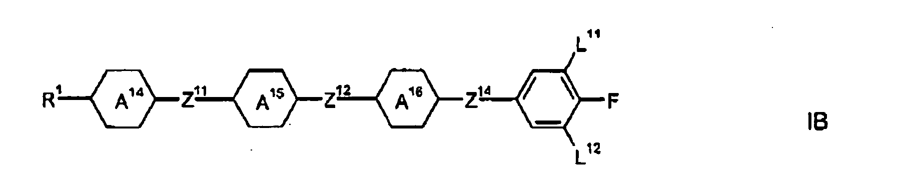 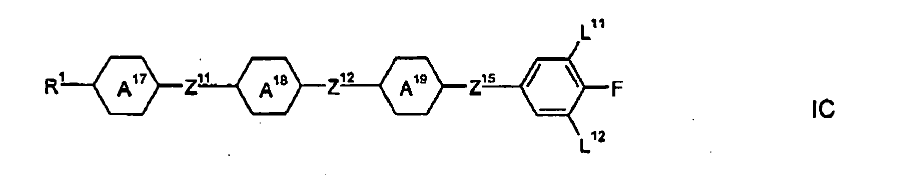 worin
   - R¹: Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen und vorzugs- weise Alkyl oder Alkenyl bedeutet, 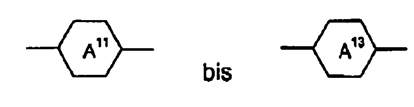
   unabhängig voneinander 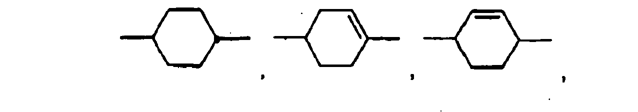 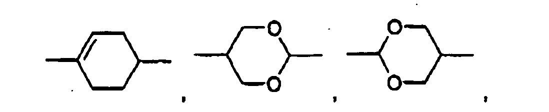 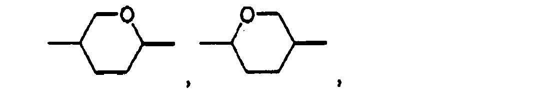 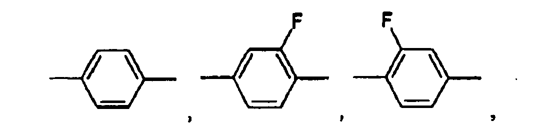 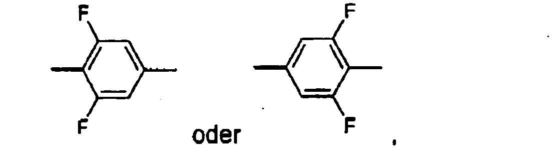 vorzugsweise 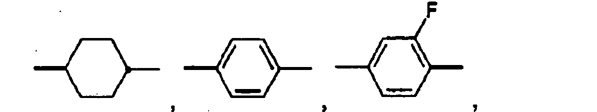 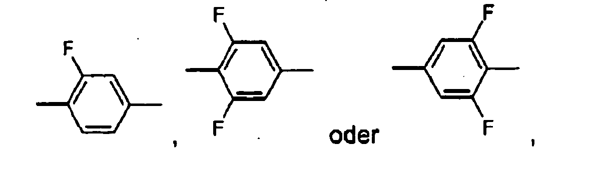 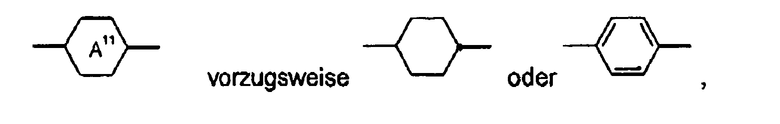 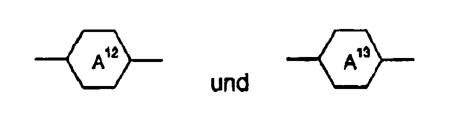 vorzugsweise unabhängig voneinander 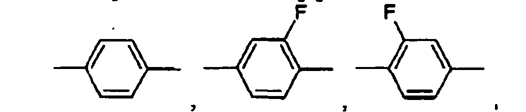 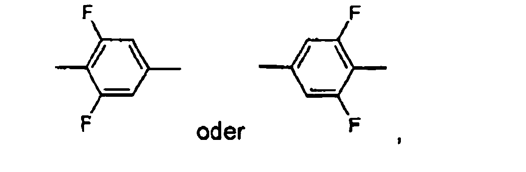 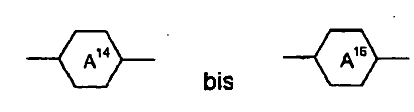 unabhängig voneinander 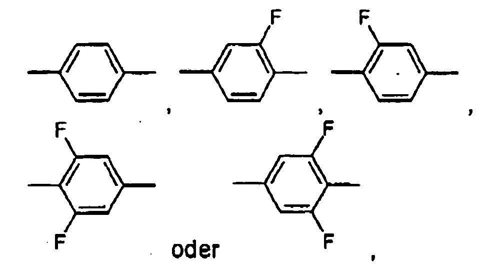 vorzugsweise unabhängig voneinander 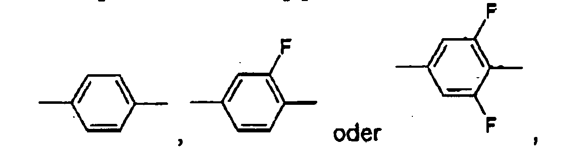 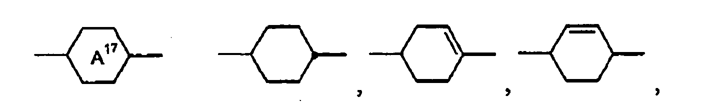 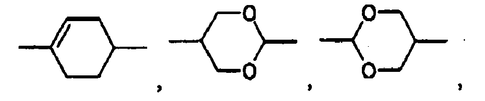 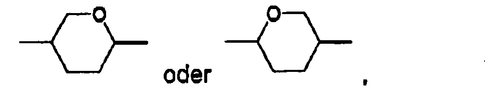 bevorzugt 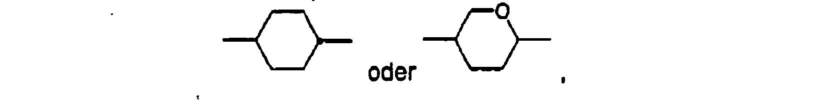 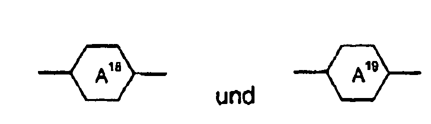 unabhängig voneinander 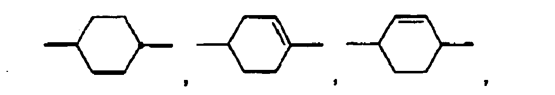 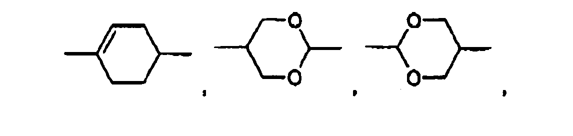 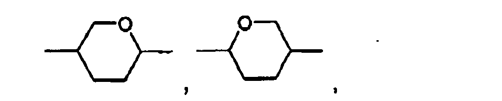 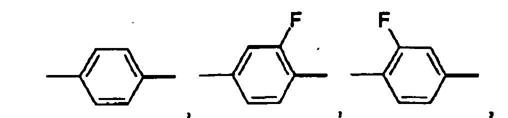 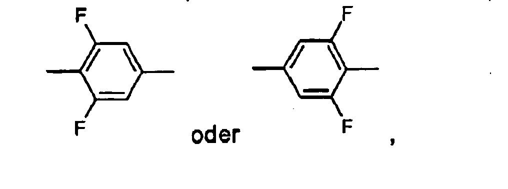 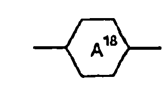 vorzugsweise 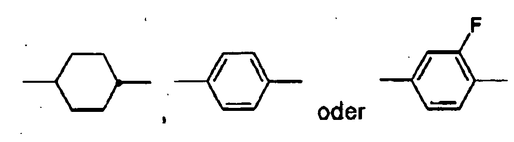 und 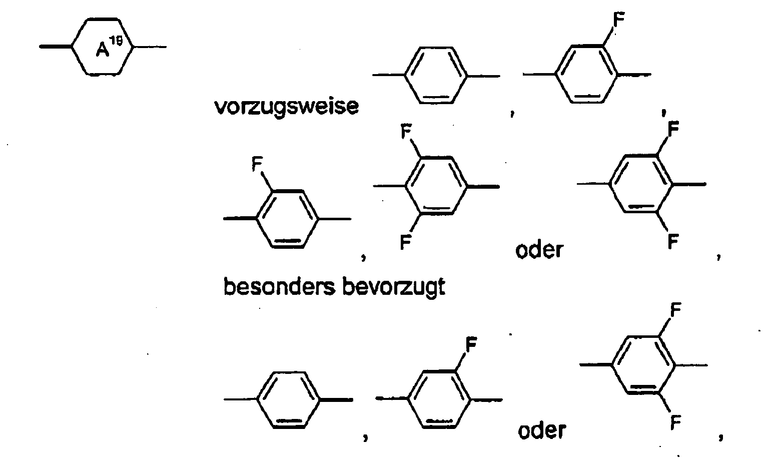
   - Z¹¹ bis Z¹⁵: unabhängig voneinander -CH₂CH₂-, -CF₂CF₂-, -COO-, *trans-* -CH=CH-, *trans*- -CF=CF-, -CH₂O-, -CF₂O- oder eine Einfachbindung, vorzugsweise -CH₂CH₂-, -COO-, *trans-* -CH=CH- oder eine Einfachbindung besonders bevorzugt -CF₂O- oder eine Einfachbindung und

   - Z¹³: ganz besonders bevorzugt eine Einfachbindung,
   - Z¹⁴ und Z¹⁵: ganz besonders bevorzugt -CF₂O-,
   - L¹¹ und L¹²: unabhängig voneinander H, F oder Cl, vorzugsweise H oder F, vorzugsweise einer oder beide und besonders beide F bedeuten, und
- gegebenenfalls eine zweite dielektrisch positive Komponente, Komponente B, enthaltend eine oder mehrere dielektrisch positive Verbindungen, vorzugsweise mit einer dielektrischen Anisotropie von mehr als 3, vorzugsweise ausgewählt aus der Gruppe der Verbindungen der Formeln II und III 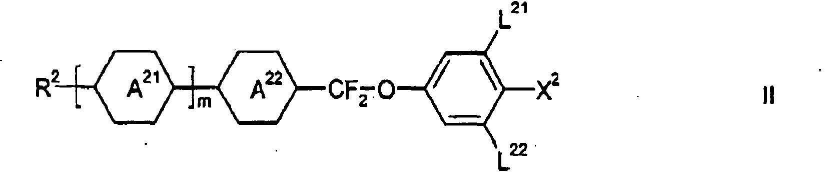 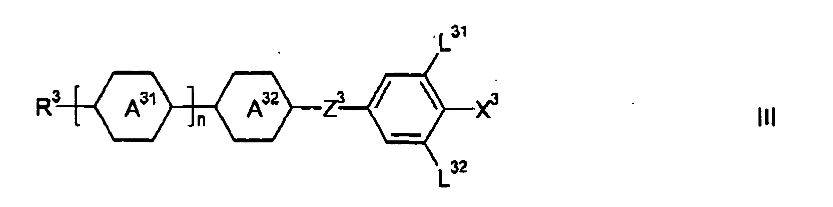 worin
   - R² und R³: unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen und vorzugsweise R² und R³ Alkyl oder Alkenyl bedeuten, 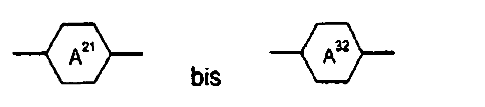
   bei jedem Erscheinen unabhängig voneinander 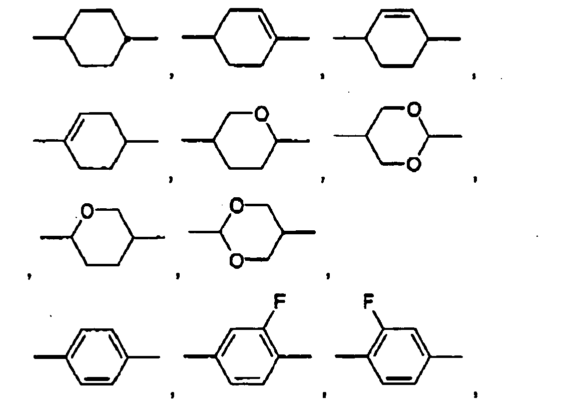 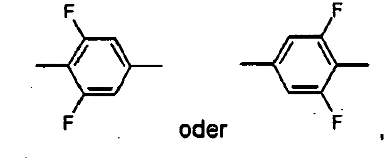 vorzugsweise 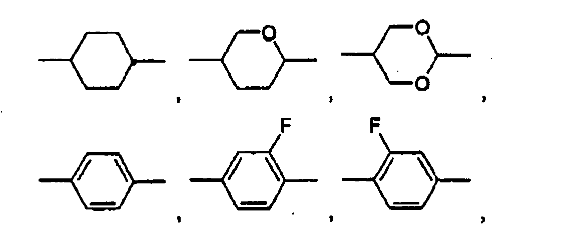 oder 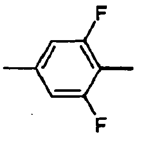 bedeuten,
   - L²¹, L²², L³¹ und L³²: unabhängig voneinander H oder F, vorzugsweise L²¹ und/oder L³¹ F bedeuten,
   - X² und X³: unabhängig voneinander Halogen, halogeniertes Alkyl oder Alkoxy mit 1 bis 3 C-Atomen oder halogeniertes Alkenyl oder Alkenyloxy mit 2 oder 3 C-Atomen, vor- zugsweise F, Cl, -OCF₃ oder -CF₃, ganz bevorzugt F, Cl oder -OCF₃ bedeuten,
   - Z³: -CH₂CH₂-, -CF₂CF₂-, -COO-, *trans-* -CH=CH-, *trans-* -CF=CF-, -CH₂O- oder eine Einfachbindung, vorzugs- weise -CH₂CH₂-, -COO-, *trans-* -CH=CH- oder eine Einfachbindung und ganz bevorzugt -COO-, *trans*- -CH=CH- oder eine Einfachbindung bedeutet und
   - m und n: unabhängig voneinander 0, 1 oder 3, bevorzugt 1 oder 3 und besonders bevorzugt 1,
   bedeuten, und
   im Fall, dass X² nicht F oder OCF₃ bedeutet, m auch 2 bedeuten kann und
   im Fall, dass X³ nicht F oder OCF₃ und/oder Z³ nicht eine Einfachbindung bedeutet, n auch 2 bedeuten kann und
- gegebenenfalls eine dielektrisch neutrale Komponente, Komponente C, enthaltend eine oder mehrere dielektrisch neutrale Verbindungen der Formel IV 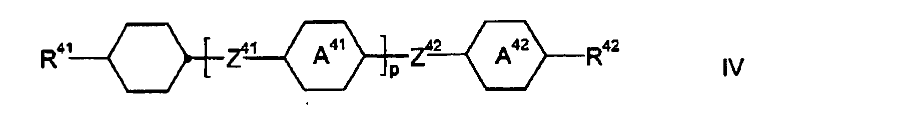
worin
- R⁴¹ und R⁴²: unabhängig voneinander die oben unter Formel II für R² angegebene Bedeutung besitzen, vorzugsweise R⁴¹ Alkyl und R⁴² Alkyl oder Alkoxy oder R⁴¹ Alkenyl und R⁴² Alkyl bedeutet, 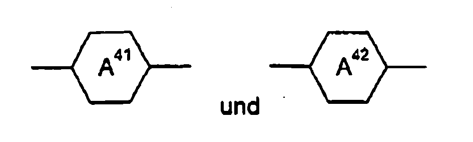
unabhängig voneinander und bei zweifachem Auftreten von 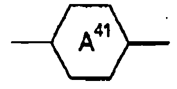 auch diese unabhängig voneinander 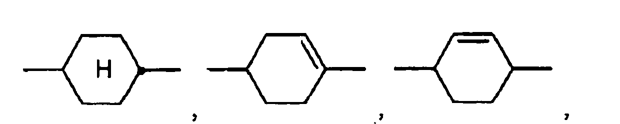 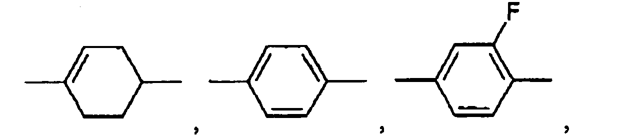 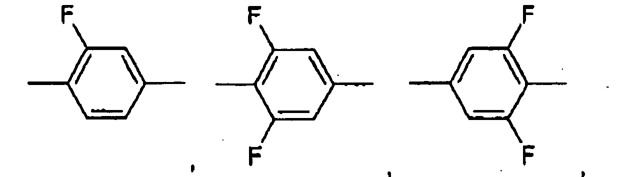 oder 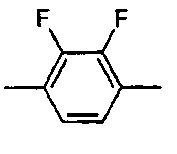 bedeuten,
vorzugsweise einer oder mehrere von 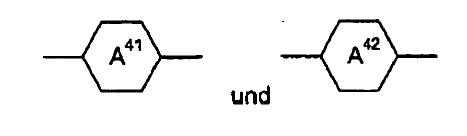 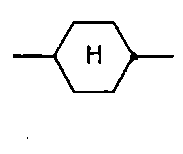 bedeutet bzw. bedeuten,
- Z⁴¹ und Z⁴²: unabhängig voneinander und bei zweifachem Auftreten von Z⁴¹ auch diese unabhängig voneinander -CH₂CH₂-, -COO-, *trans-* -CH=CH-, *trans-* -CF=CF-, -CH₂O-, -CF₂O-, -C≡C oder eine Einfachbindung bedeuten, vorzugsweise eines oder mehrere von ihnen eine Ein- fachbindung bedeutet/bedeuten und
- p: 0, 1 oder 2, vorzugsweise 0 oder 1 bedeutet.

Vorzugsweise enthält die Komponente A jeweils eine oder mehrere dielektrisch positive Verbindungen der Formel IA, IB und IC mit einer dielektrischen Anisotropie von mehr als 3 und worin die Parameter die jeweiligen oben unter Formel I angegebenen Bedeutungen besitzen, stärker bevorzugt besteht sie überwiegend, noch stärker bevorzugt besteht sie im Wesentlichen und ganz bevorzugt besteht sie vollständig daraus.

Bevorzugt enthalten die flüssigkristallinen Medien gemäß der vorliegenden Anmeldung insgesamt
1 bis 30 %, bevorzugt 2 bis 20 %, an Verbindungen der Formel IA,
1 bis 30 %, bevorzugt 2 bis 20 %, an Verbindungen der Formel IB und
1 bis 30 %, bevorzugt 2 bis 20 %, an Verbindungen der Formel IC.

Die einzelnen Verbindungen werden in einer Konzentration von 1 bis 20 %, bevorzugt von 1 bis 15 % eingesetzt. Diese Grenzen gelten insbesondere wenn jeweils zwei oder mehr homologe Verbindungen, also Verbindungen der gleichen Formel, eingesetzt werden. Wird von den Verbindungen einer Formel nur eine einzelne Substanz, also nur ein Homologes, eingesetzt so kann dessen Konzentration im Bereich von 2 bis 20 %, bevorzugt von 3 bis 4 %, liegen.

Vorzugsweise liegt die Konzentration der Komponente A im Medium im Bereich von 10 % bis 50 %, stärker bevorzugt von 12 % bis 40 %, noch stärker bevorzugt von 15 % bis 35 % und ganz bevorzugt von 20 %, bevorzugt von 23 %, bis 30 %. Wird eine einzelne homologe Verbindung der jeweiligen Formeln IA, IB und IC im Medium verwendet, so ist deren Konzentration bevorzugt im Bereich von 1 % bis 20 %, werden zwei oder mehr homologe Verbindungen der jeweiligen Formeln IA, IB und/ oder IC im Medium verwendet, so werden bevorzugt 2 % bis 15 % der einzelnen Homologen verwendet.

In einer bevorzugten Ausführungsform der vorliegenden Erfindung enthält die Komponente A jeweils eine oder mehrere dielektrisch positive Verbindungen mit einer dielektrischen Anisotropie von mehr als 3, ausgewählt aus der Gruppe der Verbindungen der Formeln IA-1 und IA-2, ausgewählt aus der Gruppe der Verbindungen der Formeln IB-1 und IB-2 und ausgewählt aus der Gruppe der Verbindungen der Formeln IC-1 und IC-2, bevorzugt der Verbindungen der Formeln IA-1, IB-2 und IC-2, stärker bevorzugt besteht sie überwiegend, noch stärker bevorzugt besteht sie im Wesentlichen und ganz bevorzugt besteht sie vollständig daraus:

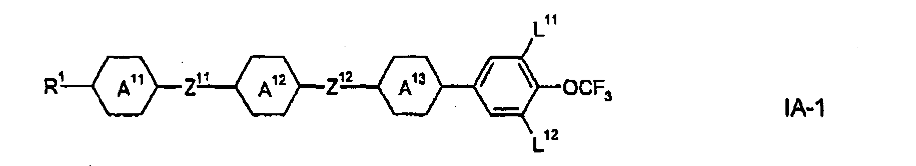

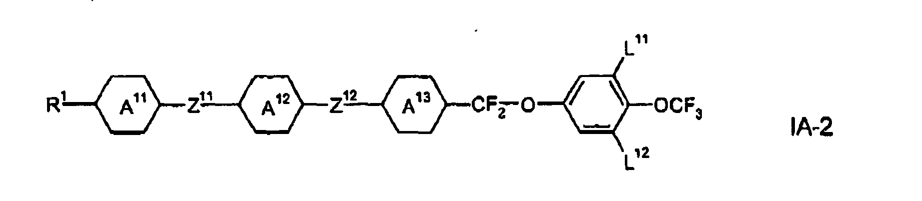

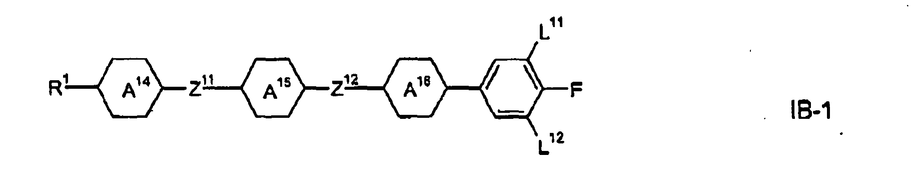

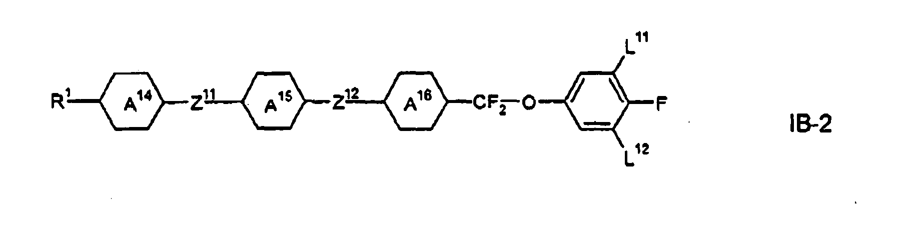

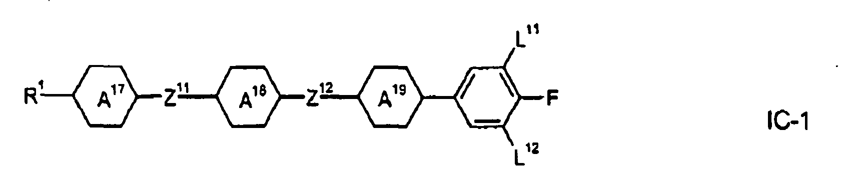

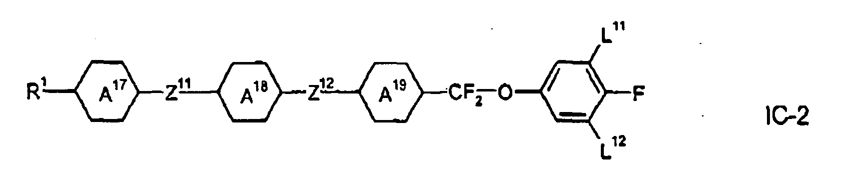

In einer bevorzugten Ausführungsform der vorliegenden Erfindung enthält die Komponente A eine oder mehrere dielektrisch positive Verbindungen mit einer dielektrischen Anisotropie von mehr als 3, ausgewählt aus der Gruppe der Verbindungen der Formeln IA-1a bis IA-1f, bevorzugt ausgewählt aus der Gruppe der Verbindungen der Formeln IA-1a und IA-1 b, stärker bevorzugt besteht sie überwiegend, noch stärker bevorzugt besteht sie im Wesentlichen und ganz bevorzugt besteht sie vollständig daraus: 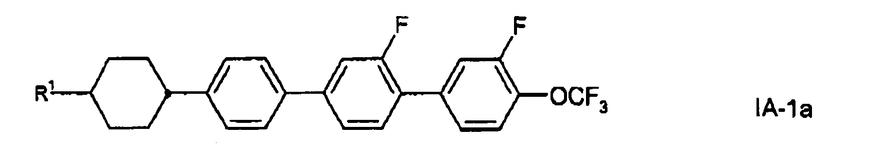 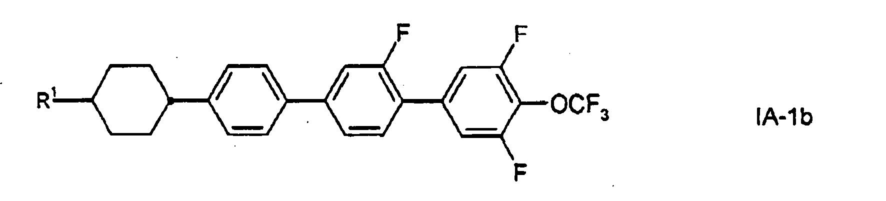 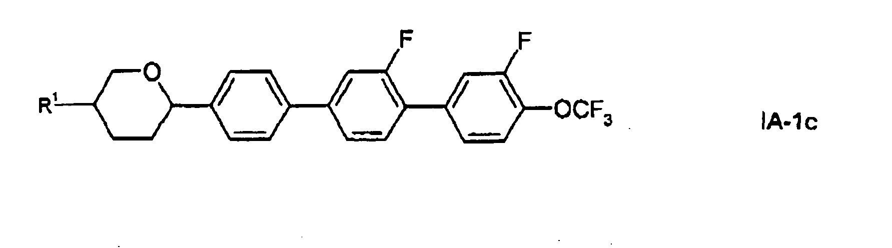 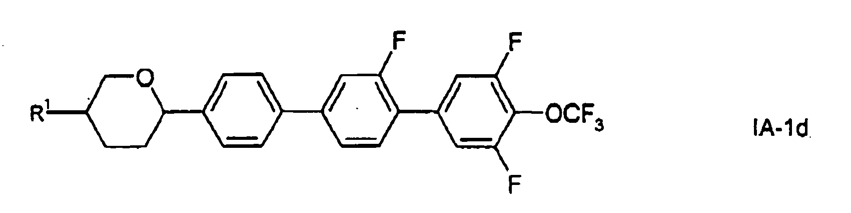 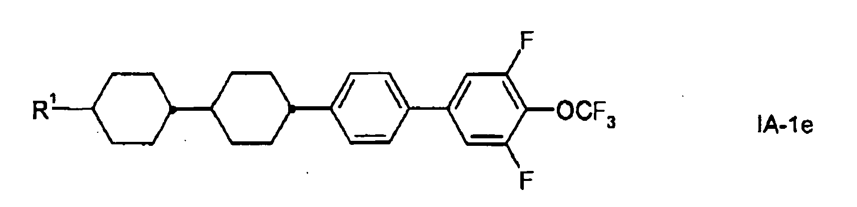 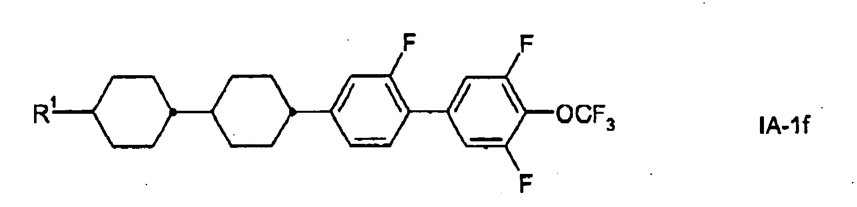 worin R¹ die jeweilige oben unter Formel I angegebene Bedeutung besitzt.

In einer bevorzugten Ausführungsform der vorliegenden Erfindung enthält die Komponente A eine oder mehrere dielektrisch positive Verbindungen mit einer dielektrischen Anisotropie von mehr als 3, ausgewählt aus der Gruppe der Verbindungen der Formeln IA-2a bis IA-2d, bevorzugt ausgewählt aus der Gruppe der Verbindungen der Formeln IA-2a bis IA-2d, stärker bevorzugt besteht sie überwiegend, noch stärker bevorzugt besteht sie im Wesentlichen und ganz bevorzugt besteht sie vollständig daraus: 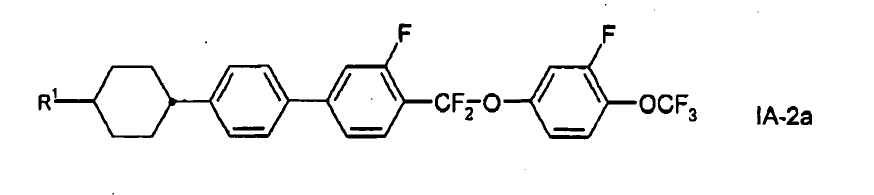 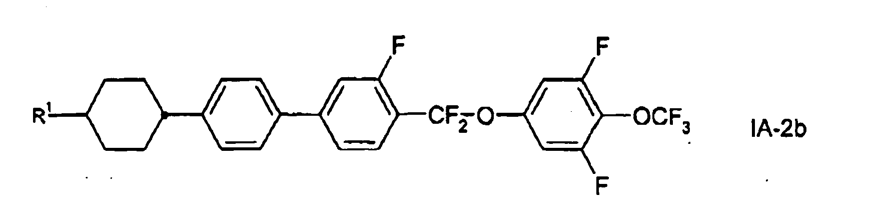 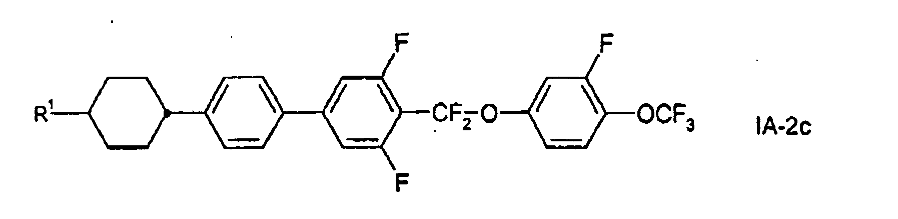 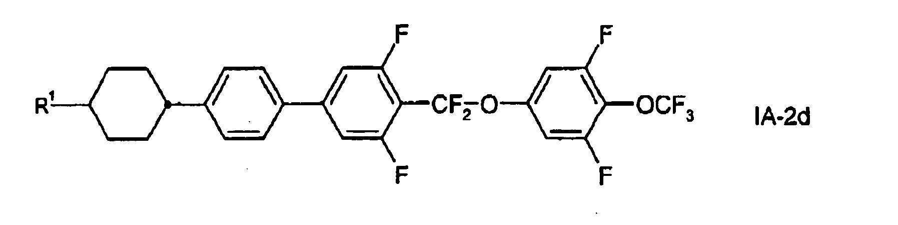 worin R¹ die jeweilige oben unter Formel I angegebene Bedeutung besitzt.

In einer bevorzugten Ausführungsform der vorliegenden Erfindung enthält die Komponente A eine oder mehrere dielektrisch positive Verbindungen mit einer dielektrischen Anisotropie von mehr als 3, ausgewählt aus der Gruppe der Verbindungen der Formeln IB-1a bis IB-1c, bevorzugt ausgewählt aus der Gruppe der Verbindungen der Formeln IB-1a und IB-1b, stärker bevorzugt besteht sie überwiegend, noch stärker bevorzugt besteht sie im Wesentlichen und ganz bevorzugt besteht sie vollständig daraus: 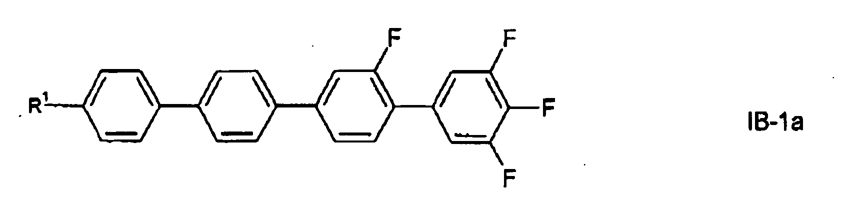 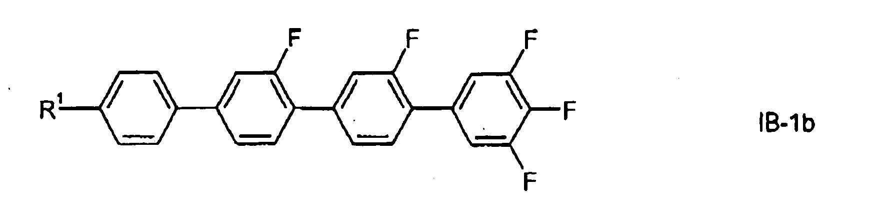 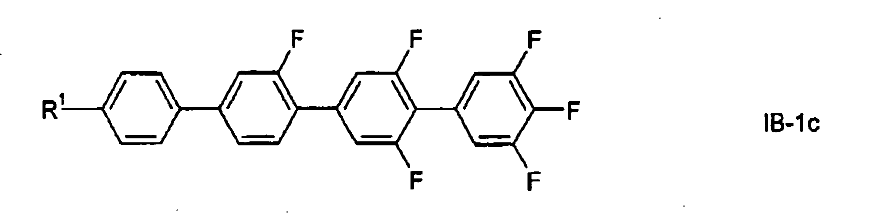 worin R¹ die jeweilige oben unter Formel I angegebene Bedeutung besitzt.

In einer bevorzugten Ausführungsform der vorliegenden Erfindung enthält die Komponente A eine oder mehrere dielektrisch positive Verbindungen mit einer dielektrischen Anisotropie von mehr als 3, ausgewählt aus der Gruppe der Verbindungen der Formeln IB-2a bis IB-2c, bevorzugt ausgewählt aus der Gruppe der Verbindungen der Formeln IB-2a und IB-1c, stärker bevorzugt besteht sie überwiegend, noch stärker bevorzugt besteht sie im Wesentlichen und ganz bevorzugt besteht sie vollständig daraus: 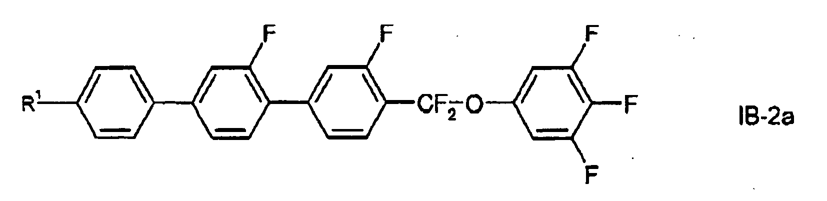 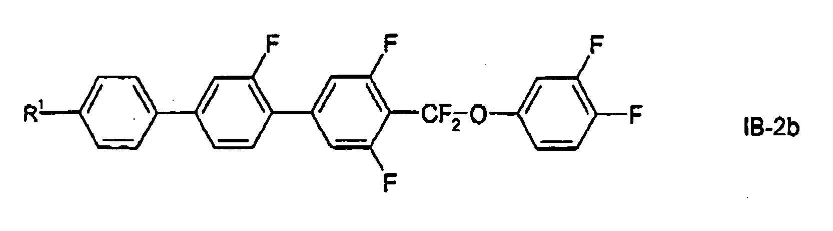 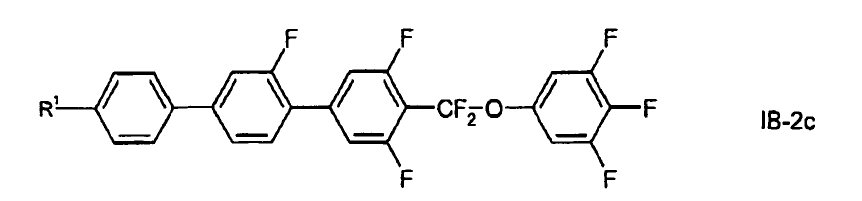 worin R¹ die jeweilige oben unter Formel I angegebene Bedeutung besitzt.

In einer bevorzugten Ausführungsform der vorliegenden Erfindung enthält die Komponente A eine oder mehrere dielektrisch positive Verbindungen mit einer dielektrischen Anisotropie von mehr als 3, ausgewählt aus der Gruppe der Verbindungen der Formeln IC-1a bis IC-1c, bevorzugt der Formel IC-1a und IC-1c, bevorzugt der Formel IC-1c, stärker bevorzugt besteht sie überwiegend, noch stärker bevorzugt besteht sie im Wesentlichen und ganz bevorzugt besteht sie vollständig daraus: 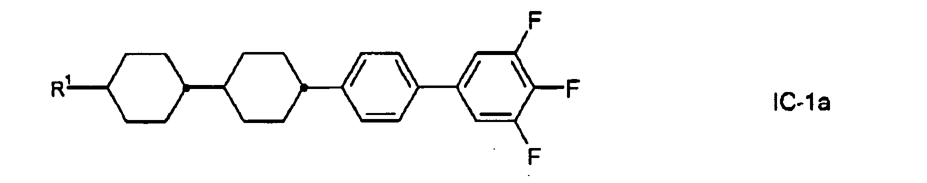 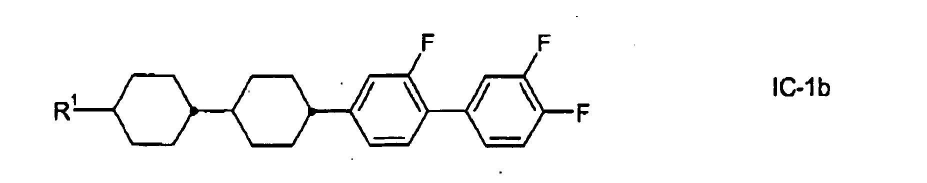 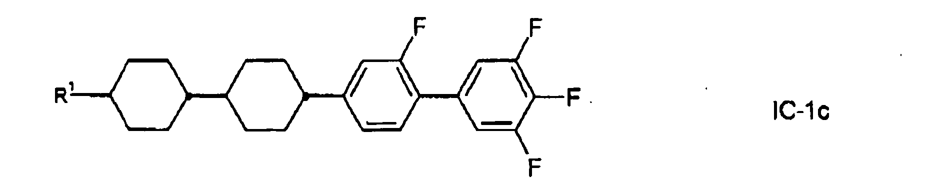 worin R¹ die jeweilige oben unter Formel I angegebene Bedeutung besitzt.

In einer bevorzugten Ausführungsform der vorliegenden Erfindung enthält die Komponente A eine oder mehrere dielektrisch positive Verbindungen mit einer dielektrischen Anisotropie von mehr als 3, ausgewählt aus der Gruppe der Verbindungen der Formeln IC-2a bis IC-2f, bevorzugt ausgewählt aus der Gruppe der Verbindungen der Formeln IC-2a, IC-2b, IC-2d, IC-2e und IC-2f, stärker bevorzugt ausgewählt aus der Gruppe der Verbindungen der Formeln IC-2b, IC-2e und IC-2f, stärker bevorzugt besteht sie überwiegend, noch stärker bevorzugt besteht sie im Wesentlichen und ganz bevorzugt besteht sie vollständig daraus: 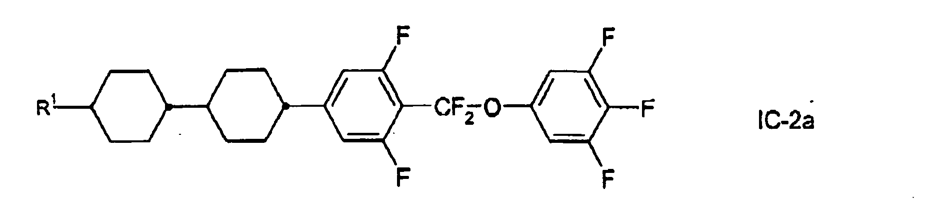 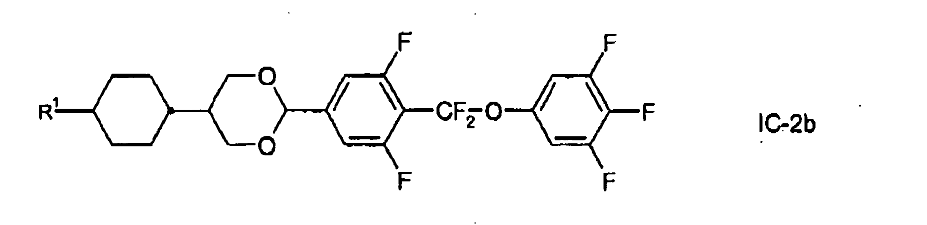 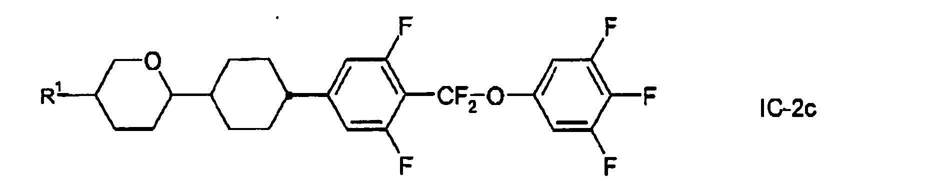 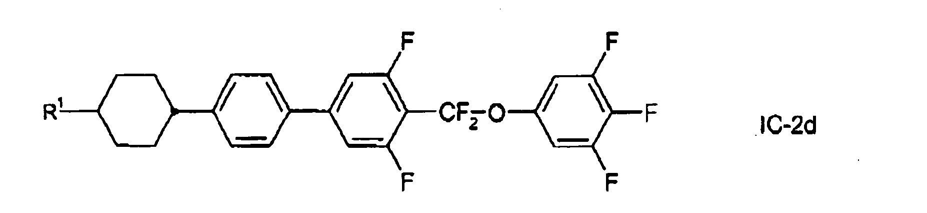 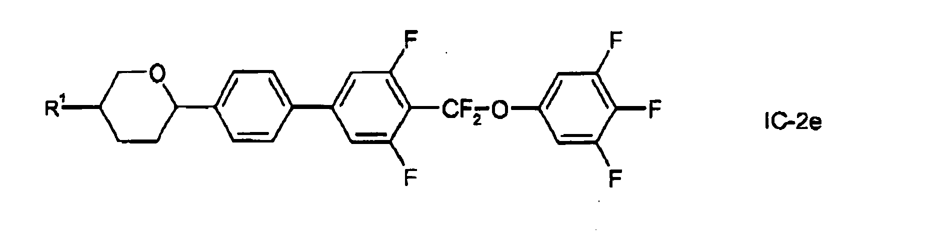 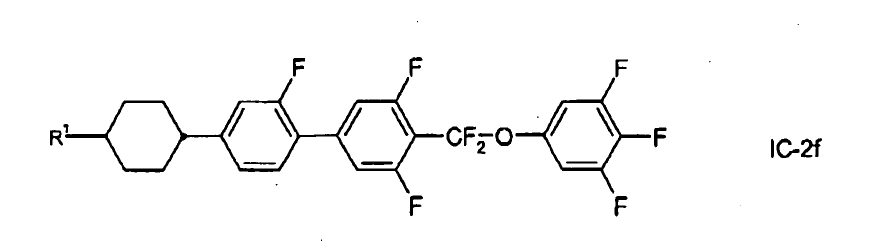 worin R¹ die jeweilige oben unter Formel I angegebene Bedeutung besitzt.

Vorzugsweise enthalten die Medien gemäß der vorliegenden Erfindung eine zweite dielektrisch positive Komponente, Komponente B. Vorzugsweise enthält diese zweite dielektrisch Komponente, Komponente B, dielektrisch positive Verbindungen mit einer dielektrischen Anisotropie von mehr als 3, stärker bevorzugt besteht sie überwiegend, noch stärker bevorzugt besteht sie im Wesentlichen und ganz bevorzugt besteht sie vollständig daraus.

Vorzugsweise enthält diese Komponente, Komponente B, eine oder mehrere dielektrisch positive Verbindungen mit einer dielektrischen Anisotropie von mehr als 3, ausgewählt aus der Gruppe der Formeln II und III, stärker bevorzugt besteht sie überwiegend, noch stärker bevorzugt besteht sie im Wesentlichen und ganz bevorzugt besteht sie vollständig daraus.

In einer bevorzugten Ausführungsform der vorliegenden Erfindung enthält die Komponente B eine oder mehrere dielektrisch positive Verbindungen mit einer dielektrischen Anisotropie von mehr als 3, ausgewählt aus der Gruppe der Verbindungen der Formeln II-1 bis II-4, bevorzugt der Formeln II-1 und/oder bis II-2 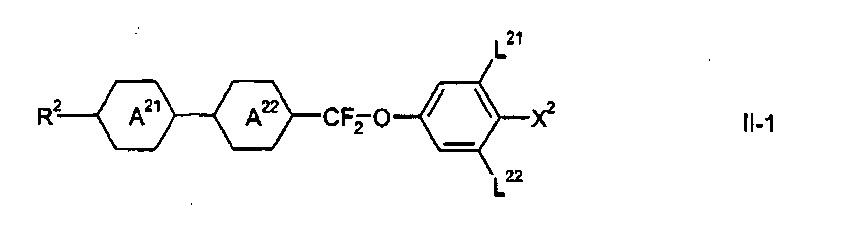 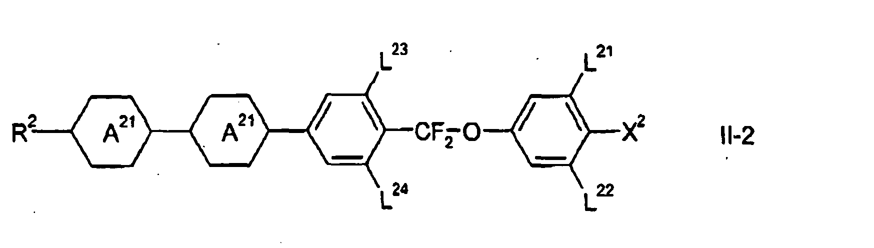 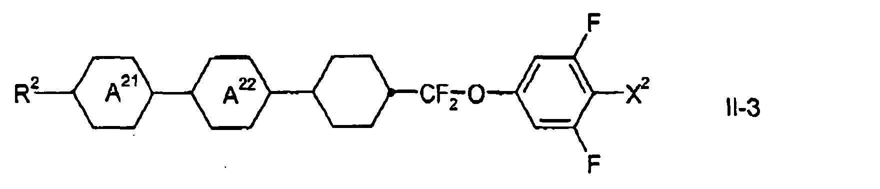 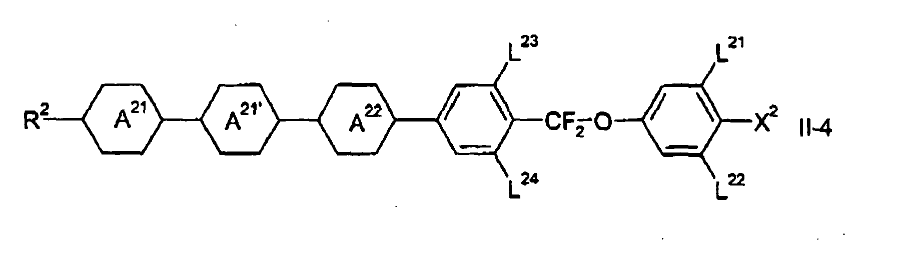 worin die Parameter die jeweiligen oben unter Formel 11 angegebenen Bedeutungen besitzen und L²³ und L²⁴ unabhängig voneinander H oder F, bevorzugt L²³ F, bedeutet und 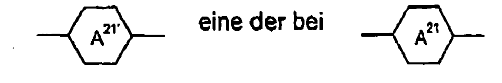 gegebenen Bedeutungen hat und bei Formeln II-1 und 11-4 X² bevorzugt F oder OCF₃, besonders bevorzugt F, und bei Formel II-3 vorzugsweise 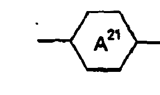 und 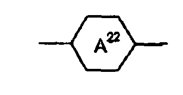 unabhängig voneinander 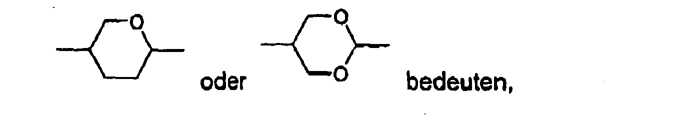 und/oder ausgewählt aus der Gruppe der Verbindungen der Formeln III-1 und III-2 : 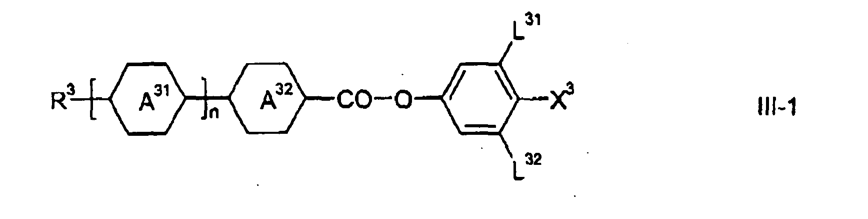 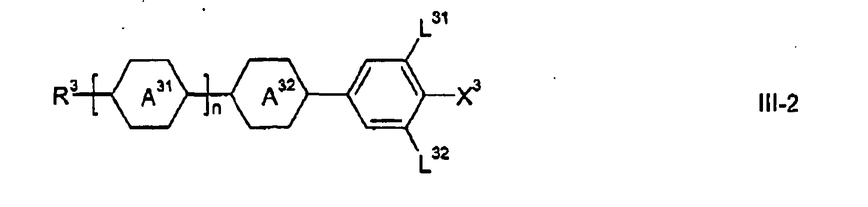 worin die Parameter die unter Formel III gegeben Bedeutung haben
und die Medien gemäß der vorliegenden Erfindung alternativ oder zusätzlich zu den Verbindungen der Formeln III-1 und/oder III-2 eine oder mehrere Verbindungen der Formel III-3 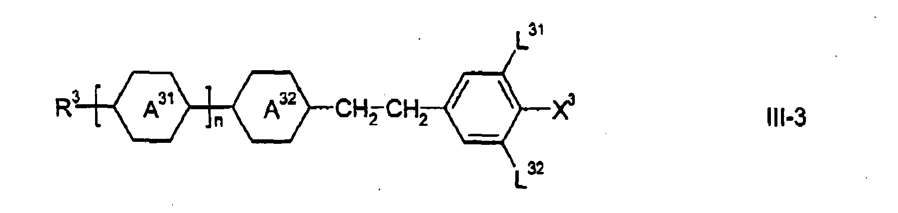 worin die Parameter die jeweiligen oben angegebenen Bedeutungen besitzen und die Parameter L³³ und L³⁴ unabhängig voneinander und von den anderen Parametern H oder F bedeuten enthalten können.

Bevorzugt besteht die Komponente B überwiegend, noch stärker bevorzugt besteht sie im Wesentlichen und ganz bevorzugt besteht sie vollständig aus den genannten Verbindungen.

Vorzugsweise enthält die Komponente B Verbindungen, die ausgewählt sind aus der Gruppe der Verbindungen der Formeln II-1 bis II-4, worin L²¹ und L²² und/oder L²³ und L²⁴ beide F bedeuten.

In einer bevorzugten Ausführungsform enthält die Komponente B Verbindungen, die ausgewählt sind aus der Gruppe der Verbindungen der Formeln II-2 und II-3, worin L²¹, L²², L²³ und L²⁴ alle F bedeuten.

Vorzugsweise enthält die Komponente B eine oder mehrere Verbindungen der Formel II-1. Vorzugsweise sind die Verbindungen der Formel II-1 ausgewählt aus der Gruppe der Verbindungen der Formeln II-1a bis II-1e 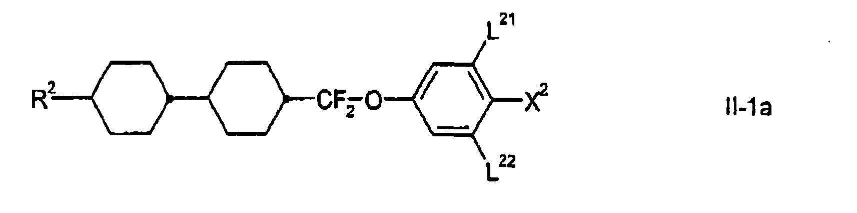 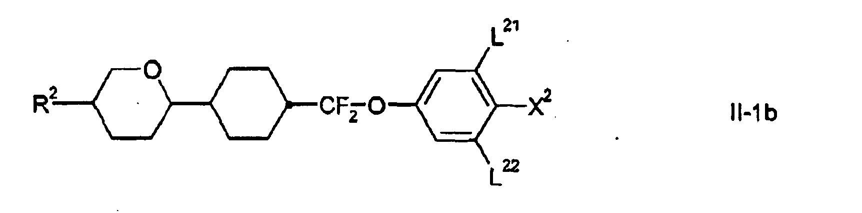 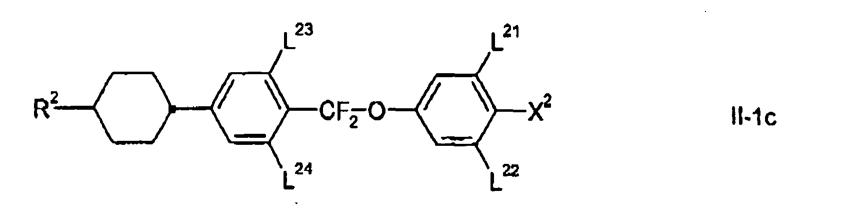 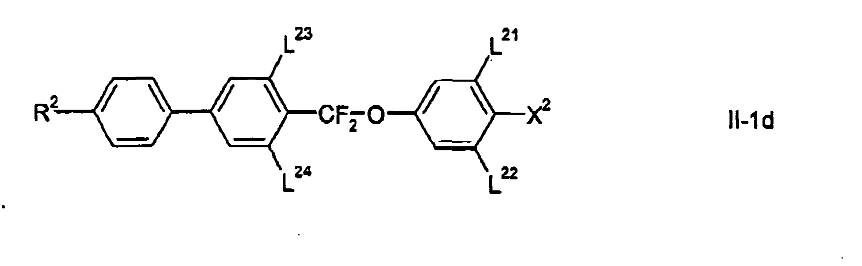 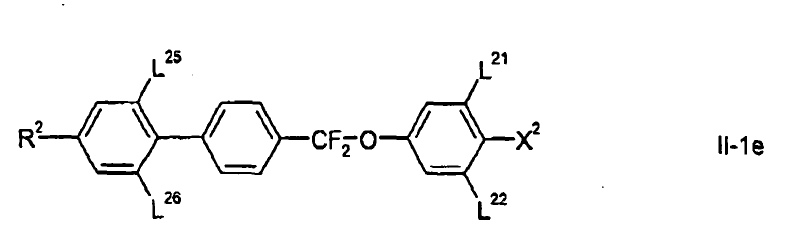 worin die Parameter die jeweiligen oben angegebenen Bedeutungen besitzen und L²⁵ und L²⁶ unabhängig voneinander und von den anderen Parametern H oder F bedeuten und vorzugsweise
in den Formeln II-1a und II-1b
L²¹ und L²² beide F bedeuten,
in den Formeln II-1c und II-1d
L²¹ und L²² beide F und/oder L²³ und L²⁴ beide F bedeuten und
in Formel II-1e
L²¹, L²² und L²³ F bedeuten.

Speziell bevorzugte Verbindungen der Formel II-1 sind 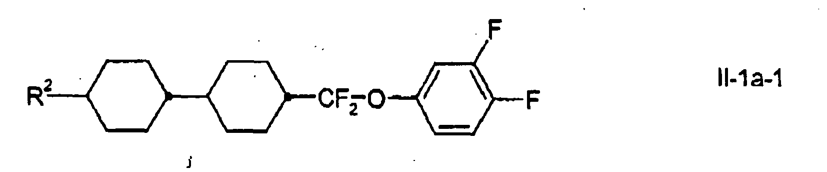 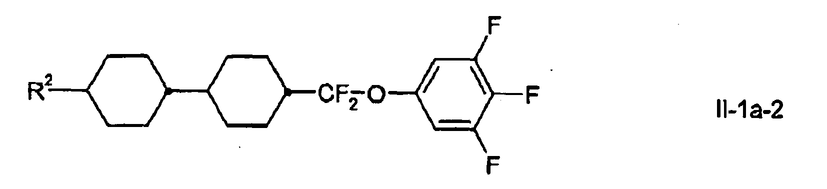 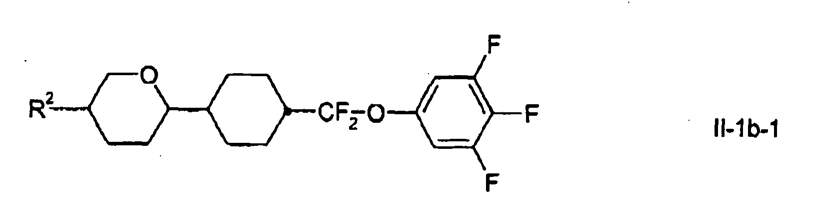 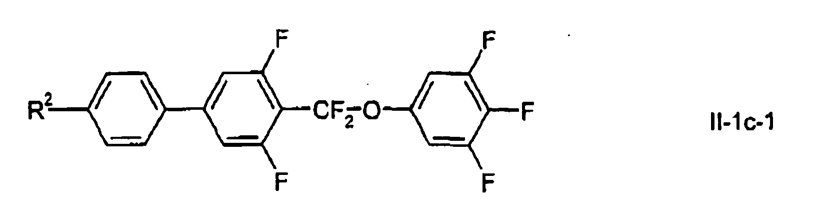 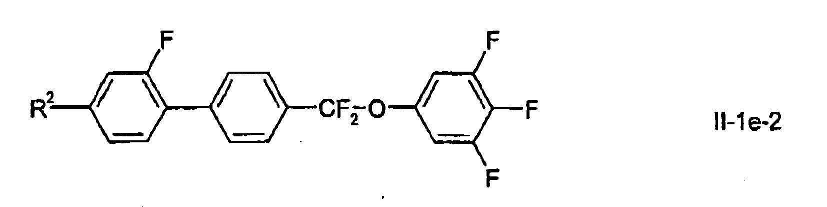 worin R² die oben angegebene Bedeutung besitzt.

Vorzugsweise enthält die Komponente B eine oder mehrere Verbindungen der Formel II-2, die bevorzugt ausgewählt sind aus der Gruppe der Verbindungen der Formeln II-2a bis II-2j 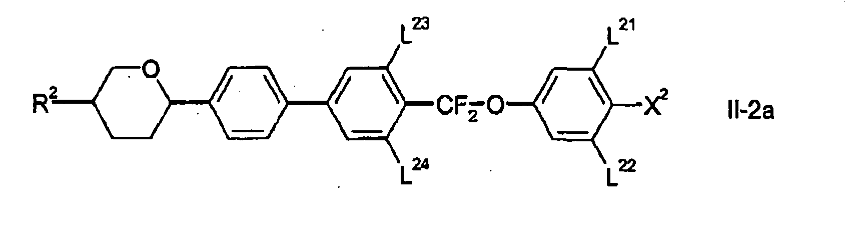 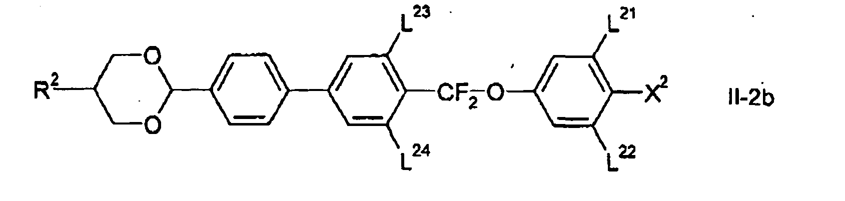 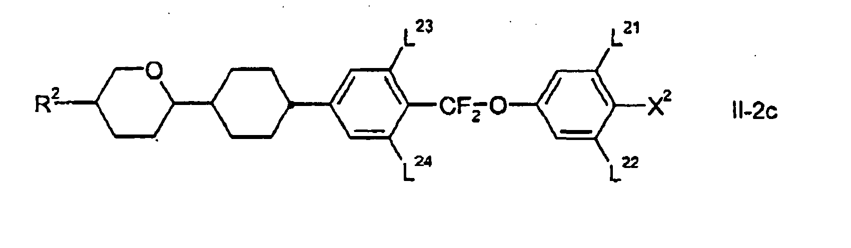 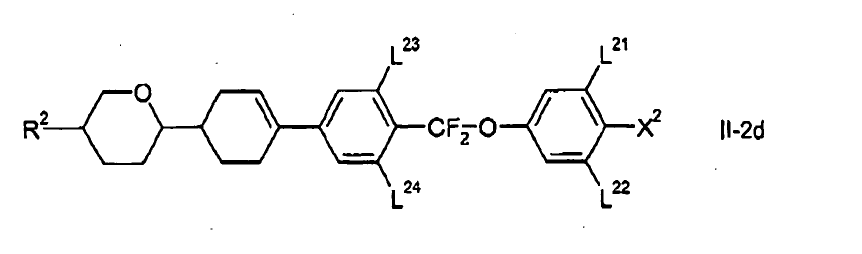 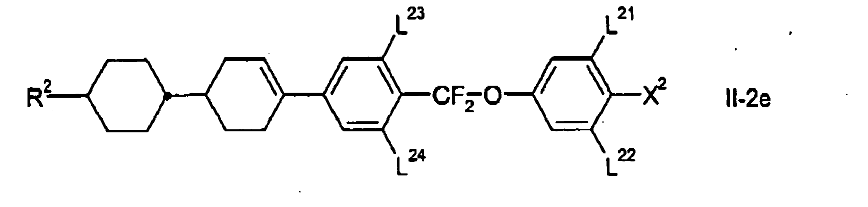 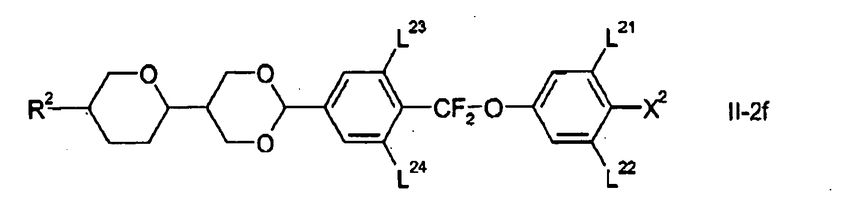 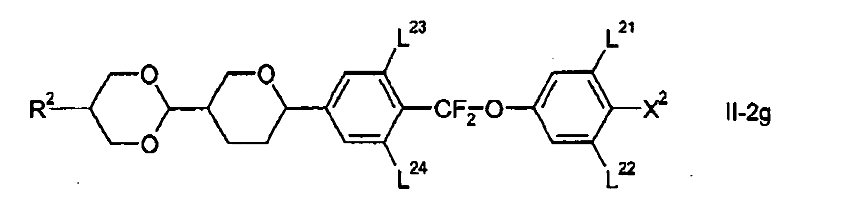 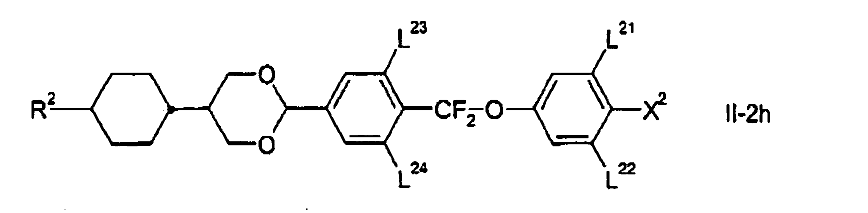 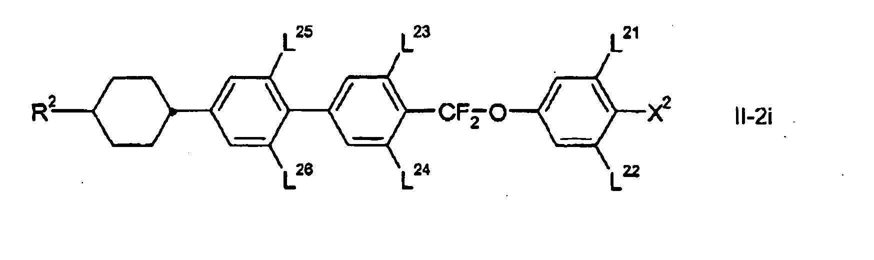 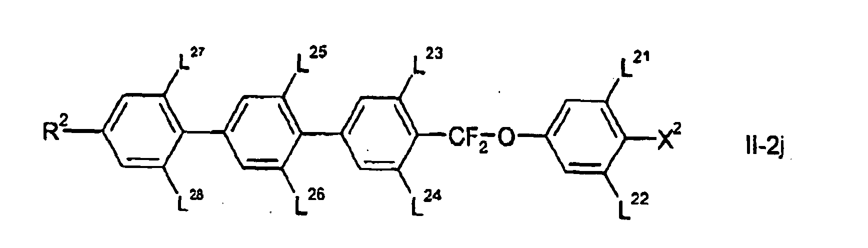 worin die Parameter die jeweiligen oben angegebenen Bedeutungen besitzen und L²⁵ bis L²⁸ unabhängig voneinander H oder F, bevorzugt L²⁷ und L²⁸ beide H, besonders bevorzugt L²⁶ H bedeuten.

Vorzugsweise enthält die Komponente B Verbindungen, die ausgewählt sind aus der Gruppe der Verbindungen der Formeln II-1a bis II-1e, worin L²¹ und L²² beide F und/oder L²³ und L²⁴ beide F bedeuten.

In einer bevorzugten Ausführungsform enthält die Komponente B Verbindungen, die ausgewählt sind aus der Gruppe der Verbindungen der Formeln II-1a bis II-1i, worin L²¹, L²², L²³ und L²⁴ alle F bedeuten.

Speziell bevorzugte Verbindungen der Formel II-2 sind die Verbindungen der folgenden Formeln 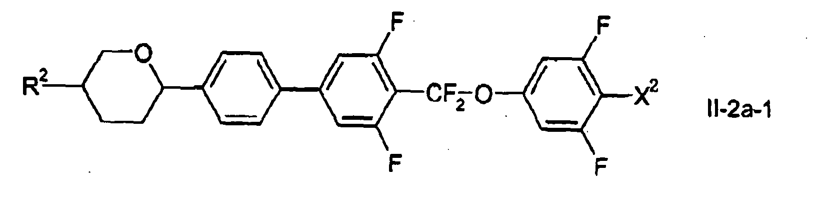 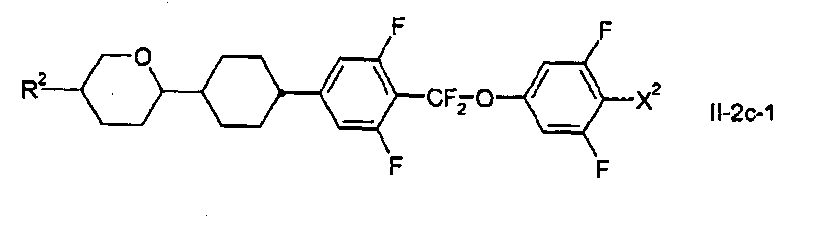 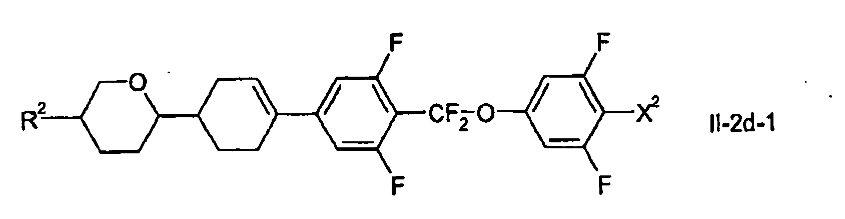 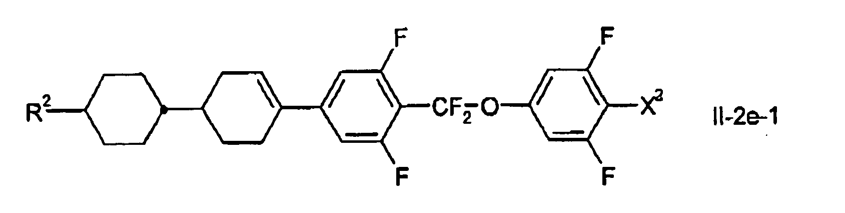 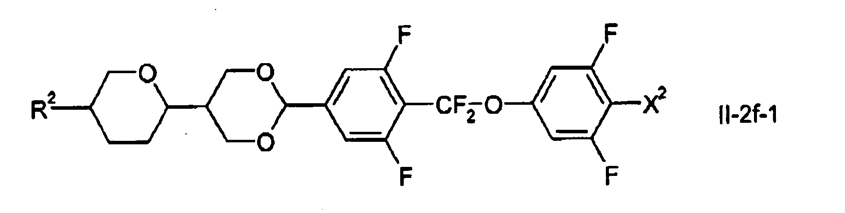 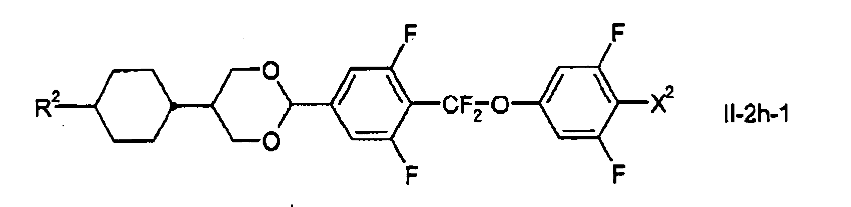 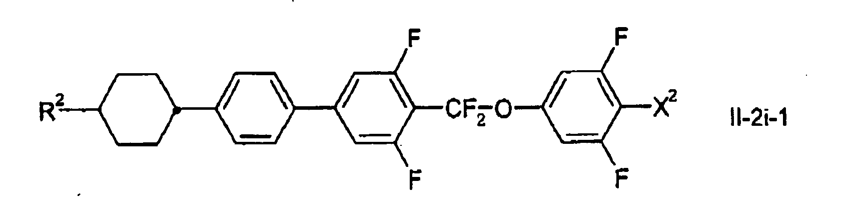 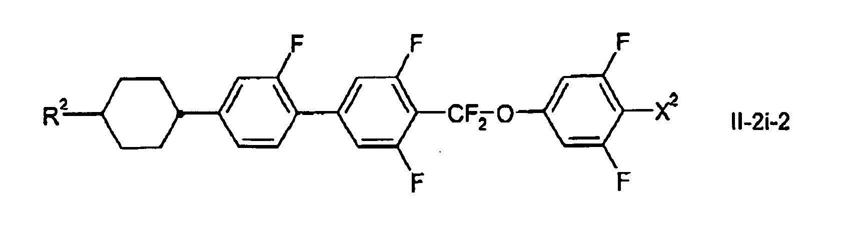 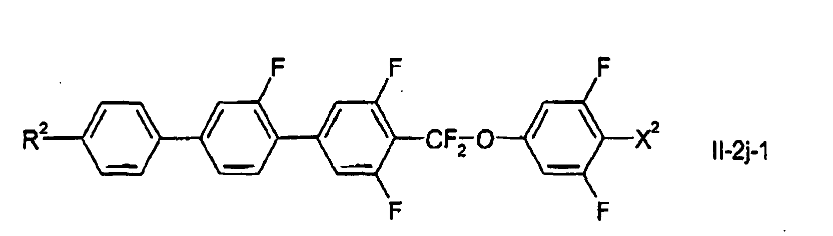 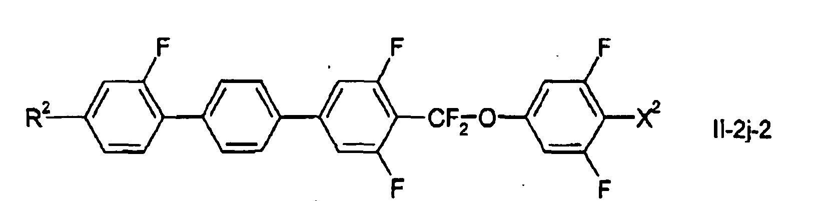 worin R² und X² die oben angegebene Bedeutungen besitzen und X² bevorzugt F bedeutet.

Vorzugsweise enthält die Komponente B eine oder mehrere Verbindungen der Formel II-2. Vorzugsweise sind diese Verbindungen der Formel II-3 ausgewählt aus der Gruppe der Verbindungen der Formeln II-3a bis II-3c 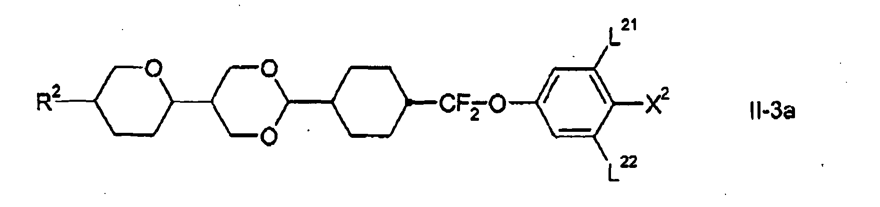 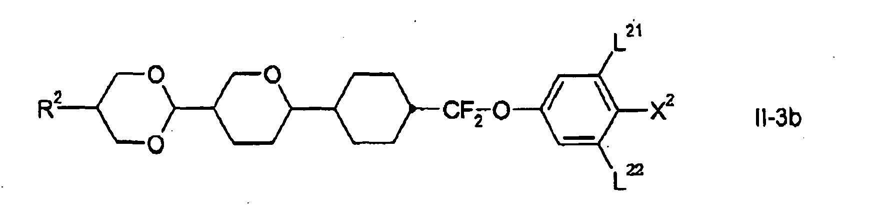 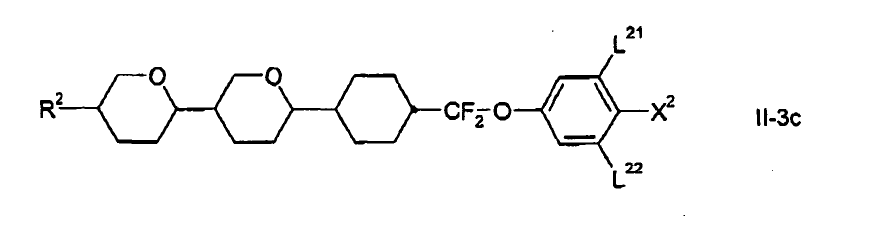 worin die Parameter die jeweiligen oben angegebenen Bedeutungen besitzen und L²¹ und L²² vorzugsweise beide F bedeuten.

In einer bevorzugten Ausführungsform enthält die Komponente B eine oder mehrere Verbindungen der Forme III-4, bevorzugt der Formel III-4a 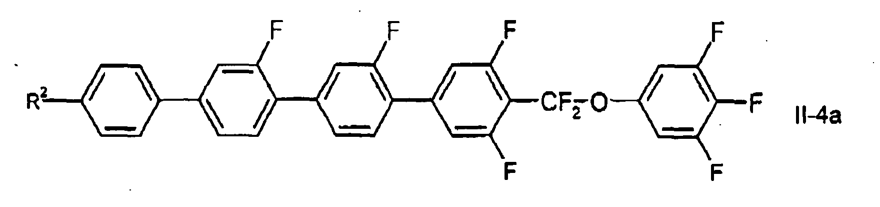 worin die Parameter die oben gegebene Bedeutung haben und X² bevorzugt F oder OCF₃, besonders bevorzugt F, bedeutet.

Vorzugsweise enthält die Komponente B eine oder mehrere Verbindungen der Formel III-1 Vorzugsweise sind die Verbindungen der Formel III-1 ausgewählt aus der Gruppe der Verbindungen der Formeln III-1 a und III-1b 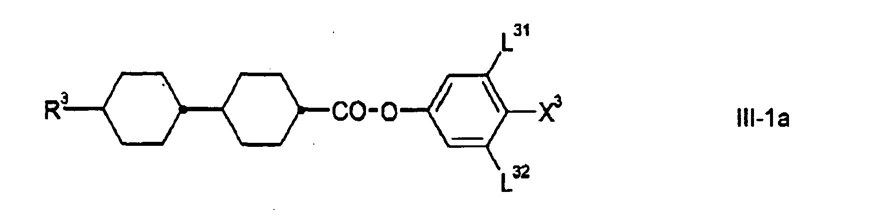 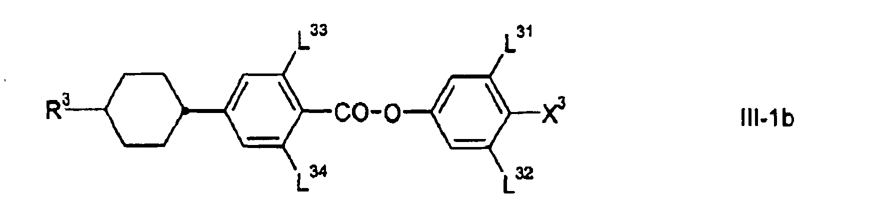 worin die Parameter die jeweiligen oben angegebenen Bedeutungen besitzen und die Parameter L³³ und L³⁴ unabhängig voneinander und von den anderen Parametern H oder F bedeuten.

Vorzugsweise enthält die Komponente B eine oder mehrere Verbindungen der Formel III-1a, die vorzugsweise aus der Gruppe der Verbindungen der Formeln III-1a-1 bis III-1a-6 ausgewählt sind 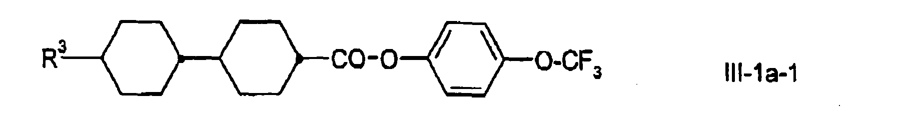 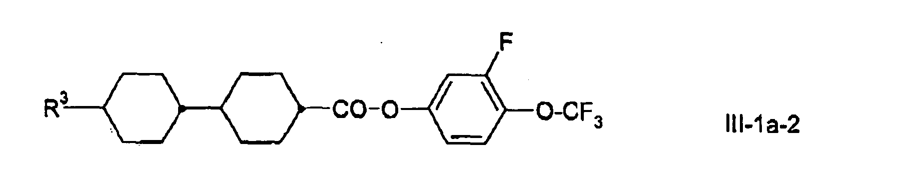 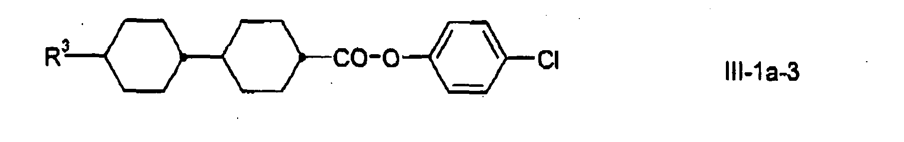 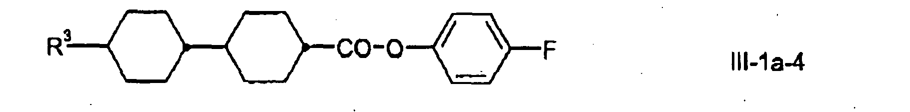 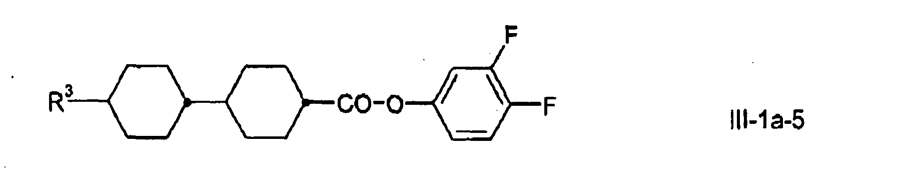 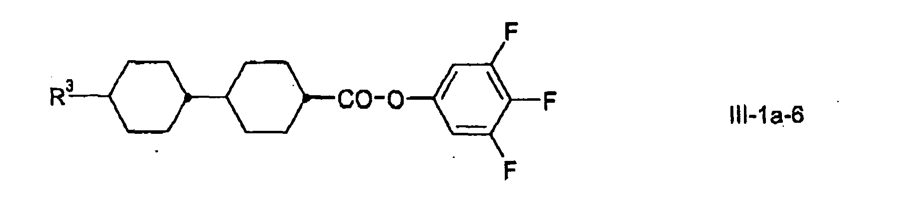 worin R³ die oben angegebene Bedeutung besitzt.

Vorzugsweise enthält die Komponente B eine oder mehrere Verbindungen der Formel III-1b, die vorzugsweise ausgewählt sind aus der Gruppe der Verbindungen der Formeln III-1b-1 bis III-1b-4, vorzugsweise III-1b4 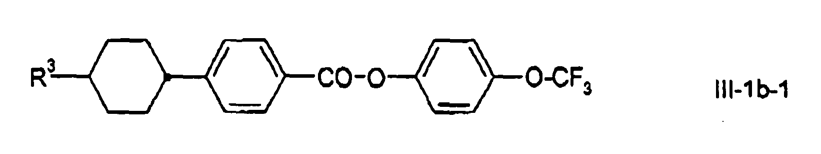 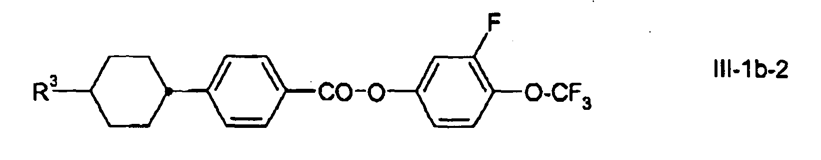 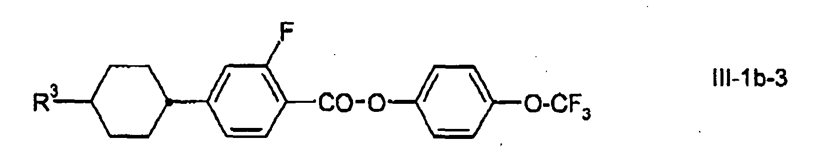 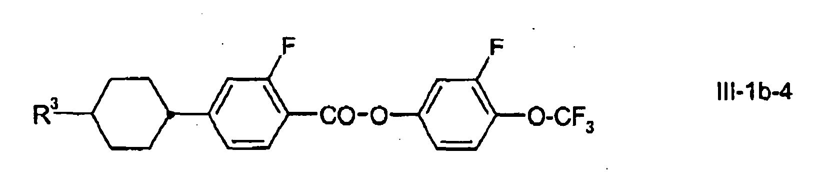 worin R³ die oben angegebene Bedeutung besitzt.

Vorzugsweise enthält die Komponente B eine oder mehrere Verbindungen der Formel III-2, Vorzugsweise sind die Verbindungen der Formel III-2 ausgewählt aus der Gruppe der Verbindungen der Formeln III-2a bis III-2j 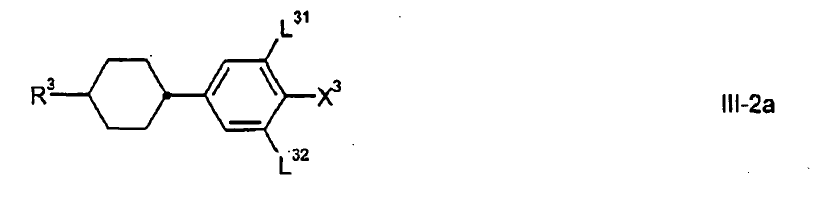 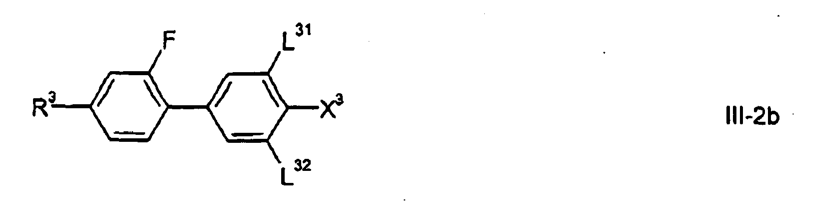 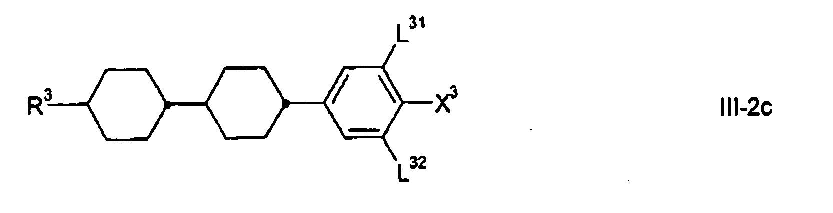 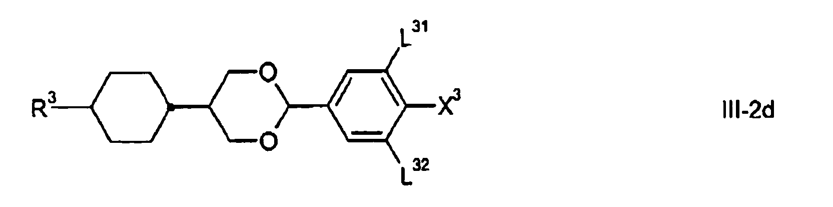 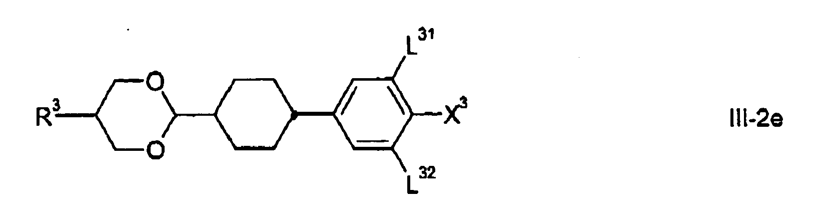 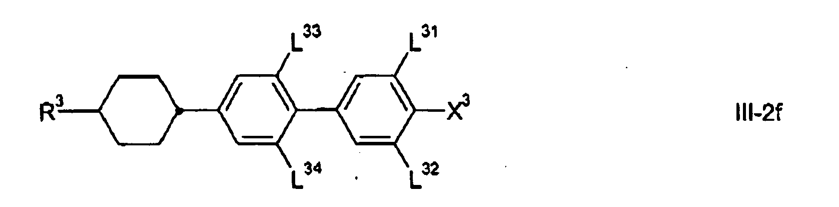 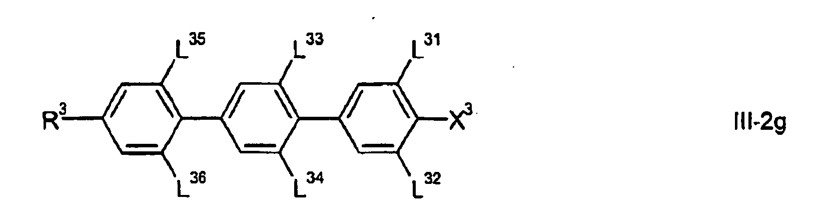 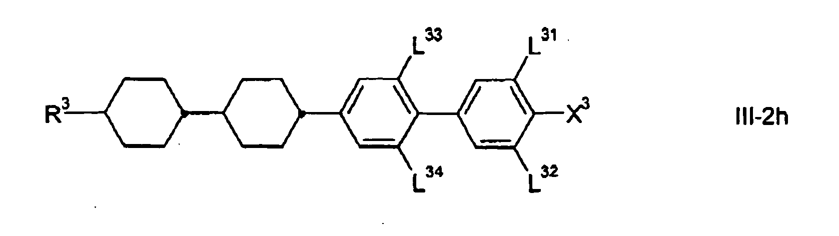 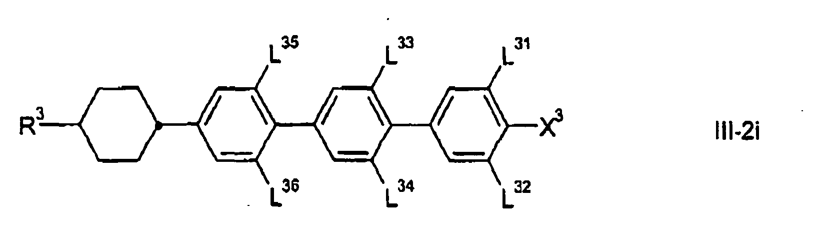 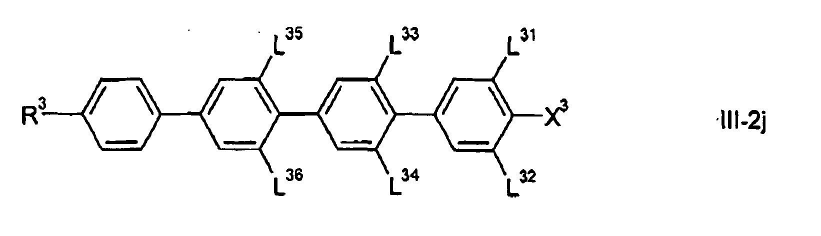 worin die Parameter die oben gegebene Bedeutung haben und bevorzugt worin die Parameter die jeweiligen oben angegebenen Bedeutungen besitzen und die Parameter L³⁵ und L³⁶ unabhängig voneinander und von den anderen Parametern H oder F bedeuten.

Vorzugsweise enthält die Komponente B eine oder mehrere Verbindungen der Formel II-2a, die vorzugsweise ausgewählt sind aus der Gruppe der Verbindungen der Formeln II-2a-1 bis II-2a-5 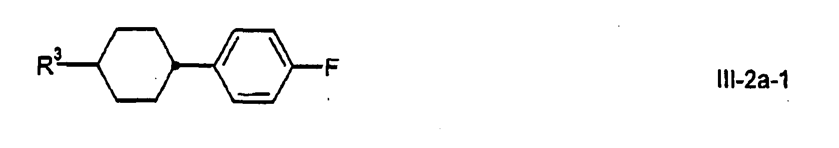 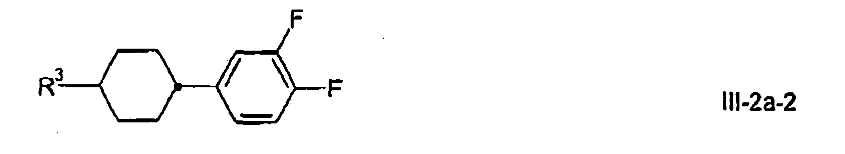 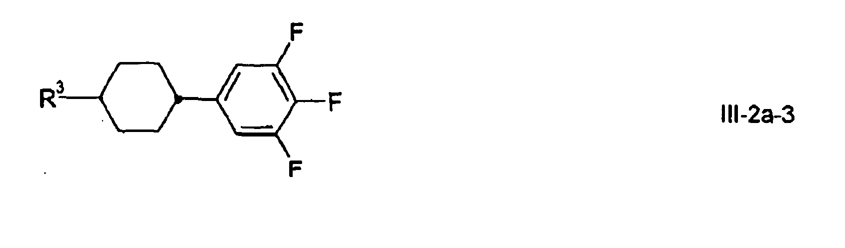 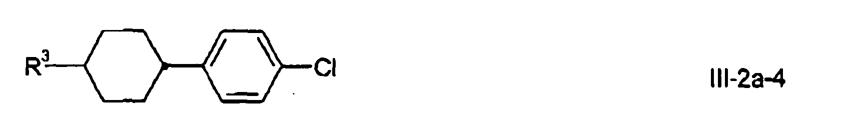 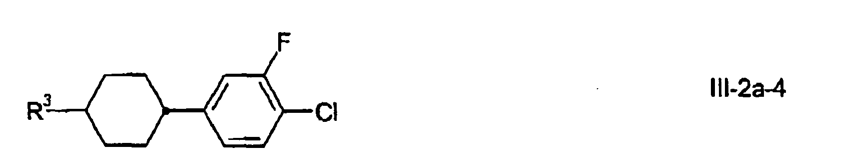 worin R³ die oben angegebene Bedeutung besitzt.

Vorzugsweise enthält die Komponente B eine oder mehrere Verbindungen der Formel III-2b, die vorzugsweise ausgewählt sind aus der Gruppe der Verbindungen der Formeln III-2b-1 und III-2b-2, vorzugsweise III-2b-2 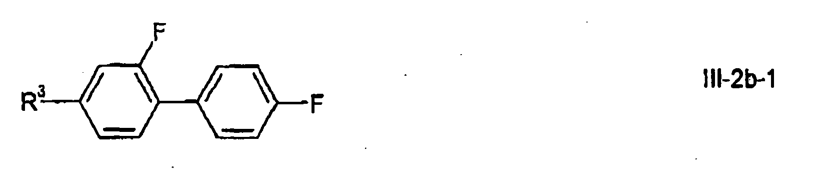 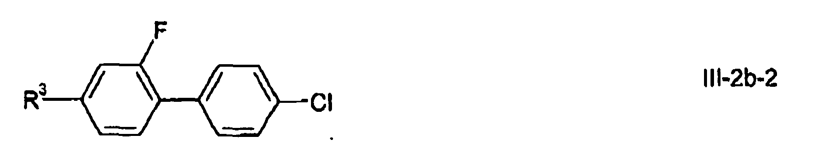 worin R³ die oben angegebene Bedeutung besitzt.

Vorzugsweise enthält die Komponente B eine oder mehrere Verbindungen der Formel III-2c, die vorzugsweise ausgewählt sind aus der Gruppe der Verbindungen der Formeln III-2c-1 bis III-2c-5 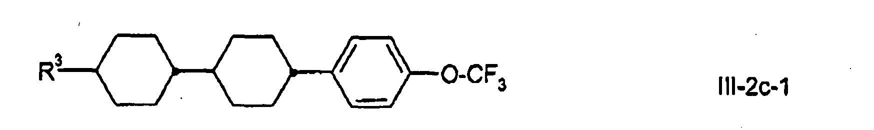 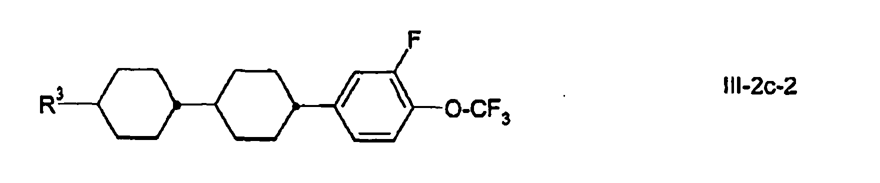 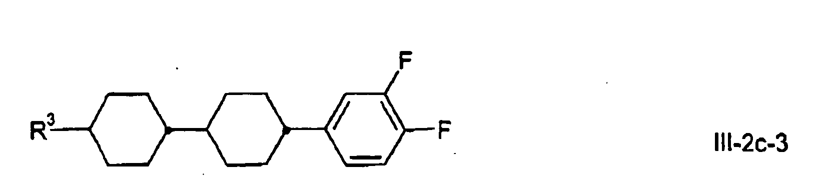 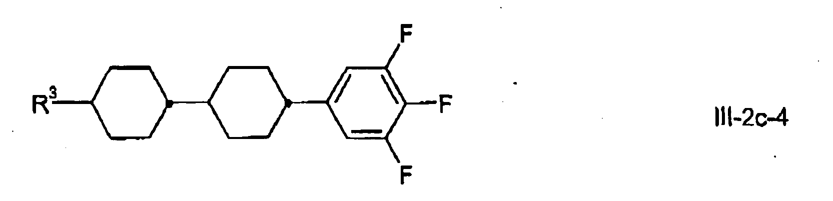 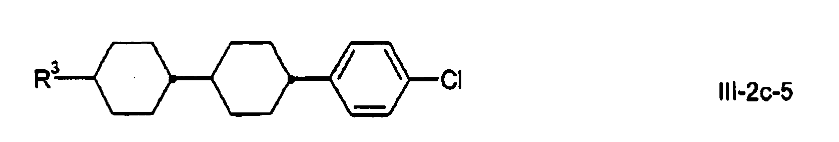 worin R³ die oben angegebene Bedeutung besitzt.

Vorzugsweise enthält die Komponente B eine oder mehrere Verbindungen ausgewählt aus der Gruppe der Verbindungen der Formeln III-2d und III-2e, die vorzugsweise ausgewählt sind aus der Gruppe der Verbindungen der Formeln III-2d-1 und III-2e-1 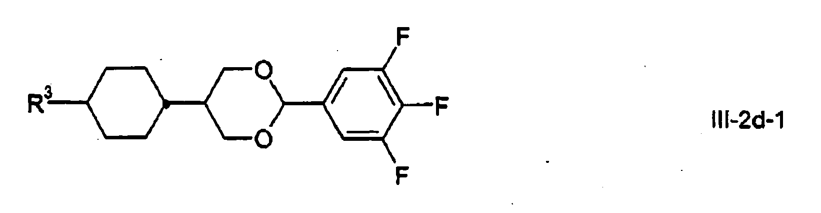 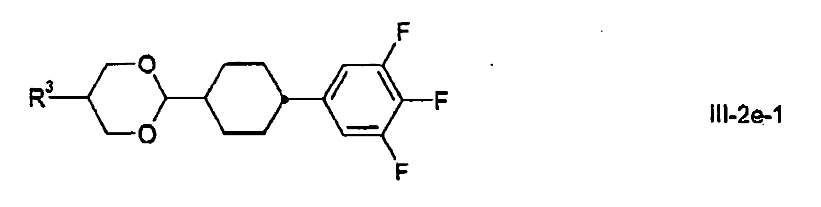 worin R³ die oben angegebene Bedeutung besitzt.

Vorzugsweise enthält die Komponente B eine oder mehrere Verbindungen der Formel III-2f, die vorzugsweise ausgewählt sind aus der Gruppe der Verbindungen der Formeln III-2f-1 bis III-2f-5 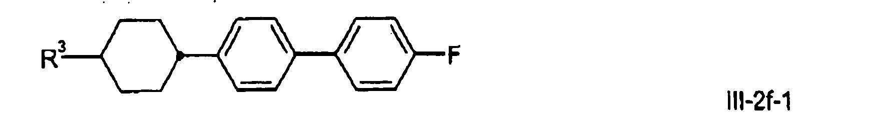 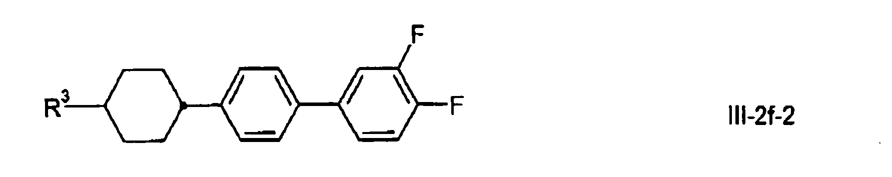 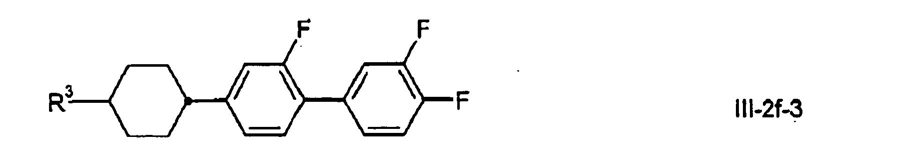 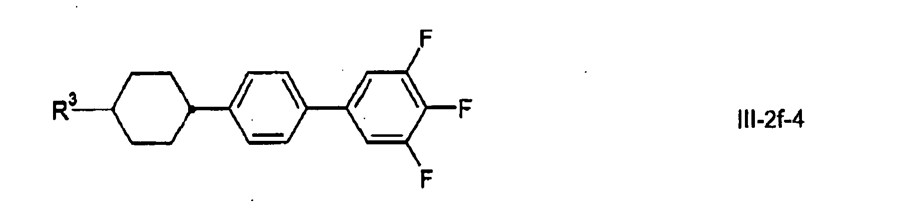 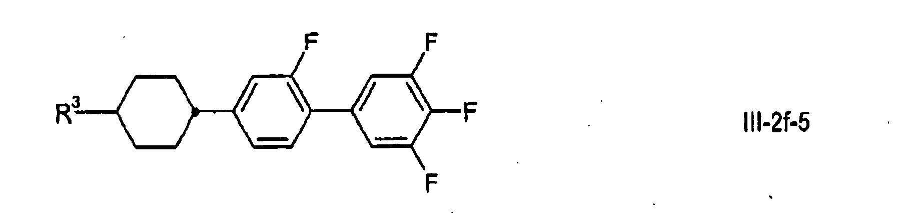 worin R³ die oben angegebene Bedeutung besitzt.

Vorzugsweise enthält die Komponente B eine oder mehrere Verbindungen der Formel III-2g, die vorzugsweise ausgewählt sind aus der Gruppe der Verbindungen der Formeln III-2g-1 bis III-2g-5 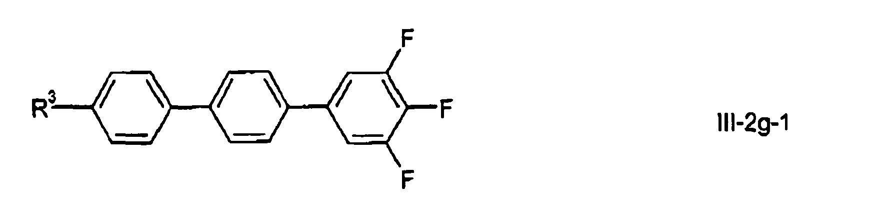 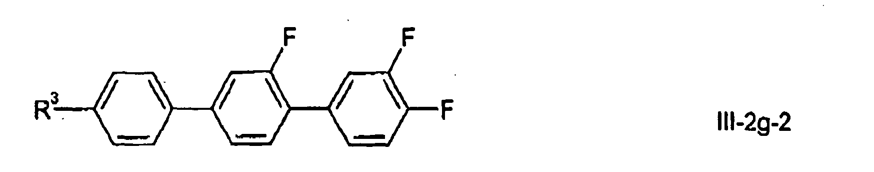 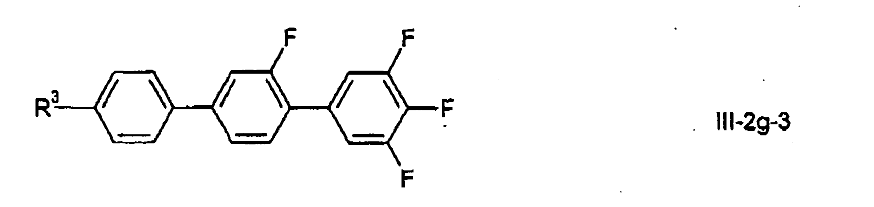 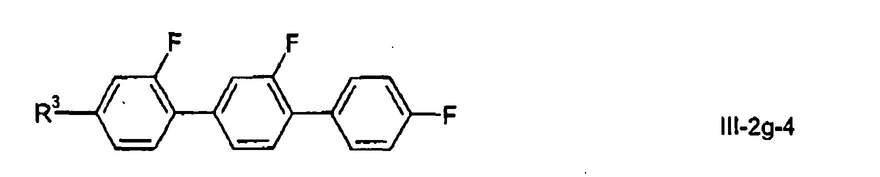 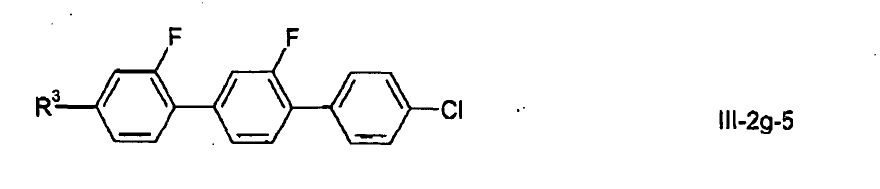 worin R³ die oben angegebene Bedeutung besitzt.

Vorzugsweise enthält die Komponente B eine oder mehrere Verbindungen der Formel III-2h, die bevorzugt ausgewählt sind aus der Gruppe der Verbindungen der Formeln III-1h-1 bis III-2h-3, bevorzugt der Formel III-2h-3 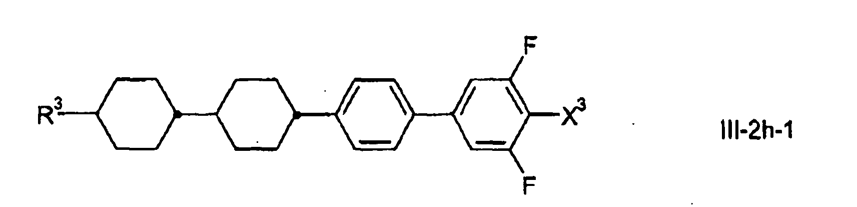 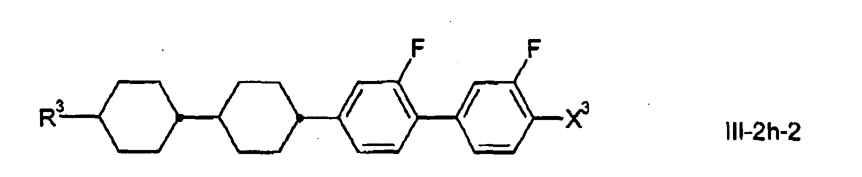 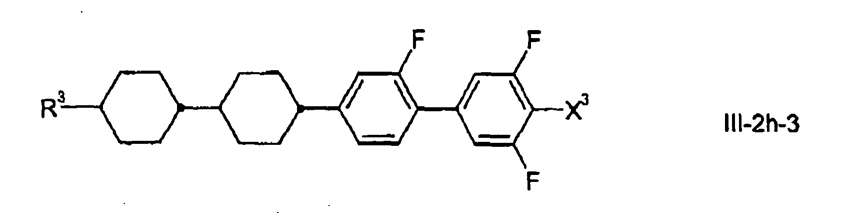 worin die Parameter die oben gegebene Bedeutung haben und bevorzugt X³ F bedeutet.

Vorzugsweise enthält die Komponente B eine oder mehrere Verbindungen der Formel III-2, die bevorzugt ausgewählt sind aus der Gruppe der Verbindungen der Formeln III-2i-1 und III-2i-2, bevorzugt der Formel III-2i-2 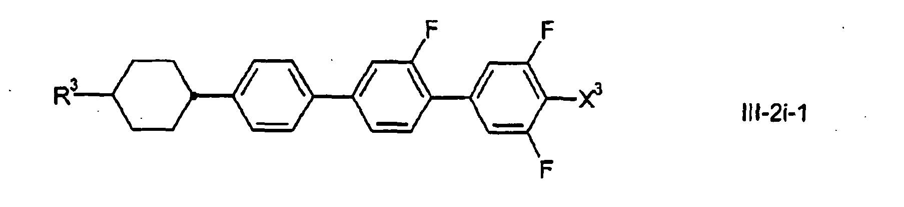 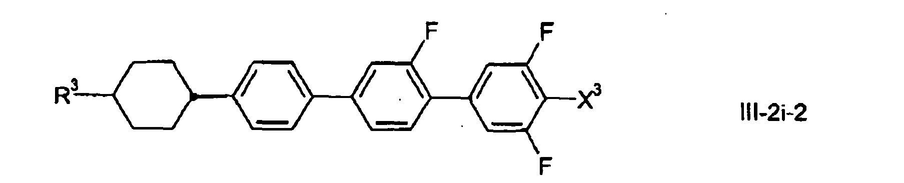 worin die Parameter die oben gegebene Bedeutung haben und bevorzugt X³ F bedeutet.

Vorzugsweise enthält die Komponente B eine oder mehrere Verbindungen der Formel III-2j, die bevorzugt ausgewählt sind aus der Gruppe der Verbindungen der Formeln III-2j-1 und III-2j-2, bevorzugt der Formel III-2j-1 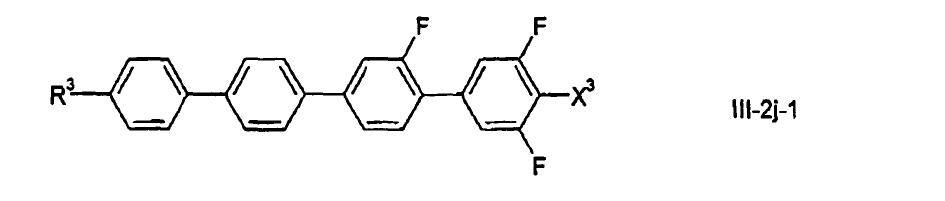 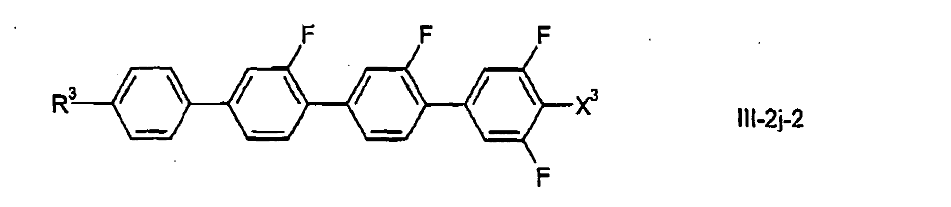 worin die Parameter die oben gegebene Bedeutung haben.

Alternativ oder zusätzlich zu den Verbindungen der Formeln III-1 und/oder III-2 können die Medien gemäß der vorliegenden Erfindung eine oder mehrere Verbindungen der Formel III-3 enthalten 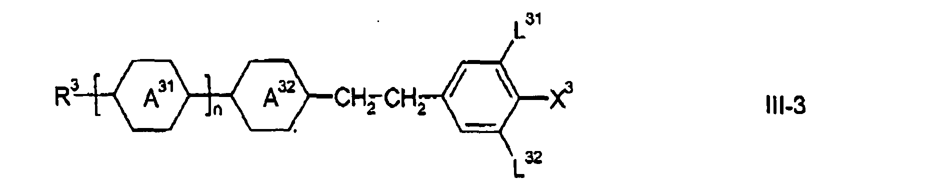 worin die Parameter die jeweiligen oben unter Formel III angegebenen Bedeutungen besitzen.

Diese Verbindungen sind vorzugsweise ausgewählt aus der Gruppe der Formeln III-3a und III-3b 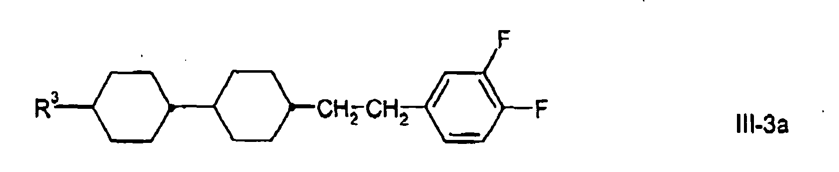 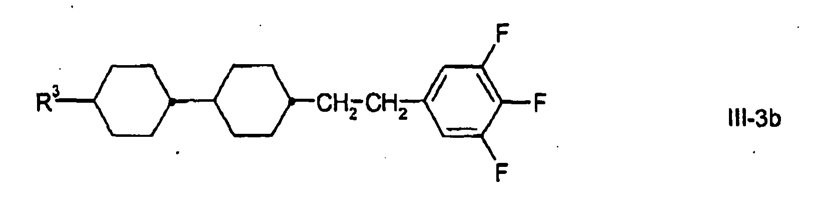 worin R³ die oben angegebene Bedeutung besitzt.

Vorzugsweise enthalten die flüssigkristallinen Medien gemäß der vorliegenden Erfindung eine dielektrisch neutrale Komponente, Komponente C. Diese Komponente weist eine dielektrische Anisotropie im Bereich von -1,5 bis 3 auf. Vorzugsweise enthält sie dielektrisch neutrale Verbindungen mit einer dielektrischen Anisotropie im Bereich von -1,5 bis 3, stärker bevorzugt besteht sie überwiegend, noch stärker bevorzugt besteht sie im Wesentlichen und speziell bevorzugt besteht sie vollständig daraus. Vor zugsweise enthält diese Komponente eine oder mehrere, stärker bevorzugt besteht sie überwiegend, noch stärker bevorzugt besteht sie im Wesentlichen und ganz bevorzugt besteht sie vollständig aus dielektrisch neutralen Verbindungen mit einer dielektrischen Anisotropie im Bereich von -1,5 bis 3, der Formel IV.

Vorzugsweise enthält die dielektrisch neutrale Komponente, Komponente C, eine oder mehrere Verbindungen ausgewählt aus der Gruppe der Verbindungen der Formeln IV-1 bis IV-6 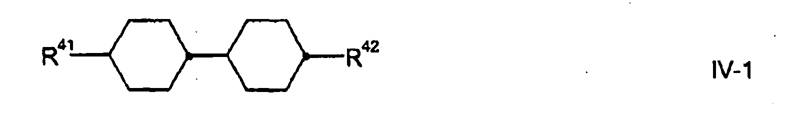 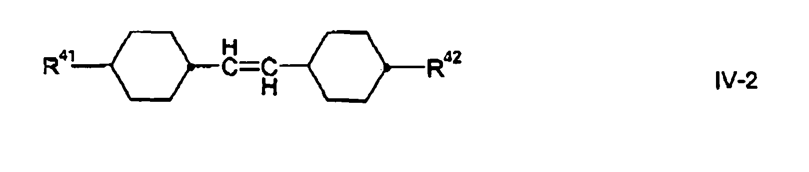 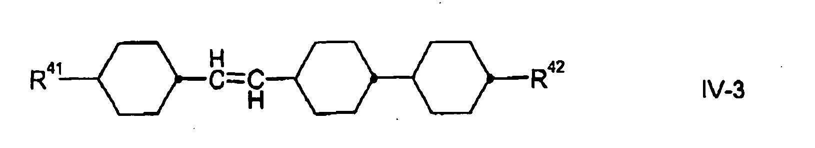 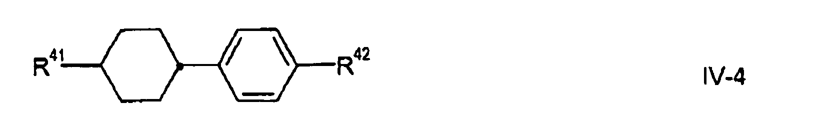 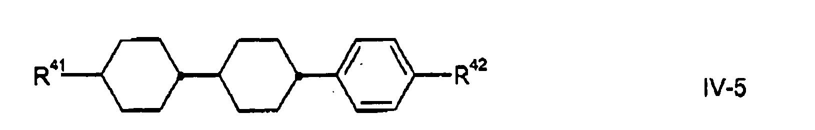 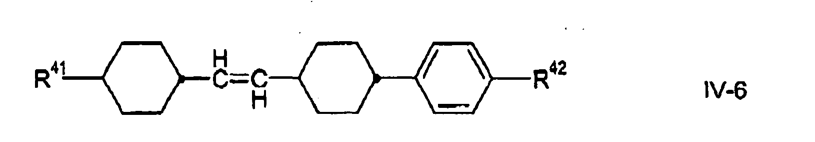 worin R⁴¹ und R⁴² die jeweiligen oben unter Formel IV angegebenen Bedeutungen besitzen und in den Formeln IV-1, IV-5 und IV-6 R⁴¹ vorzugsweise Alkyl oder Alkenyl, vorzugsweise Alkenyl, und R⁴² vorzugsweise Alkyl oder Alkenyl, vorzugsweise Alkyl bedeutet, in Formel IV-2 R⁴¹ und R⁴² vorzugsweise Alkyl bedeuten und in Formel IV-4 R⁴¹ vorzugsweise Alkyl oder Alkenyl, stärker bevorzugt Alkyl, und R⁴² vorzugsweise Alkyl oder Alkoxy, stärker bevorzugt Alkoxy bedeutet.

Vorzugsweise enthält die dielektrisch neutrale Komponente, Komponente C, eine oder mehrere Verbindungen ausgewählt aus der Gruppe der Verbindungen der Formeln IV-1, IV-4, IV-5 und IV-6, vorzugsweise eine oder mehrere Verbindungen der Formel IV-1 und eine oder mehrere Verbindungen ausgewählt aus der Gruppe der Formeln IV-4 und IV-5, stärker bevorzugt jeweils eine oder mehrere Verbindungen der Formeln IV-1, IV-4 und IV-5 und ganz bevorzugt jeweils eine oder mehrere Verbindungen Formeln IV-1, IV-4, IV-5 und IV-6.

In einer bevorzugten Ausführungsform enthält die Komponente C vorzugsweise eine oder mehrere Verbindungen der Formel IV-5, stärker bevorzugt ausgewählt aus ihren jeweiligen Unterformeln der Formel CCP-V-n und/ oder CCP-nV-m und/oder CCP-Vn-m, stärker bevorzugt der Formel CCP-V-n und/oder CCP-V2-n und ganz bevorzugt ausgewählt aus der Gruppe der Formeln CCP-V-1 und CCP-V2-1. Die Definitionen dieser Abkürzungen (Akronyme) sind unten in Tabelle D angegeben, bzw. aus den Tabellen A bis C zu ersehen.

In einer ebenfalls bevorzugten Ausführungsform enthält die Komponente C vorzugsweise eine oder mehrere Verbindungen der Formel IV-1, stärker bevorzugt ausgewählt aus ihren jeweiligen Unterformeln der Formel CC-n-m, CC-n-V, CC-n-Vm, CC-V-V, CC-V-Vn und/oder CC-nV-Vm, stärker bevorzugt der Formeln CC-n-V und/ oder CC-n-Vm und ganz bevorzugt ausgewählt aus der Gruppe der Formeln CC-3-V, CC-4-V, CC-5-V CC-3-V1, CC-4V1, CC-5-V1, CC-3-V2 und CC-V-V1. Die Definitionen dieser Abkürzungen (Akronyme) sind ebenfalls unten in Tabelle D angegeben, bzw. aus den Tabellen A bis C zu ersehen.

In einer weiteren bevorzugten Ausführungsform der vorliegenden Erfindung, bei der es sich um dieselbe wie die vorhergehende oder um eine andere handeln kann, enthalten die Flüssigkristallmischungen gemäß der vorliegenden Erfindung die Komponente C, die Verbindungen der Formel IV ausgewählt aus der Gruppe der Verbindungen der Formeln IV-1 bis IV-6 wie oben gezeigt und gegebenenfalls der Formeln IV-7 bis IV-14 enthält, vorzugsweise überwiegend daraus besteht und ganz bevorzugt vollständig daraus besteht: 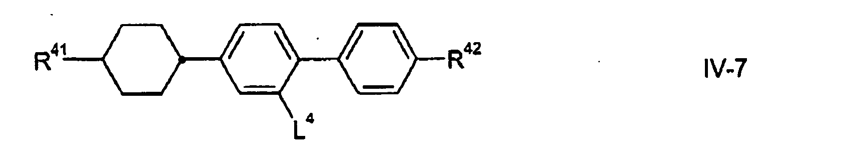 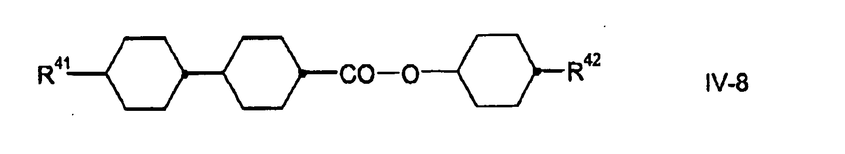 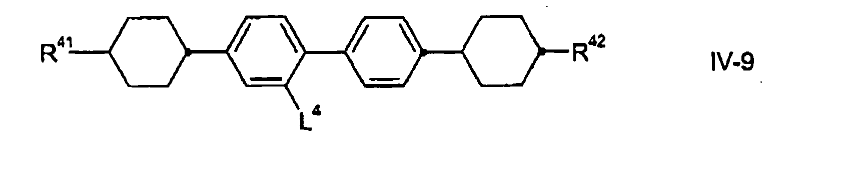 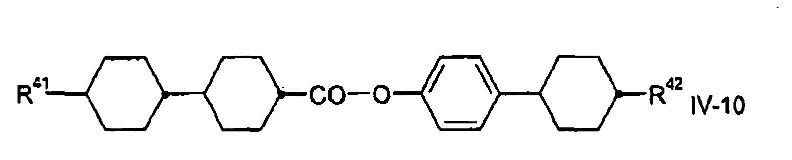 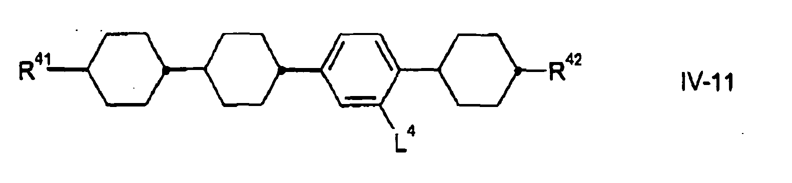 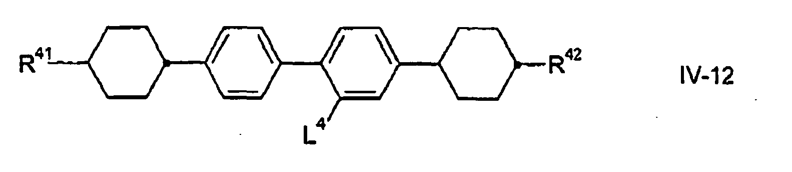 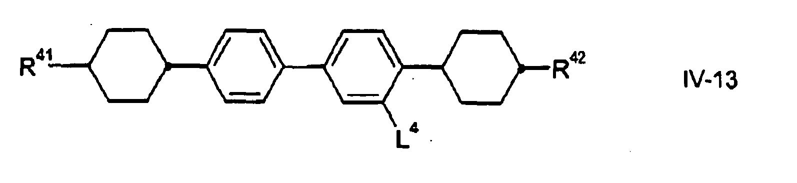 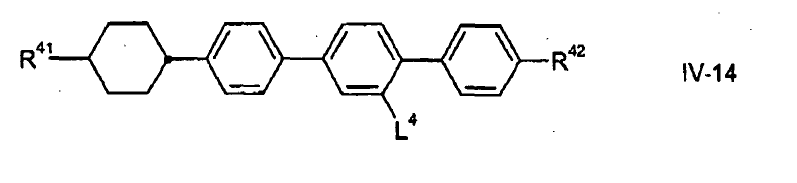 worin
- R⁴¹ und R⁴²: unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten und
- L⁴: H oder F bedeutet.

In einer bevorzugten Ausführungsform enthält die Komponente C vorzugsweise eine oder mehrere Verbindungen der Formel IV-7, stärker bevorzugt ausgewählt aus ihren jeweiligen Unterformeln der Formel CPP-3-2, CPP-5-2 und CGP-3-2, stärker bevorzugt der Formel CPP-3-2 und/oder CGP-3-2 und ganz besonders bevorzugt der Formel CPP-3-2. Die Definitionen dieser Abkürzungen (Akronyme) sind unten in Tabelle. D angegeben, bzw. aus den Tabellen A bis C zu ersehen.

Alternativ oder zusätzlich zu den Verbindungen der Formeln II und/oder III können die Medien gemäß der vorliegenden Erfindung eine oder mehrere dielektrisch positive Verbindungen der Formel V enthalten 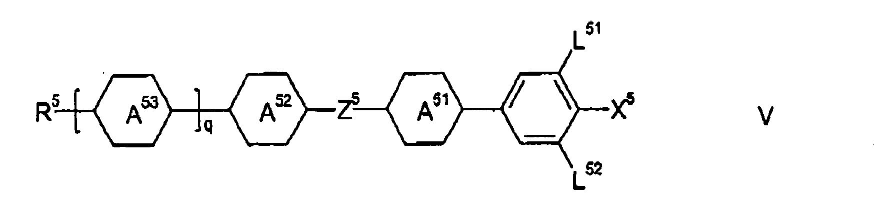 worin
- R⁵: Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen und vorzugs- weise Alkyl oder Alkenyl bedeutet, 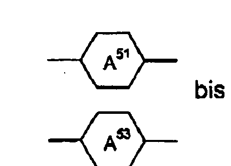
unabhängig voneinander 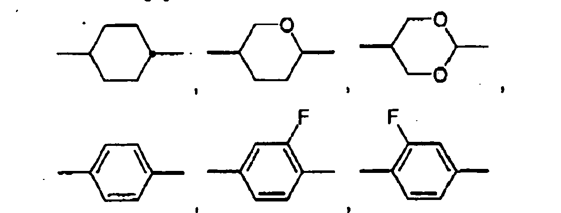 oder 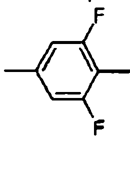 bedeuten,
- L⁵¹ und L⁵²: unabhängig voneinander H oder F bedeuten, vorzugs- weise L⁵¹ F bedeutet, und
- X⁵: Halogen, halogeniertes Alkyl oder Alkoxy mit 1 bis 3 C- Atomen oder halogeniertes Alkenyl oder Alkenyloxy mit 2 oder 3 C-Atomen, vorzugsweise F, Cl, -OCF₃ oder -CF₃, ganz bevorzugt F, Cl oder -OCF₃ bedeutet,
- Z⁵: -CH₂CH₂-, -CF₂CF₂-, -COO-, *trans*- -CH=CH-, *trans-* -CF=CF-, -CH₂O- oder -CF₂O-, vorzugsweise -CH₂CH₂-, -COO- oder *trans-* -CH=CH- und ganz bevorzugt -COO- oder *trans*- -CH=CH- bedeutet und
- q: 0 oder 1 bedeutet.

Vorzugsweise enthalten die Medien gemäß der vorliegenden Erfindung eine oder mehrere Verbindungen der Formel V, vorzugsweise ausgewählt aus der Gruppe der Verbindungen der Formeln V-1 und V-2 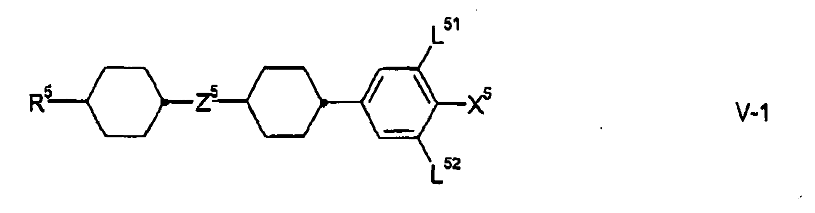 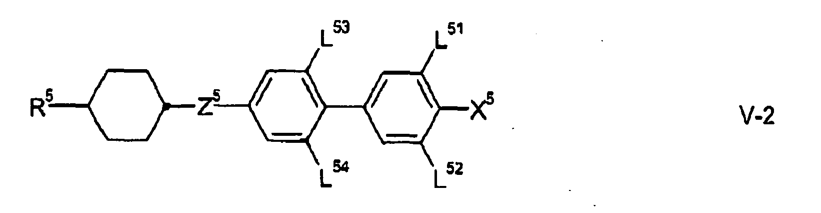 worin die Parameter die jeweiligen oben angegebenen Bedeutungen besitzen und die Parameter L⁵³ und L⁵⁴ unabhängig voneinander und von den anderen Parametern H oder F bedeuten und Z⁵ vorzugsweise -CH₂-CH₂- bedeutet. Vorzugsweise sind die Verbindungen der Formel V-1 ausgewählt aus der Gruppe der Verbindungen der Formeln V-1 a und V-1b 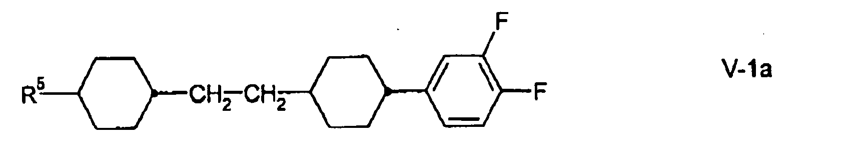 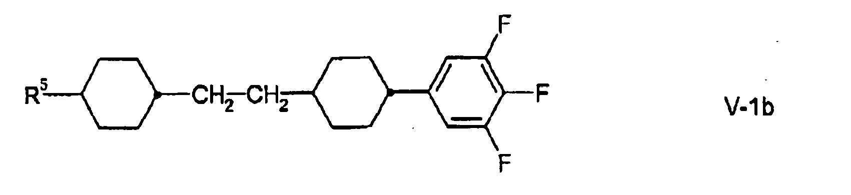 worin R⁵ die oben angegebene Bedeutung besitzt.

Vorzugsweise sind die Verbindungen der Formel V-2 ausgewählt aus der Gruppe der Verbindungen der Formeln V-2a bis V-2d 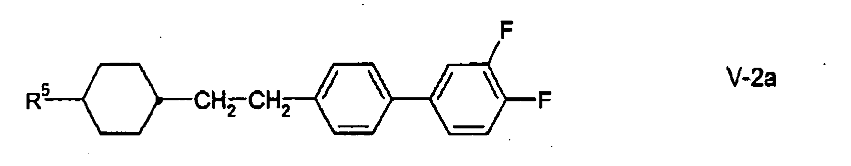 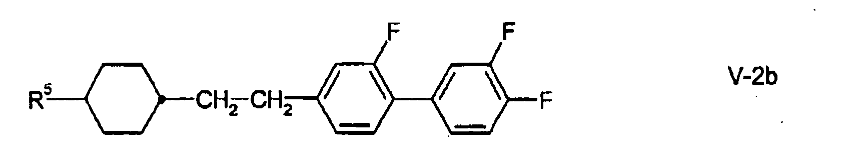 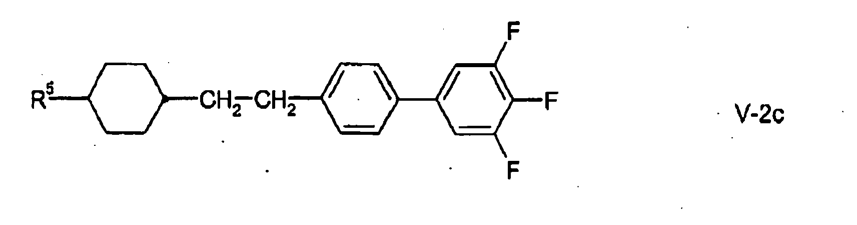 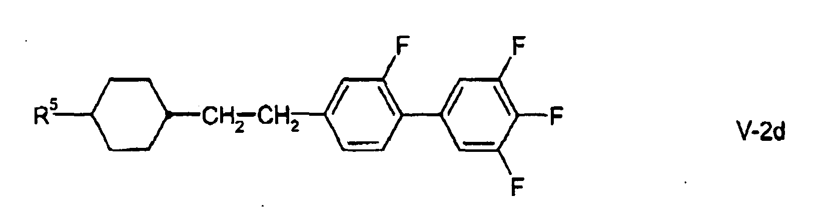 worin R⁵ die oben angegebene Bedeutung besitzt.

Vorzugsweise enthalten die flüssigkristallinen Medien gemäß der vorliegenden Erfindung eine zusätzliche dielektrisch neutrale Komponente, Komponente D. Diese Komponente weist eine dielektrische Anisotropie im Bereich von -1,5 bis 3 auf. Vorzugsweise enthält sie dielektrisch neutrale Verbindungen mit einer dielektrischen Anisotropie im Bereich von -1,5 bis 3, stärker bevorzugt besteht sie überwiegend, noch stärker bevorzugt besteht sie im Wesentlichen und speziell bevorzugt besteht sie vollständig daraus. Vorzugsweise enthält diese Komponente eine oder mehrere dielektrisch neutrale Verbindungen mit einer dielektrischen Anisotropie im Bereich von -1,5 bis 3, stärker bevorzugt besteht sie überwiegend, noch stärker bevorzugt besteht sie im Wesentlichen und ganz bevorzugt besteht sie vollständig daraus, der Formel VI 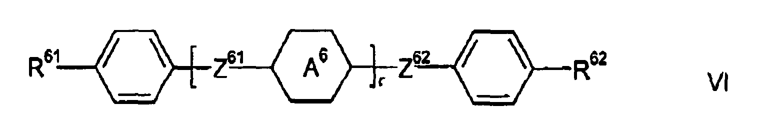 worin
- R⁶¹ und R⁶²: unabhängig voneinander die oben unter Formel II für R² angegebene Bedeutung besitzen, vorzugsweise R⁶¹ Alkyl und R⁶² Alkyl oder Alkenyl bedeutet, 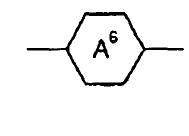 und bei zweifachem Auftreten bei jedem Auftreten unabhängig voneinander 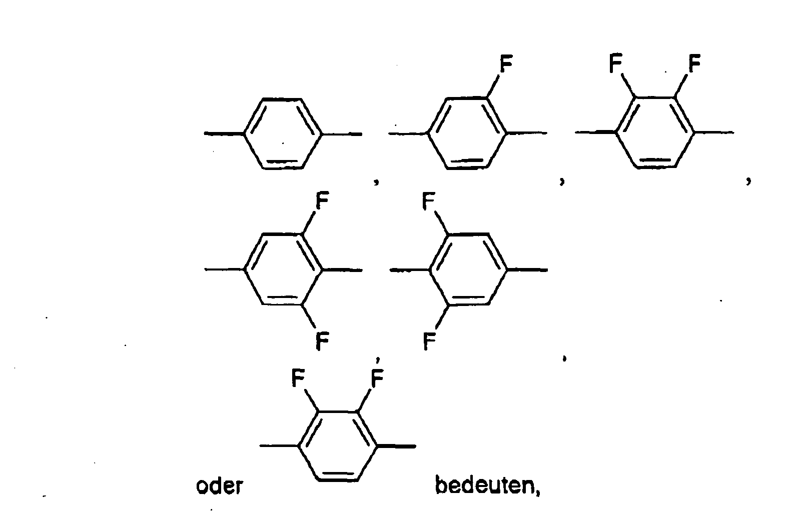 vorzugsweise einer oder mehrere von 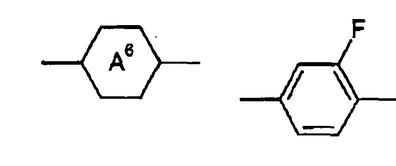 bedeuten,
Z⁶¹ und Z⁶² unabhängig voneinander und bei zweifachem Auftreten von Z⁶¹ auch diese unabhängig voneinander -CH₂CH₂-, -COO-, *trans-* -CH=CH-, *trans-* -CF=CF-, -CH₂O-, -CF₂O- oder eine Einfachbindung bedeuten, vorzugs- weise eines oder mehrere von ihnen eine Einfach- bindung bedeutetlbedeuten, und
r 0, 1 oder 2, vorzugsweise 0 oder 1, besonders bevorzugt 1, bedeutet.

Vorzugsweise enthält die dielektrisch neutrale Komponente, Komponente D, eine oder mehrere Verbindungen ausgewählt aus der Gruppe der Verbindungen der Formeln VI-1 und VI-2 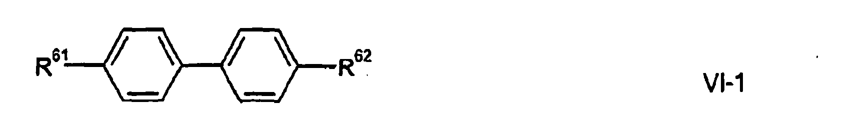 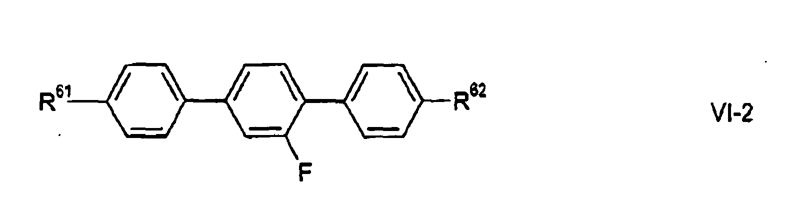 worin R⁶¹ und R⁶² die jeweiligen oben unter Formel VI angegebenen Bedeutungen besitzen und R⁶¹ vorzugsweise Alkyl bedeutet und in Formel VI-1 R⁶² vorzugsweise Alkenyl, vorzugsweise -(CH₂)₂-CH=CH-CH₃, und in Formel VI-2 R⁶² vorzugsweise Alkyl -(CH₂)₂-CH=CH₂ oder -(CH₂)₂-CH=CH-CH₃ bedeutet.

Vorzugsweise enthält die dielektrisch neutrale Komponente, Komponente D, eine oder mehrere Verbindungen ausgewählt aus der Gruppe der Verbindungen der Formeln VI-1 und VI-2, worin R⁶¹ vorzugsweise n-Alkyl bedeutet und in Formel VI-1 R⁶² vorzugsweise Alkenyl und in Formel VI-2 R⁶² vorzugsweise n-Alkyl bedeutet.

In einer bevorzugten Ausführungsform enthält die Komponente D vorzugsweise eine oder mehrere Verbindungen der Formel VI-1, stärker bevorzugt ihrer Unterformel PP-n-2Vm, noch stärker bevorzugt der Formel PP-1-2V1. Die Definitionen dieser Abkürzungen (Akronyme) sind unten in Tabelle D angegeben, bzw. aus den Tabellen A bis C zu ersehen.

In einer bevorzugten Ausführungsform enthält die Komponente D vorzugsweise eine oder mehrere Verbindungen der Formel VI-2, stärker bevorzugt ihrer Unterformeln PGP-n-m, PGP-n-2V und PGP-n-2Vm, noch stärker bevorzugt ihrer Unterformeln PGP-3-m, PGP-n-2V und PGP-n-V1 , ganz bevorzugt ausgewählt aus den Formeln PGP-3-2, PGP-3-3, PGP-3-4, PGP-3-5, PGP-1-2V, PGP-2-2V und PGP-3-2V. Die Definitionen dieser Abkürzungen (Akronyme) sind ebenfalls unten in Tabelle D angegeben, bzw. aus den Tabellen A bis C zu ersehen.

Vorzugsweise enthalten die Flüssigkristallmischungen gemäß der vorliegenden Erfindung neben den Komponenten A und B mindestens eine weitere Komponente. Diese dritte Komponente kann eine der Komponenten C und D sein, vorzugsweise ist die dritte vorliegende Komponente die Komponente C.

Selbstverständlich können die Mischungen gemäß der vorliegenden Erfindung auch alle vier Komponenten A, B, C und D enthalten.

Zusätzlich können die Flüssigkristallmischungen gemäß der vorliegenden Erfindung eine weitere optionale Komponente, Komponente E, enthalten, die eine negative dielektrische Anisotropie aufweist und dielektrisch negative Verbindungen enthält, vorzugsweise überwiegend daraus besteht, stärker bevorzugt im Wesentlichen daraus besteht und ganz bevorzugt vollständig daraus besteht, vorzugsweise der Formel VII 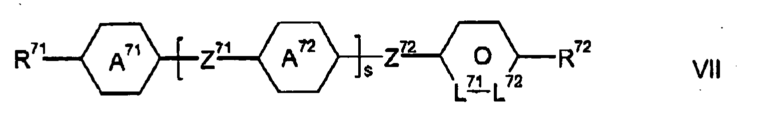 worin
- R⁷¹ und R⁷²: unabhängig voneinander die oben unter, Formel II für R² angegebene Bedeutung besitzen, 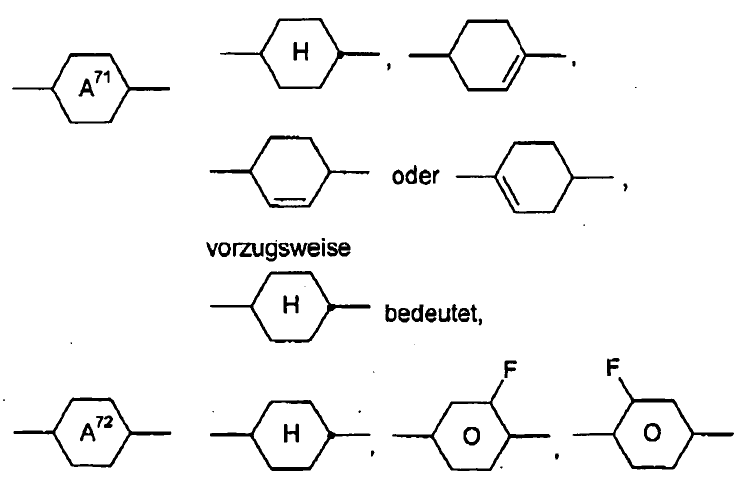
oder 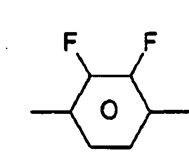 bedeutet,
- Z⁷¹ und Z⁷²: unabhängig voneinander -CH₂CH₂-, -COO-, *trans*- -CH=CH-, *trans-* -CF=CF-, -CH₂O-, -CF₂O- oder eine Einfachbindung bedeuten, vorzugsweise eines oder mehrere von ihnen eine Einfachbindung bedeutet/ bedeuten und ganz bevorzugt beide eine Einfach- bindung bedeuten,
- L⁷¹ und L⁷²: unabhängig voneinander C-F oder N bedeuten, vorzugsweise eines oder mehrere von ihnen C-F bedeutet/bedeuten und ganz bevorzugt beide C-F bedeuten, und
- s: 0 oder 1 bedeutet.
Zusätzlich können die Flüssigkristallmischungen gemäß der vorliegenden Erfindung eine weitere optionale Komponente, Komponente F, enthalten, die eine positive dielektrische Anisotropie aufweist und dielektrisch positive Verbindungen enthält, vorzugsweise überwiegend daraus besteht, stärker bevorzugt im Wesentlichen daraus besteht und ganz bevorzugt vollständig daraus besteht, vorzugsweise der Formel VIII 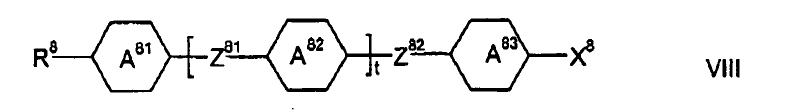 worin
- R⁸: die oben unter Formel II für R² angegebene Bedeutung besitzt,
eines von 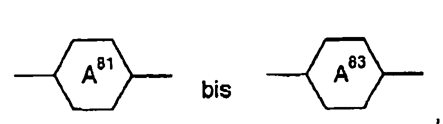 das vorhanden ist, 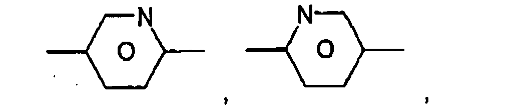 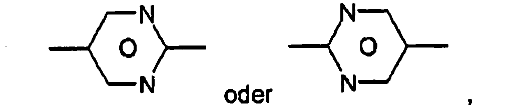 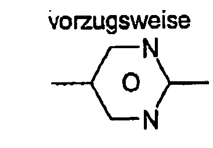 bedeutet, vorzugsweise 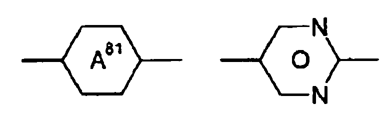 bedeutet,
und die anderen dieselbe Bedeutung besitzen oder unabhängig voneinander 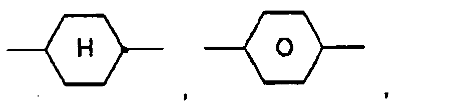 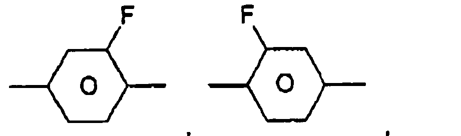 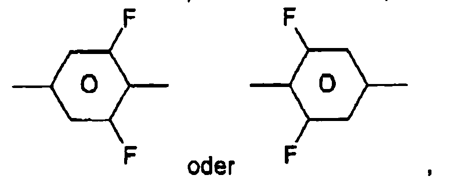 vorzugsweise, 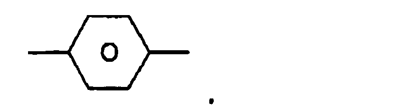 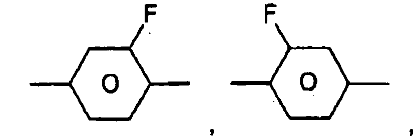 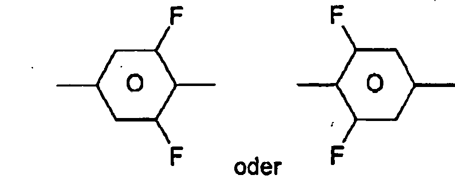 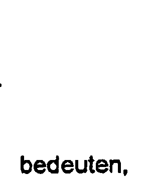
- Z⁸¹ und Z⁸²: unabhängig voneinander -CH₂CH₂-, -COO-, *trans-* -CH=CH-, *trans-* -CF=CF-, -CH₂O-, -CF₂O- oder eine Einfachbindung bedeuten, vorzugsweise eines oder mehrere von ihnen eine Einfachbindung bedeutet/ bedeuten und ganz bevorzugt beide eine Einfach- bindung bedeuten,
- t: 0, 1 oder 2, vorzugsweise 0 oder 1, stärker bevorzugt 1 bedeutet, und
- X⁸: die oben unter Formel II für X² angegebene Bedeutung besitzt oder alternativ unabhängig von R⁸ die für R⁸ angegebene Bedeutung besitzen kann und
wovon die Verbindungen der Formel I ausgenommen sind.

Vorzugsweise enthalten die flüssigkristallinen Medien gemäß der vorliegenden Erfindung die Komponenten A bis E, vorzugsweise A bis D und ganz bevorzugt A bis C, und insbesondere Verbindungen ausgewählt aus der Gruppe der Verbindungen der Formeln I, bis VIII, vorzugsweise I bis V und ganz bevorzugt I bis III und/oder IV, stärker bevorzugt bestehen sie überwiegend, noch stärker bevorzugt bestehen sie im Wesentlichen und ganz bevorzugt bestehen sie vollständig daraus.

In dieser Anmeldung bedeutet enthalten im Zusammenhang mit Zusammensetzungen, dass die betreffende Entität, d.h. das Medium oder die Komponente, die angegebene Komponente oder Komponenten oder Verbindung oder Verbindungen enthält, vorzugsweise in einer Gesamtkonzentration von 10 % oder mehr und ganz bevorzugt von 20 % oder mehr.

Überwiegend bestehen bedeutet in diesem Zusammenhang, dass die betreffende Entität 55 % oder mehr, vorzugsweise 60 % oder mehr und ganz bevorzugt 70 % oder mehr der angegebenen Komponente oder Komponenten oder Verbindung oder Verbindungen enthält.

Im Wesentlichen bestehen bedeutet in diesem Zusammenhang, dass die betreffende Entität 80 % oder mehr, vorzugsweise 90 % oder mehr und ganz bevorzugt 95 % oder mehr der angegebenen Komponente oder Komponenten oder Verbindung oder Verbindungen enthält.

Vollständig bestehen bedeutet in diesem Zusammenhang, dass die betreffende Entität 98 % oder mehr, vorzugsweise 99 % oder mehr und ganz bevorzugt 100,0 % der angegebenen Komponente oder Komponenten oder Verbindung oder Verbindungen enthält.

Vorzugsweise enthält die Komponente E, stärker bevorzugt besteht sie überwiegend und ganz bevorzugt besteht sie vollständig aus einer oder mehreren Verbindungen der Formel VII, vorzugsweise ausgewählt aus der Gruppe der Verbindungen der Formeln VII-1 bis VII-3 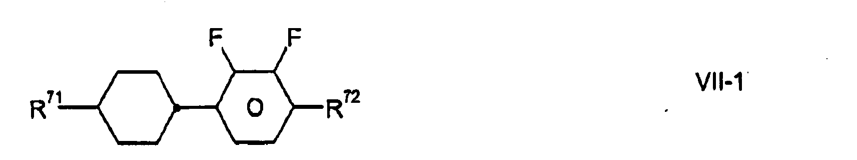 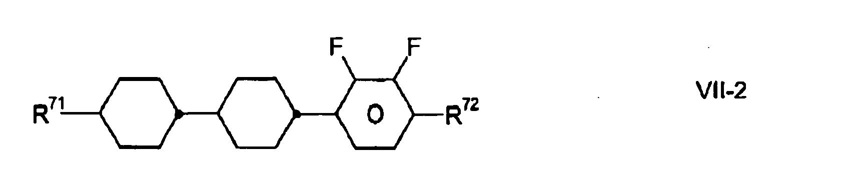 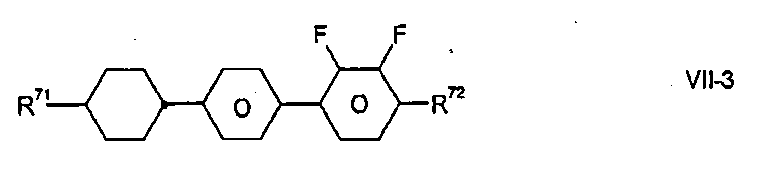 worin
- R⁷¹ und R⁷²: die jeweiligen oben unter Formel VII angegebenen Bedeu- tungen besitzen.

In den Formeln VII-1 bis VII-3 bedeutet R⁷¹ vorzugsweise n-Alkyl oder 1-*E*-Alkenyl und R⁷² vorzugsweise n-Alkyl oder Alkoxy.

Auch andere mesogene Verbindungen, die oben nicht explizit genannt sind, können gegebenenfalls und in vorteilhafter Weise in den Medien gemäß der vorliegenden Erfindung verwendet werden. Solche Verbindungen sind dem Fachmann bekannt.

Die Flüssigkristallmedien gemäß der vorliegenden Erfindung weisen bevorzugt einen Klärpunkt von 60°C oder mehr, stärker bevorzugt von 65 °C oder mehr, besonders bevorzugt von 70 °C oder mehr und ganz besonders bevorzugt von 75 °C oder mehr, auf.

Vorzugsweise erstreckt sich die nematische Phase der erfindungsgemäßen Medien mindestens von 0 °C oder weniger bis 70 °C oder mehr, stärker bevorzugt mindestens von -20 °C oder weniger bis 75°C oder mehr, ganz bevorzugt mindestens von -30 °C oder weniger bis 75 °C oder mehr und insbesondere mindestens von -40 °C oder weniger bis 80°C oder mehr.

Das Δε des Flüssigkristallmediums gemäß der Erfindung bei 1 kHz und 20 °C beträgt vorzugsweise 2 oder mehr, stärker bevorzugt 4 oder mehr und ganz bevorzugt 6 oder mehr. Insbesondere beträgt Δε 20 oder weniger.

Das Δn der Flüssigkristallmedien gemäß der vorliegenden Erfindung liegt bei 589 nm (Na°) und 20 °C vorzugsweise im Bereich von 0,070 oder mehr bis 0,150 oder weniger, stärker bevorzugt im Bereich von 0,080 oder mehr bis 0,140 oder weniger, noch stärker bevorzugt im Bereich von 0,090 oder mehr bis 0,135 oder weniger und ganz besonders bevorzugt im Bereich von 0,100 oder mehr bis 0,130 oder weniger.

In einer ersten bevorzugten Ausführungsform der vorliegenden Anmeldung beträgt das An der Flüssigkristallmedien gemäß der vorliegenden Erfindung vorzugsweise 0,080 oder mehr, stärker bevorzugt 0,090 oder mehr.

In dieser ersten bevorzugten Ausführungsform der vorliegenden Erfindung liegt das Δn der Flüssigkristallmedien bevorzugt im Bereich von 0,090 oder mehr bis 0,120 oder weniger, stärker bevorzugt im Bereich von 0,095 oder mehr bis 0,115 oder weniger und ganz besonderes bevorzugt im Bereich von 0,100 oder mehr bis 0,105 oder weniger, während Δε vorzugsweise im Bereich von 4 oder mehr bis 11 oder weniger, vorzugsweise im Bereich von 5 oder mehr bis 9 oder weniger und besonders bevorzugt im Bereich von 6 oder mehr bis 8 oder weniger der weniger liegt.

In dieser Ausführungsform erstreckt sich die nematische Phase der erfindungsgemäßen Medien vorzugsweise mindestens von -20 °C oder weniger bis 70 °C oder mehr, stärker bevorzugt mindestens von -20 °C oder weniger bis 70 °C oder mehr, ganz bevorzugt mindestens von -30 °C oder weniger bis 70 °C oder mehr und insbesondere mindestens von -40°C oder weniger bis 95°C oder mehr.

In einer zweiten bevorzugten Ausführungsform der vorliegenden Erfindung liegt das Δn der Flüssigkristallmedien im Bereich von 0,115 oder mehr bis 0,140 oder weniger, stärker bevorzugt im Bereich von 0,120 oder mehr bis 0,135 oder weniger und ganz besonders bevorzugt im Bereich von 0,125 oder mehr bis 0,130 oder weniger, während Δε vorzugsweise 6 oder mehr, stärker bevorzugt 7 oder mehr beträgt und ganz bevorzugt im Bereich von 8,5 oder mehr bis 10 oder weniger liegt.

In dieser Ausführungsform erstreckt sich die nematische Phase der erfindungsgemäßen Medien vorzugsweise mindestens von -20 °C oder weniger bis 70 °C oder mehr, stärker bevorzugt mindestens von -20 °C oder weniger bis 70 °C oder mehr, ganz bevorzugt mindestens von -30 °C oder weniger bis 70 °C oder mehr und insbesondere mindestens von -40 °C oder weniger bis 75°C oder mehr.

In einer dritten bevorzugten Ausführungsform der vorliegenden Erfindung liegt das Δn der Flüssigkristallmedien im Bereich von 0,115 oder mehr bis 0,140 oder weniger, stärker bevorzugt im Bereich von 0,120 oder mehr bis 0,135 oder weniger und ganz bevorzugt im Bereich von 0,125 oder mehr bis 0,130 oder weniger, während Δε vorzugsweise 6 oder mehr, stärker bevorzugt 7 oder mehr beträgt und ganz bevorzugt im Bereich von 8,5 oder mehr bis 10 oder weniger liegt, liegt das Δn der Flüssigkristallmedien im Bereich von 0,070 oder mehr bis 0,120 oder weniger, stärker bevorzugt im Bereich von 0,075 oder mehr bis 0,115 oder weniger und ganz besonders bevorzugt im Bereich von 0,080 oder mehr bis 0,110 oder weniger, während Δε vorzugsweise 3,5 oder mehr beträgt, bevorzugt im Bereich von 4,0 oder mehr bis 7,0 oder weniger, stärker bevorzugt im Bereich von 4,5 oder mehr bis 6,0 oder weniger und besonders bevorzugt im Bereich von 5,0 oder mehr bis 5,5 oder weniger liegt.

In dieser Ausführungsform erstreckt sich die nematische Phase der erfindungsgemäßen Medien vorzugsweise mindestens von -20°C oder weniger bis 75°C oder mehr, stärker bevorzugt mindestens von -30 °C oder weniger bis 70 °C oder mehr, ganz bevorzugt mindestens von -30 °C oder weniger bis 75 °C oder mehr und insbesondere mindestens von -30 °C oder weniger bis 80 °C oder mehr.

In einer vierten bevorzugten Ausführungsform der vorliegenden Erfindung, die sich insbesondere für die Anwendung der Anzeigen in Notebooks mit 2,5 V Treibern, bzw. mit 3,3 V Treibern eignet, liegt das Δn der Flüssigkristallmedien bevorzugt im Bereich von 0,090 oder mehr bis 0,130 oder weniger, stärker bevorzugt im Bereich von 0,100 oder mehr bis 0,120 oder weniger und ganz besonders bevorzugt im Bereich von 0,115 oder mehr bis 0,120 oder weniger, während Δε vorzugsweise 10 oder mehr beträgt und für Anwendungen mit 2,5 V Treibern bevorzugt im Bereich von 15 oder mehr bis 22 oder weniger, stärker bevorzugt im Bereich von 16 oder mehr bis 20 oder weniger und besonders bevorzugt im Bereich von 17 oder mehr bis 19 oder weniger liegt und für Anwendungen mit 3,3 V Treibern bevorzugt im Bereich von 10 oder mehr bis 25 oder weniger, stärker bevorzugt im Bereich von 11 oder mehr bis 14 oder weniger und besonders bevorzugt im Bereich von 12 oder mehr bis 13 oder weniger liegt.

In diesen Ausführungsformen erstreckt sich die nematische Phase der erfindungsgemäßen Medien vorzugsweise mindestens von -10°C oder weniger bis 70°C oder mehr, stärker bevorzugt mindestens von -30 °C oder weniger bis 75 °C oder mehr und insbesondere mindestens von -40 °C oder weniger bis 80 °C oder mehr,

Gemäß der vorliegenden Erfindung wird die Komponente A wird vorzugsweise in einer Konzentration von 1 % bis 50 %, stärker bevorzugt von 1 % bis 30 %, stärker bevorzugt von 2 % bis 30 % und ganz bevorzugt von 3 % bis 30 % der Gesamtmischung verwendet.

Die Komponente B wird vorzugsweise in einer Konzentration von 2 % bis 60 %, stärker bevorzugt von 3 % bis 35 %, noch stärker bevorzugt von 4 % bis 20 % und ganz bevorzugt von 5 % bis 15 % der Gesamtmischung verwendet.

Die Komponente C wird vorzugsweise in einer Konzentration von 5 % bis 70 %, stärker bevorzugt von 20 % bis 65 %, noch stärker bevorzugt von 30 % bis 60 % und ganz bevorzugt von 40 % bis 55 % der Gesamtmischung verwendet.

Die Komponente D wird vorzugsweise in einer Konzentration von 0 % bis 50 %, stärker bevorzugt von 1 % bis 40 %, noch stärker bevorzugt von 5 % bis 30 % und ganz bevorzugt von 10 % bis 20 % der Gesamtmischung verwendet.

Die Komponente E wird vorzugsweise in einer Konzentration von 0 % bis 30 %, stärker bevorzugt von 0 % bis 15 % und ganz bevorzugt von 1 % bis 10 % der Gesamtmischung verwendet.

Gegebenenfalls können die erfindungsgemäßen Medien weitere Flüssigkristallverbindungen enthalten, um die physikalischen Eigenschaften einzustellen. Solche Verbindungen sind dem Fachmann bekannt. Ihre Konzentration in den Medien gemäß der vorliegenden Erfindung beträgt vorzugsweise 0 % bis 30 %, stärker bevorzugt 0,1 % bis 20 % und ganz bevorzugt 1 % bis 15 %.

In der ersten bevorzugten Ausführungsform der vorliegenden Erfindung wie oben genannt wird die Komponente A vorzugsweise in einer Konzentration von 1 % bis 65 %, stärker bevorzugt von 3 % bis 60 % und ganz bevorzugt von 5 % bis 57 % der Gesamtmischung verwendet, während die Komponente D vorzugsweise in einer Konzentration von 5 % bis 40 %, stärker bevorzugt von 10 % bis 35 % und ganz bevorzugt von 10 % bis 30 % der Gesamtmischung verwendet wird.

In dieser bevorzugten Ausführungsform enthalten die Medien vorzugsweise eine oder mehrere Verbindungen der Formel VI und ganz besonders bevorzugt der Formel VI-2.

Speziell in der zweiten bevorzugten Ausführungsform der vorliegenden Erfindung wie oben genannt enthält die Komponente C vorzugsweise eine oder mehrere Verbindungen der Formel IV, stärker bevorzugt der Formel IV-1, noch stärker bevorzugt ausgewählt aus ihren jeweiligen Unterformeln der Formel CC-n-V und/oder CC-n-Vm, stärker bevorzugt der Formel CCn-V1 und/ oder CC-n-V und ganz bevorzugt ausgewählt aus der Gruppe der Formeln CC-3-V, CC-4-V, CC-5-V und CC-3-V1. Die Definitionen dieser Abkürzungen (Akronyme) sind unten in Tabelle D angegeben.

Die Konzentration der Verbindung der Formel CC-3-V in den erfind8ungsgemäßen die Medien kann in einer bevorzugten Ausführungsform 50 % bis 65 % betragen, besonders bevorzugt 55 % bis 60%.

Die Flüssigkristallmedien enthalten vorzugsweise insgesamt 50 % bis 100 %, stärker bevorzugt 70 % bis 100 % und ganz bevorzugt 80 % bis 100 % und insbesondere 90 % bis 100 % der Komponenten A, B, C und D, vorzugsweise der Komponenten A, B und C, die wiederum eine oder mehrere der Verbindungen der Formeln IA, IB, IC, II, III, IV, V, VI und VII, vorzugsweise der Formeln IA, IB, IC, II, III, IV, V bzw. VI enthalten, vorzugsweise überwiegend daraus bestehen und ganz bevorzugt vollständig daraus bestehen.

In der vorliegenden Anmeldung beschreibt der Ausdruck dielektrisch positiv Verbindungen oder Komponenten mit Δε > 3,0, dielektrisch neutral mit -1,5 ≤ Δε ≤ 3,0 und dielektrisch negativ mit Δε < -1,5. Δε wird bei einer Frequenz von 1 kHz und 20°C bestimmt. Die dielektrische Anisotropie der jeweiligen Verbindung wird aus den Ergebnissen einer Lösung von 10 % der jeweiligen einzelnen Verbindung in einer nematischen Host-Mischung bestimmt. Wenn die Löslichkeit der jeweiligen Verbindung in der Host-Mischung weniger als 10 % beträgt, wird die Konzentration auf 5 % reduziert. Die Kapazitäten der Testmischungen werden sowohl in einer Zelle mit homöotroper als auch mit homogener Orientierung bestimmt. Die Schichtdicke beträgt bei beiden Zelltypen ca. 20 µm. Die angelegte Spannung ist eine Rechteckwelle mit einer Frequenz von 1 kHz und einem Effektivwert von typischerweise 0,5 V bis 1,0 V, wird jedoch stets so ausgewählt, dass sie unterhalb der kapazitiven Schwelle für die jeweilige Testmischung liegt.

Δε ist als (δ∥ε⊥) definiert, während ε_{Drechschn}. (δ∥2ε⊥)/3 ist.

Als Host-Mischung wird für dielektrisch positive Verbindungen die Mischung ZLI-4792 und für dielektrisch neutrale sowie für dielektrisch negative Verbindungen die Mischung ZLI-3086 verwendet, beide von Merck KGaA, Deutschland. Die absoluten Werte der dielektrischen Konstanten der Verbindungen werden aus der Änderung der jeweiligen Werte der Host-Mischung bei Zugabe der interessierenden Verbindungen bestimmt. Die Werte werden auf eine Konzentration der interessierenden Verbindungen von 100 % extrapoliert.

Komponenten, die bei der Messtemperatur von 20 °C eine nematische Phase aufweisen, werden als solche gemessen, alle anderen werden wie Verbindungen behandelt.

Der Ausdruck Schwellenspannung bezeichnet in der vorliegenden Anmeldung die optische Schwelle und ist für 10 % relativen Kontrast (V₁₀) angegeben, der Ausdruck Sättigungsspannung bezeichnet die optische Sättigung und ist für 90 % relativen Kontrast (V₉₀) angegeben, in beiden Fällen, soweit nicht ausdrücklich etwas anderes angegeben ist, Die kapazitive Schwellenspannung (V₀), auch Freedericks-Schwelle V_{Fr} genannt, wird nur verwendet, wenn dies ausdrücklich genannt ist.

Die in dieser Anmeldung angegebenen Parameterbereiche schließen sämtlich die Grenzwerte ein, wenn nicht ausdrücklich etwas anderes angegeben ist.

Die unterschiedlichen für verschiedene Bereiche von Eigenschaften angegebenen oberen und unteren Grenzwerte ergeben in Kombination miteinander zusätzliche bevorzugte Bereiche.

In der gesamten Anmeldung gelten, wenn nicht ausdrücklich anders angegeben, die folgenden Bedingungen und Definitionen. Alle Konzentrationen sind in Massenprozent angegeben und beziehen sich jeweils auf die Gesamtmischung, alle Temperaturen und alle Temperaturunterschiede sind in Grad Celsius bzw. Differenzgrad angegeben. Alle physikalischen Eigenschaften werden nach "Merck Liquid Crystals, Physical Properties of Liquid Crystals", Stand Nov. 1997, Merck KGaA, Deutschland, bestimmt und sind für eine Temperatur von 20 °C aufgeführt, wenn nicht ausdrücklich anders angegeben. Die optische Anisotropie (Δn) wird bei einer Wellenlänge von 589,3 nm bestimmt. Die dielektrische Anisotropie (Δε) wird bei einer Frequenz von 1 kHz bestimmt. Die Schwellenspannungen sowie alle anderen .elektrooptischen Eigenschaften werden mit bei Merck KGaA, Deutschland, hergestellten Testzellen bestimmt. Die Testzellen für die Bestimmung von Δε besitzen eine Schichtdicke von circa 20 µm. Bei der Elektrode handelt es sich um eine kreisförmige ITO-Elektrode mit einer Fläche von 1,13 cm² und einem Schutzring. Die Ausrichtungsschichten sind SE-1211 von Nissan Chemicals, Japan, für homöotrope Ausrichtung (ε_{||}) und Polyimid AL-1054 von Japan Synthetic Rubber, Japan, für homogene Ausrichtung (ε_{⊥}). Die Bestimmung der Kapazitäten erfolgt mit einem Frequenzgang-Analysegerät Solatron 1260 unter Verwendung einer Sinuswelle mit einer Spannung von 0,3 Vᵣₘₛ. Als Licht wird bei den elektrooptischen Messungen weißes Licht verwendet. Dabei wird ein Aufbau mit einem im Handel erhältlichen Gerät DMS der Fa. Autronic-Melchers, Germany verwendet. Die charakteristischen Spannungen wurden unter senkrechter Beobachtung bestimmt. Die Schwellenspannung (V₁₀), "Mittgrau-Spannung" (V₅₀) und Sättigungsspannung (V₉₀) wurden für 10 %, 50 % bzw. 90 % relativen Kontrast bestimmt.

Die Flüssigkristallmedien gemäß der vorliegenden Erfindung können weitere Zusatzstoffe und chirale Dotierstoffe in den üblichen Konzentrationen beinhalten. Die Gesamtkonzentration dieser weiteren Bestandteile liegt im Bereich von 0 % bis 10 %, vorzugsweise 0,1 % bis 6 %, bezogen auf die Gesamtmischung. Die Konzentrationen der einzelnen verwendeten Verbindungen liegen vorzugsweise jeweils im Bereich von 0,1 % bis 3 %. Die Konzentration dieser und ähnlicher Zusatzstoffe wird bei der Angabe der Werte und Konzentrationsbereiche der Flüssigkristallkomponenten und -verbindungen der Flüssigkristallmedien in dieser Anmeldung nicht berücksichtigt.

Die erfindungsgemäßen Flüssigkristallmedien bestehen aus mehreren Verbindungen, vorzugsweise aus 3 bis 30, stärker bevorzugt aus 4 bis 20 und ganz bevorzugt aus 4 bis 16 Verbindungen. Diese Verbindungen werden auf herkömmliche Weise gemischt. In der Regel wird die gewünschte Menge der in der geringeren Menge verwendeten Verbindung in der in der größeren Menge verwendeten Verbindung gelöst. Liegt die Temperatur über dem Klärpunkt der in der höheren Konzentration verwendeten Verbindung, ist die Vervollständigung des Lösungsvorgangs besonders leicht zu beobachten. Es ist jedoch auch möglich, die Medien auf anderen üblichen Wegen, beispielsweise unter Verwendung von so genannten Vormischungen, bei denen es sich z.B. um homologe oder eutektische Mischungen von Verbindungen handeln kann, oder unter Verwendung von so genannten "Mutti-Bottle"-Systemen, deren Bestandteile selbst gebrauchsfertige Mischungen sind, herzustellen.

Durch Zugabe geeigneter Zusatzstoffe können die Flüssigkristallmedien gemäß der vorliegenden Erfindung so modifiziert werden, dass sie in allen bekannten Arten von Flüssigkristallanzeigen verwendbar sind, entweder durch Verwendung der Flüssigkristallmedien als solcher, wie TN-, TN-AMD, ECB-AMD, VAN-AMD, IPS-AMD, FFS-AMD LCDs oder in Verbundsystemen, wie PDLC, NCAP, PN LCDs und speziell in ASM-PA LCDs.

Alle Temperaturen, wie z.B. der Schmelzpunkt T(K,N) bzw. T(K,S), der Übergang von der smektischen (S) zur nematischen (N) Phase T(S,N) und der Klärpunkt T (N,I) der Flüssigkristalle sind in Grad Celsius angegeben. Alle Temperaturdifferenzen sind in Differenzgraden angegeben.

In der vorliegenden Erfindung und insbesondere in den folgenden Beispielen sind die Strukturen der mesogenen Verbindungen durch Abkürzungen angegeben, die auch als Akronyme bezeichnet werden. In diesen Akronymen sind die chemischen Formeln unter Verwendung der folgenden Tabellen A bis C wie folgt abgekürzt. Alle Gruppen CₙH_{2n+1,} CₘH₂ₘ₊₁ und C₁H₂₁₊₁ bzw. CₙH₂ₙ₋₁, CₘH₂ₘ₋₁ und C₁H₂₁₋₁ bedeuten geradkettiges Alkyl bzw. Alkenyl, vorzugsweise 1-*E*-Alkenyl, jeweils mit n, m bzw. I C-Atomen. In der Tabelle A werden die für die Ringelemente der Kernstrukturen der Verbindungen verwendeten Codes aufgeführt, während in der Tabelle B die Verknüpfungsgruppen gezeigt sind. Tabelle C gibt die Bedeutungen der Codes für die Endgruppen der linken bzw. rechten Seite. In Tabelle D sind Beispielstrukturen von Verbindungen mit ihren jeweiligen Abkürzungen zusammengestellt.

**Tabelle A: Ringelemente**

| | | | |
|---|---|---|---|
| **C** | 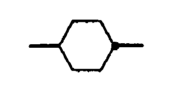 | | |
| **D** | 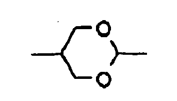 | **DI** | 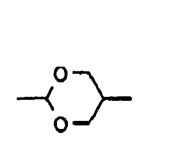 |
| **A** | 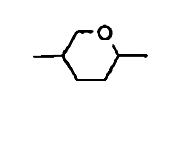 | **Al** | 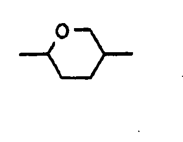 |
| **P** | 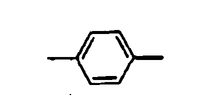 | | |
| **G** | 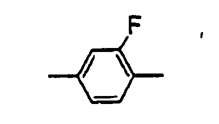 | **Gl** | 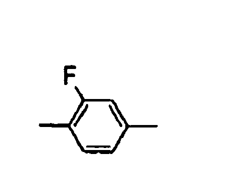 |
| **U** | 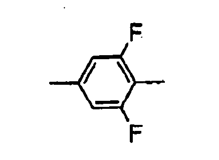 | **Ul** | 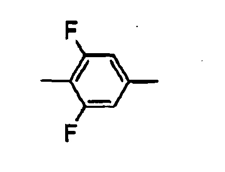 |
| **Y** | 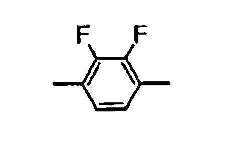 | | |
| **M** | 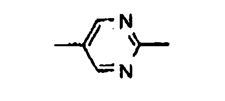 | **Ml** | 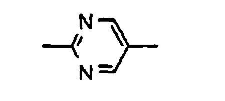 |
| **N** | 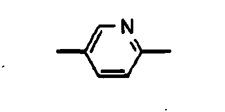 | **Nl** | 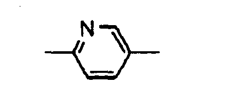 |
| **Np** | 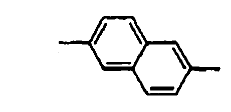 | | |
| **N3f** | 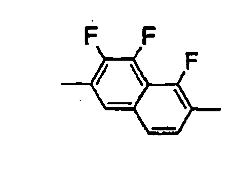 | **N3fl** | 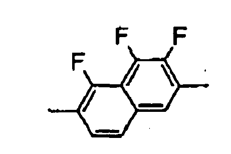 |
| **tH** | 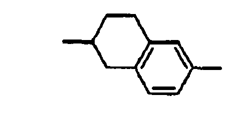 | **tHl** | 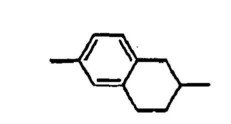 |
| **tH2f** | 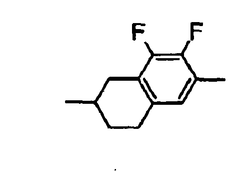 | **tH2fl** | 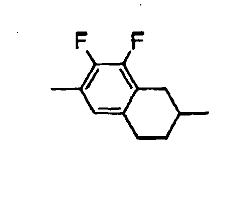 |
| **dH** | 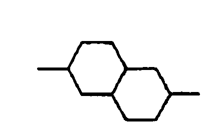 | | |
| **K** | 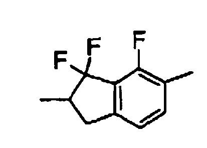 | **KI** | 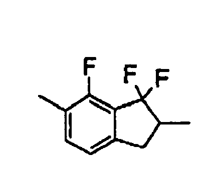 |
| **L** | 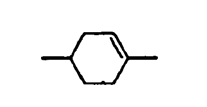 | **LI** | 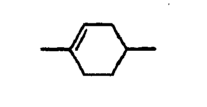 |
| **F** | 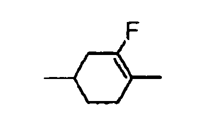 | **FI** | 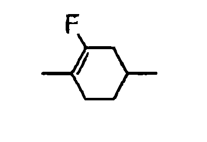 |

**Tabelle B: Verknüpfungsgruppen**

| | | | |
|---|---|---|---|
| **E** | -CH₂CH₂- | **Z** | -CO-O- |
| **V** | -CH=CH- | **ZI** | -O-CO- |
| **X** | -CF=CH- | **O** | -CH₂-O- |
| **XI** | -CH=CF- | **Ol** | -O-CH₂- |
| **B** | -CF=CF- | **Q** | -CF₂-O- |
| **T** | -C=C- | **Ql** | -O-CF₂- |
| **W** | -CF₂CF₂- | **T** | -C≡C- |

**Tabelle C: Endgruppen**

| **Linke Seite** | **Rechte Seite,** | | |
|---|---|---|---|
| | **Verwendung allein** | | |
| **-n-** | CₙH₂n+1- | **-n** | -CₙH₂ₙ₊₁ |
| **-nO-** | CₙH₂ₙ₊₁-O- | **-nO** | -O-CₙH₂ₙ₊₁ |
| **-V-** | CH₂=CH- | **-V** | -CH=CH₂ |
| **-nV-** | CnH₂ₙ₊₁-CH=CH- | **-nV** | -CₙH2ₙ-CH=CH₂ |
| **-Vn-** | CH₂=CH- CₙH₂ₙ₊₁- | **-Vn** | -CH=CH-CₙH₂ₙ₊₁ |
| **-nVm-** | CₙH₂ₙ₊₁-CH=CH-CₘH₂ₘ- | **-nVm** | -CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -CI |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O- | **-OM** | -OCFH₂ |
| -**DO-** | CF₂HO - | **-OD** | -OCF₂H |
| **-TO-** | CF₃O- | **-OT** | -OCF₃ |
| **-OXF-** | CF₂=CH-O- | **-OXF** | -O-CH=CF₂ |
| **-A-** | H-G≡C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |
| | **Verwendung zusammen mit anderen** | | |
| **-...A...-** | -C≡C- | **-...A...** | -C≡C- |
| **-...V...-** | CH=CH- | **-...V...** | -CH=CH- |
| **-...Z...-** | -CO-O- | **-...Z ...** | -CO-O- |
| **-...ZI...-** | -O-CO- | **-...ZI....** | -O-CO- |
| **-...K ...-** | -CO- | **-...K...** | -CO- |
| **-...W...-** | -CF=CF- | **-...W...** | -CF=CF- |

worin n und m jeweils ganze Zahlen bedeuten und die drei Punkte". Platzhalter für andere Abkürzungen aus dieser Tabelle sind.

In der folgenden Tabelle werden Beispielstrukturen zusammen mit ihren jeweiligen Abkürzungen angegeben. Diese werden gezeigt, um die Bedeutung der Regeln für die Abkürzungen zu demonstrieren. Weiterhin stellen sie Verbindungen dar, die vorzugsweise verwendet werden.

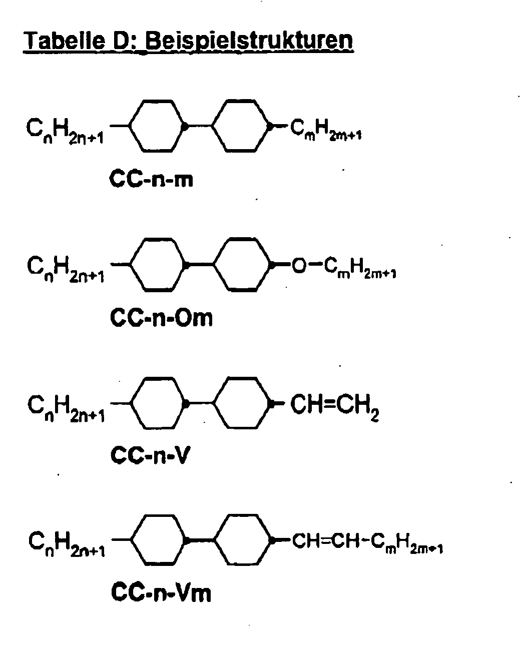

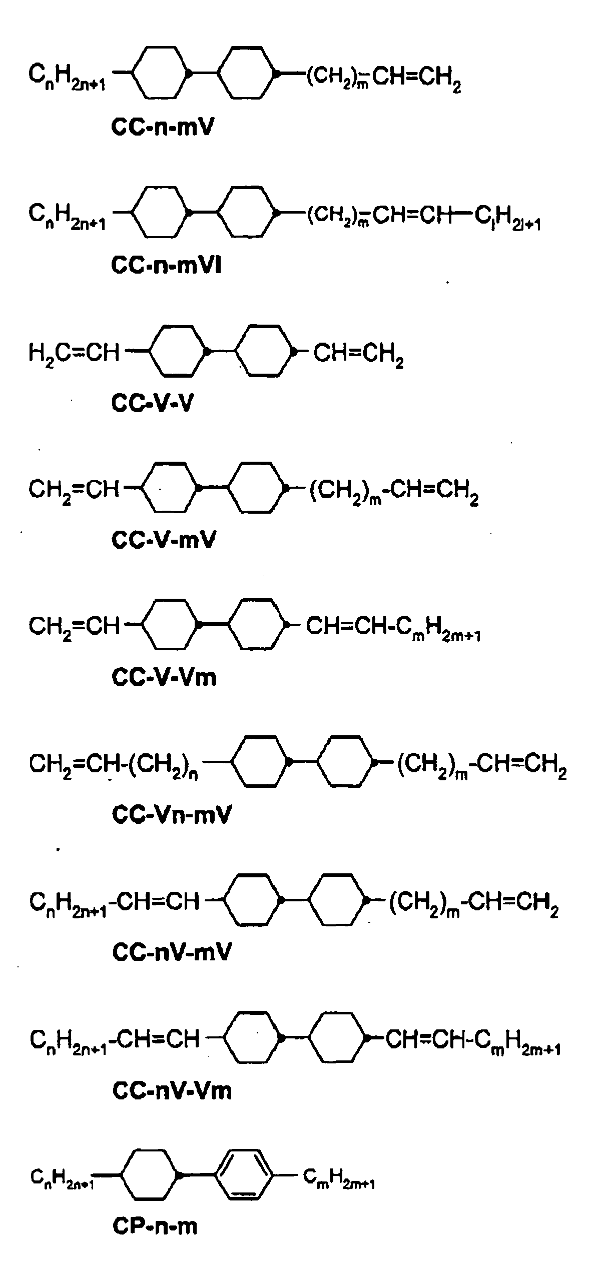

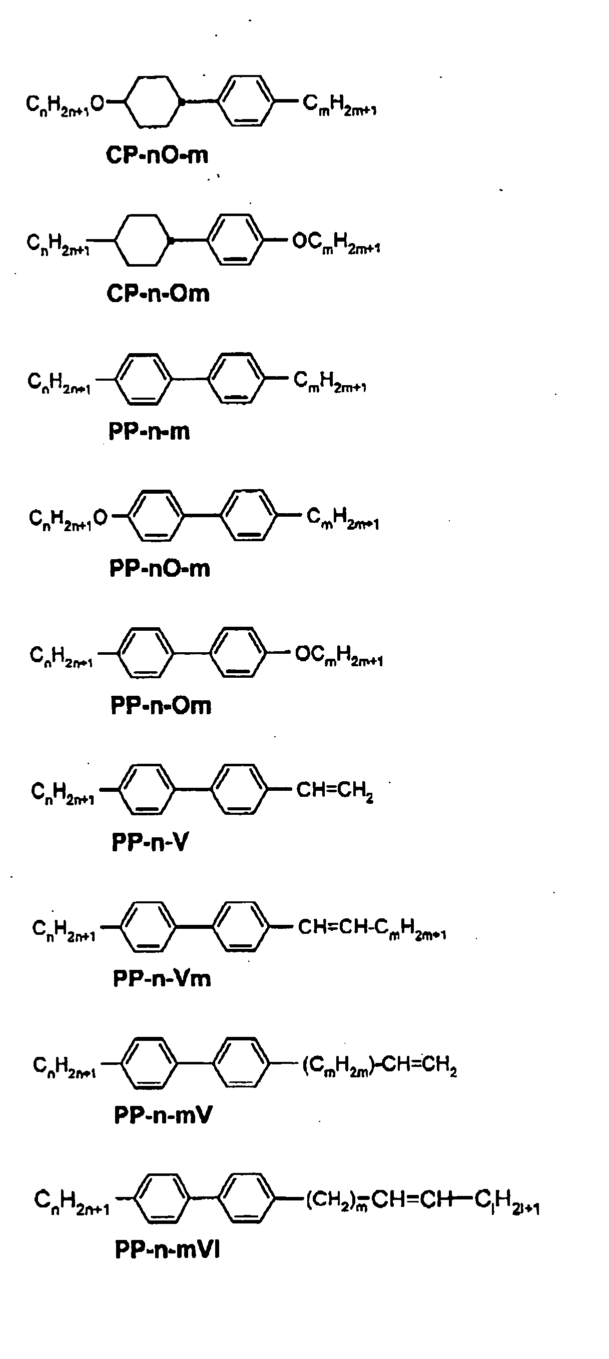

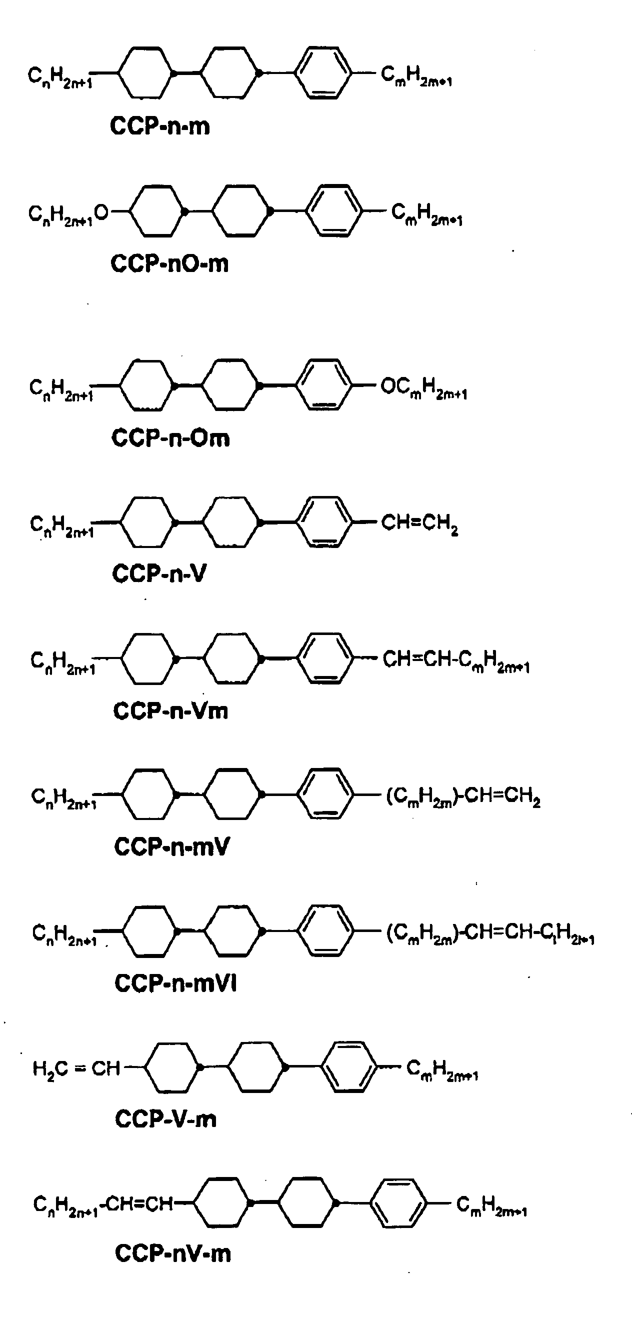

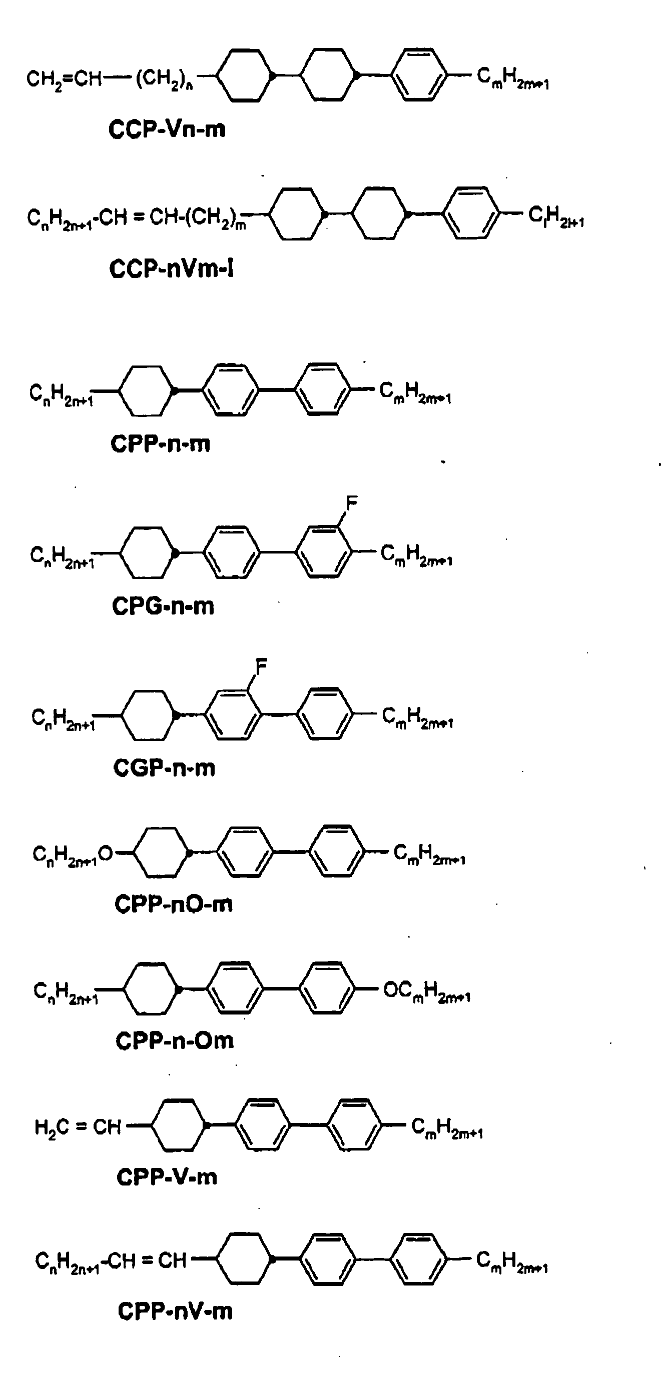

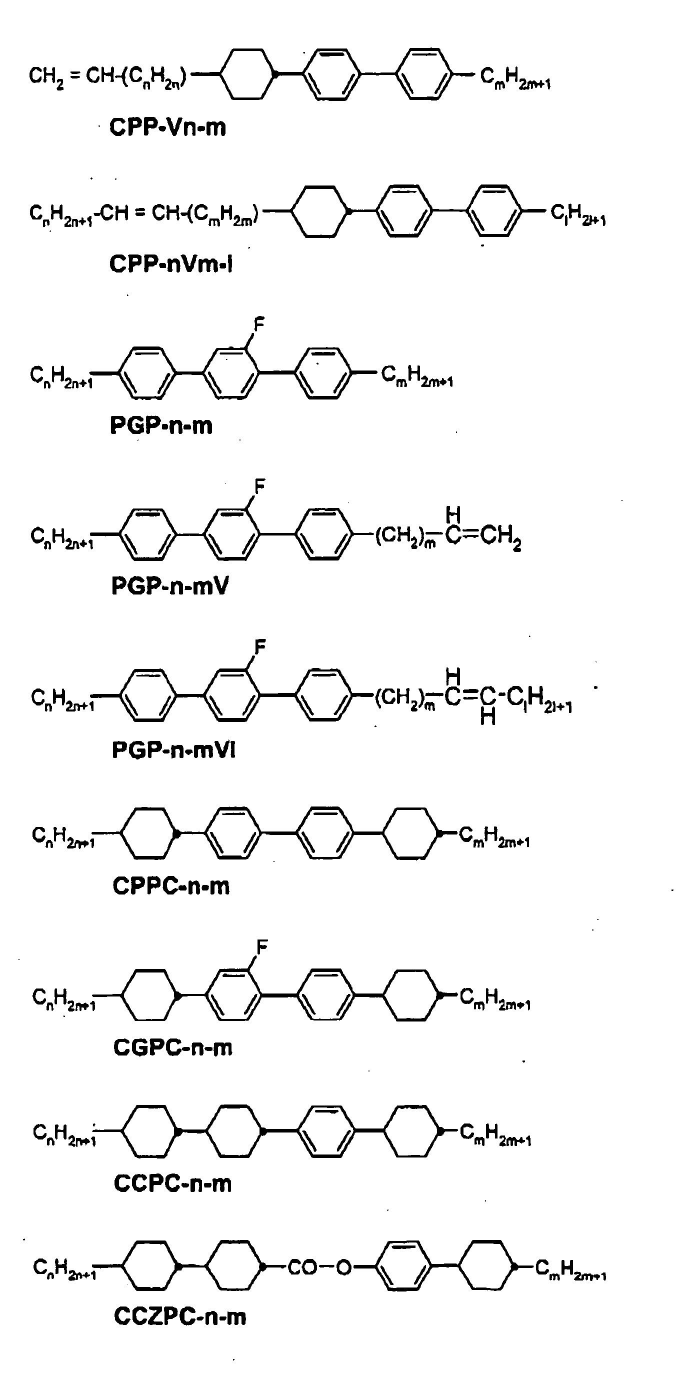

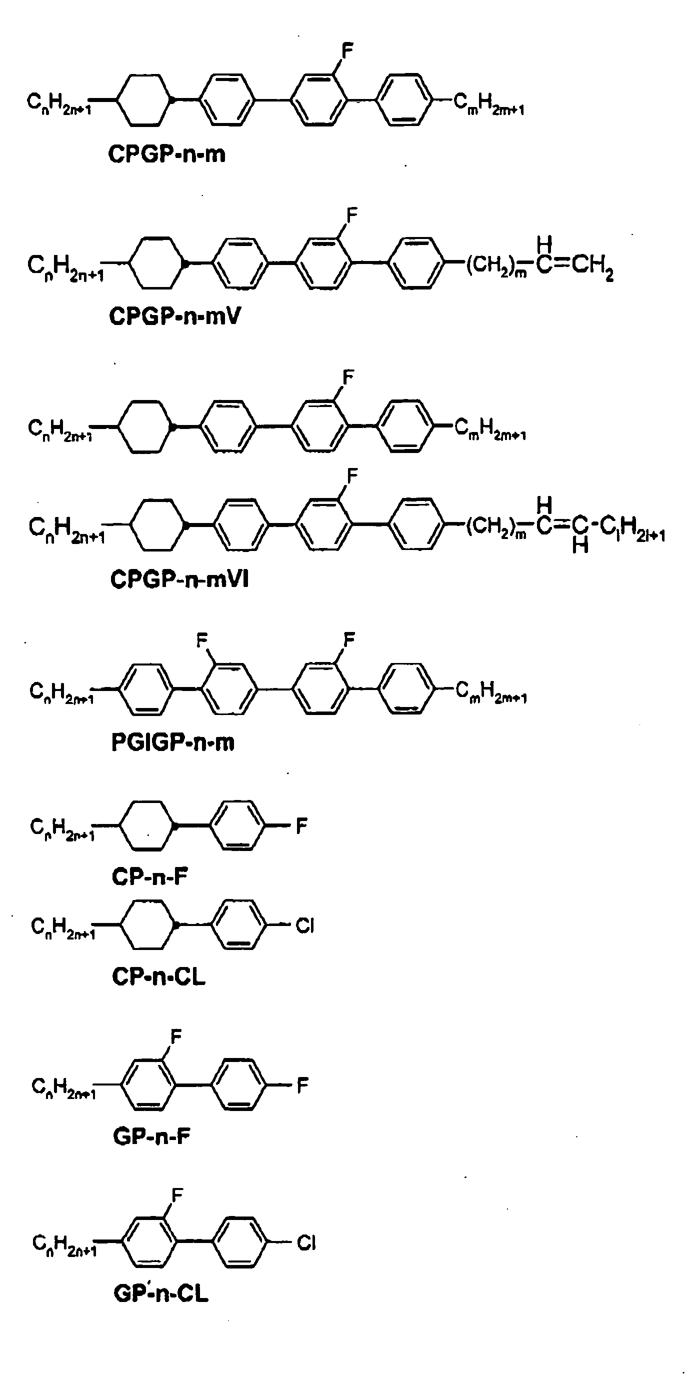

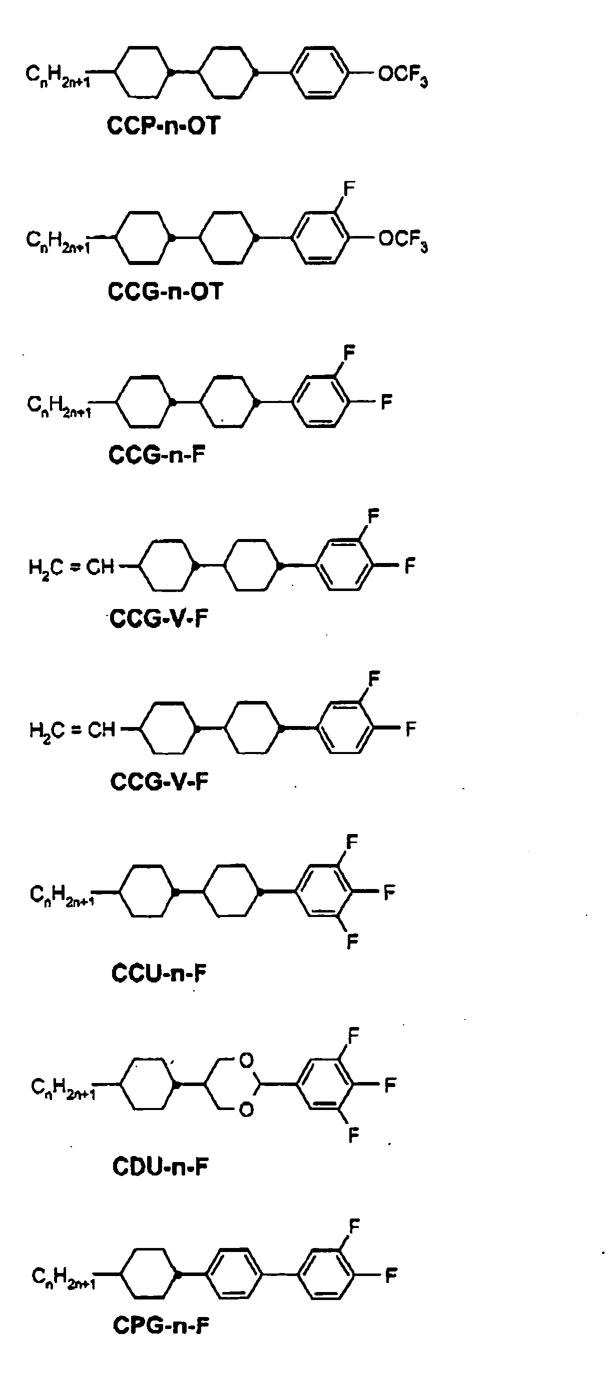

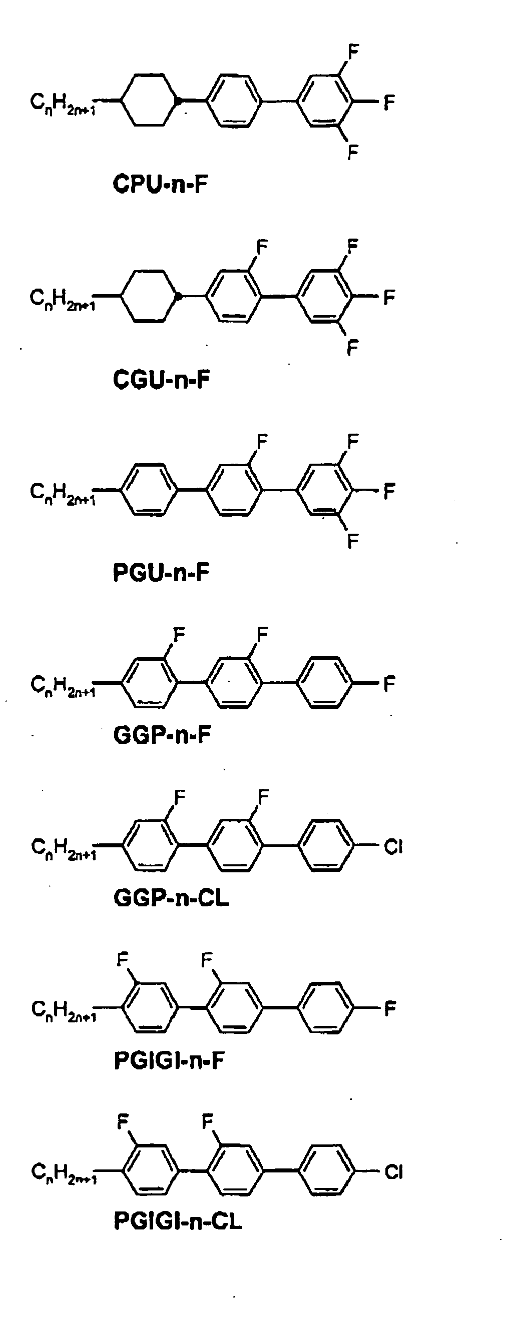

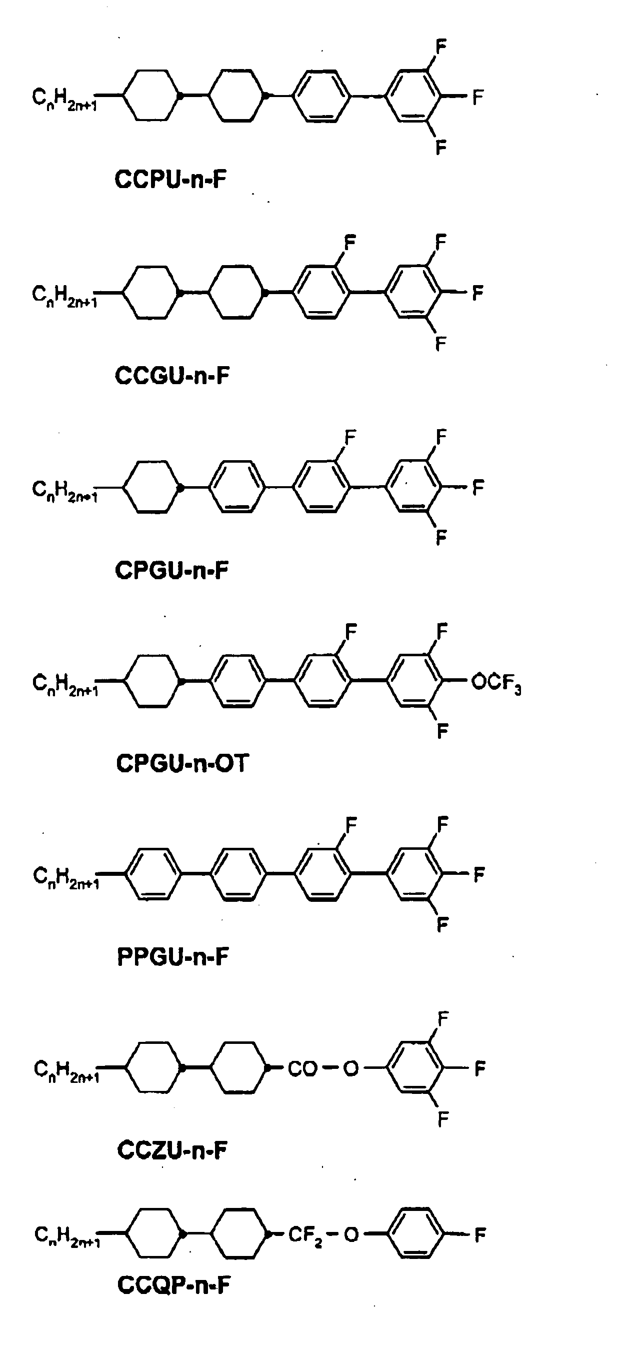

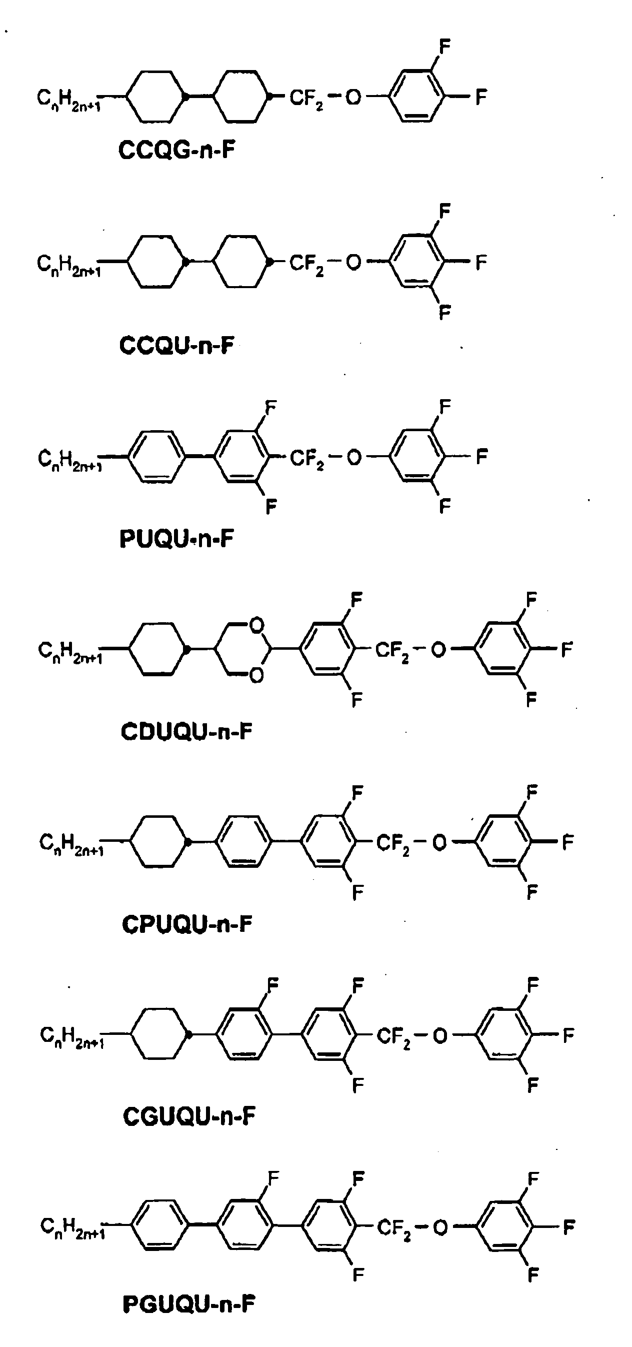

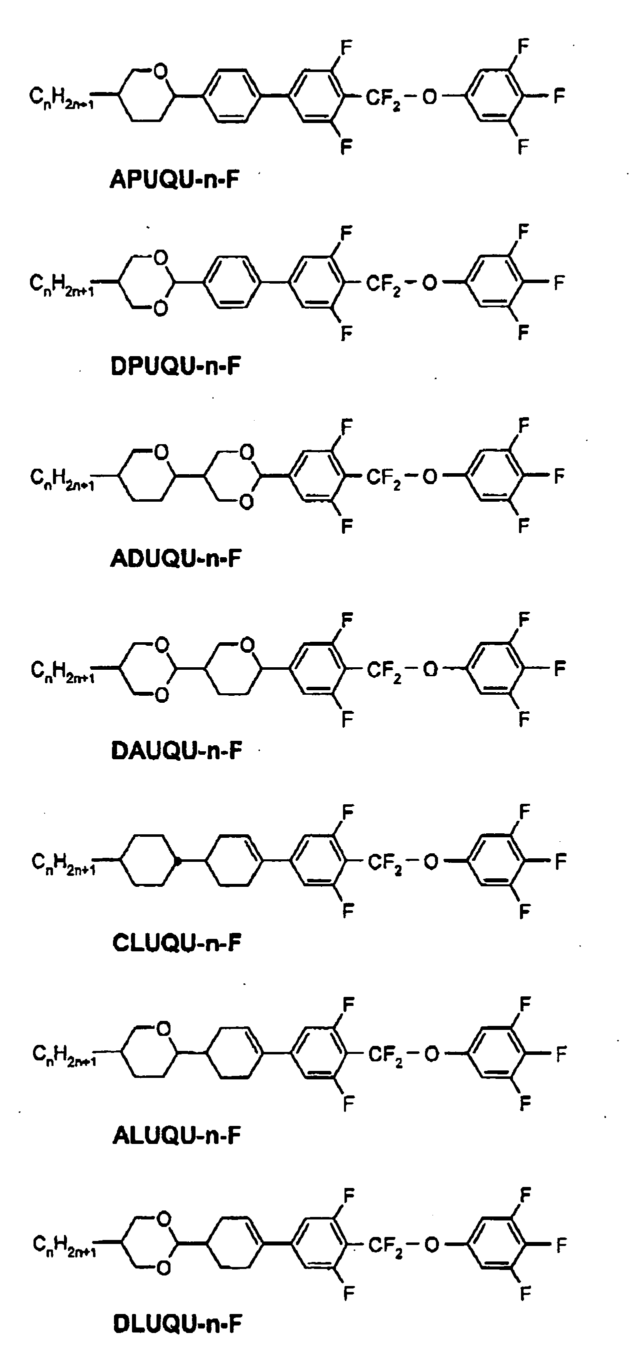

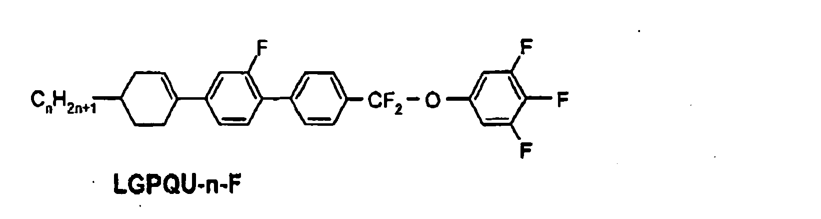

In der folgenden Tabelle, Tabelle E, sind Beispielverbindungen zusammengestellt, die in den mesogenen Medien gemäß der vorliegenden Erfindung als Stabilisator verwendet werden können.

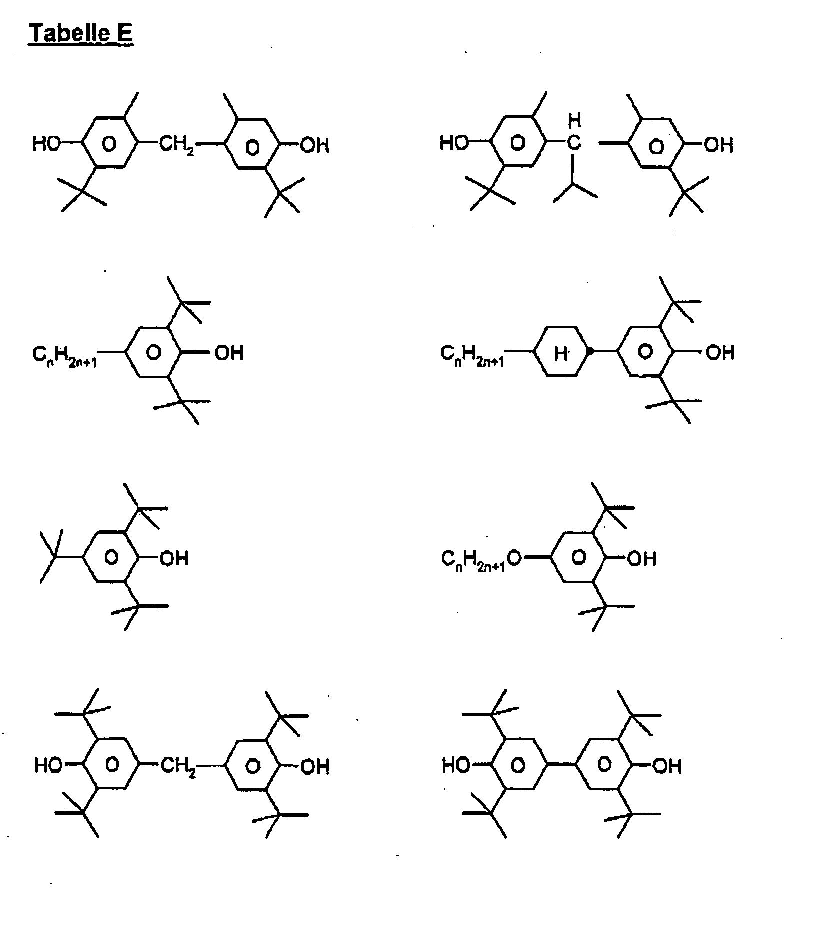

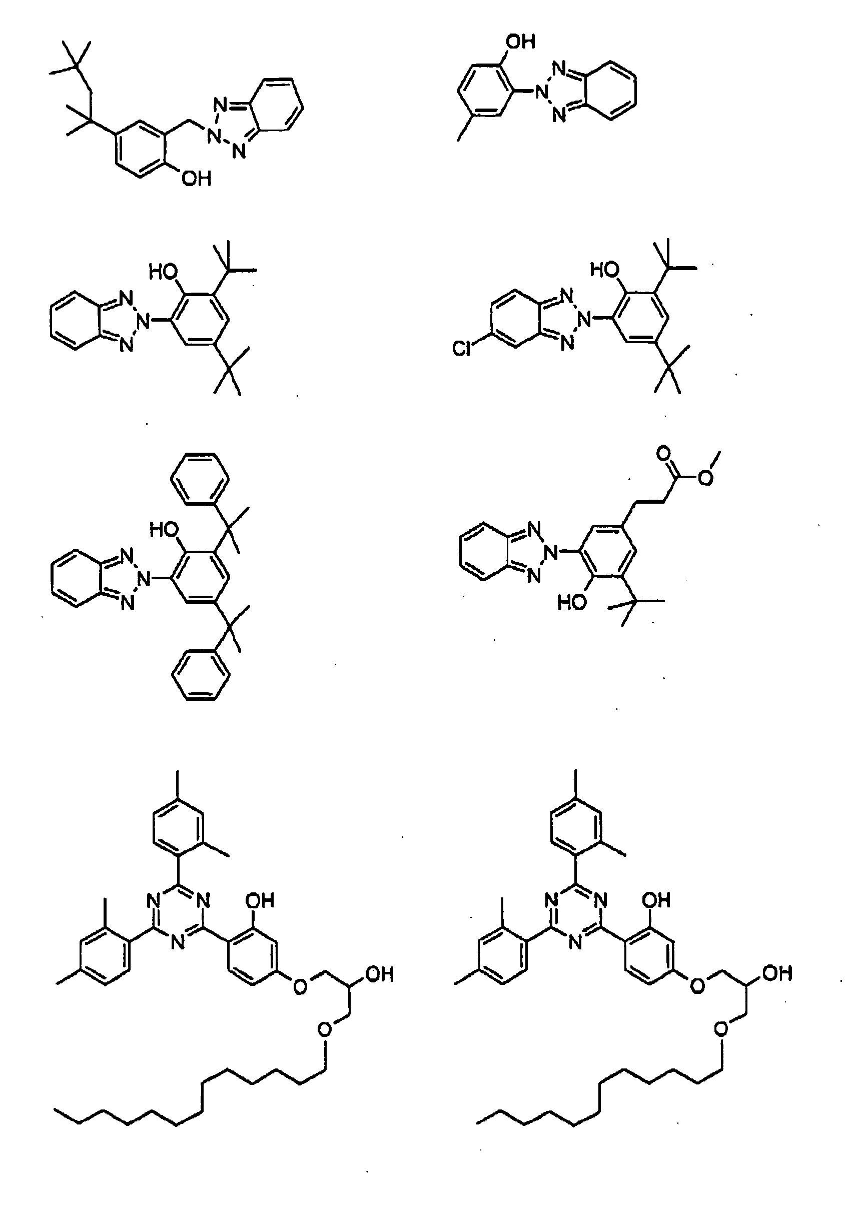

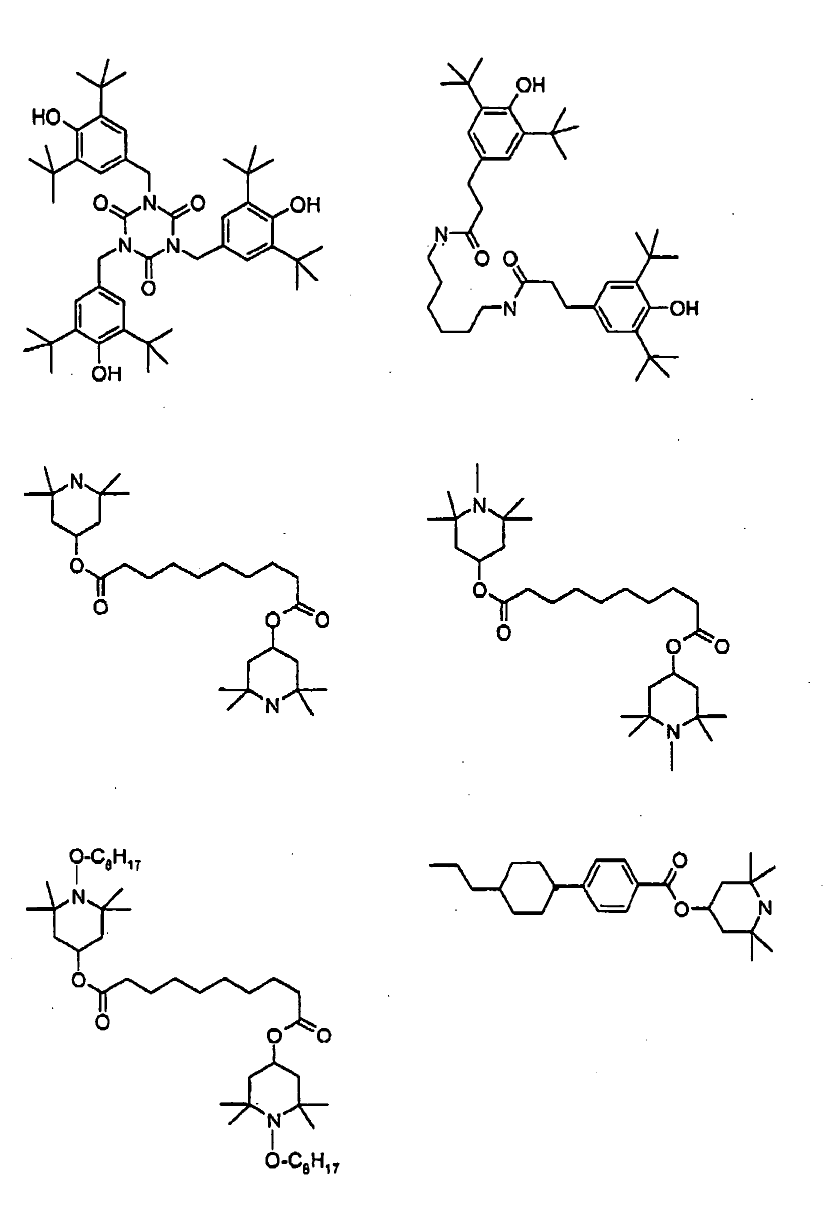

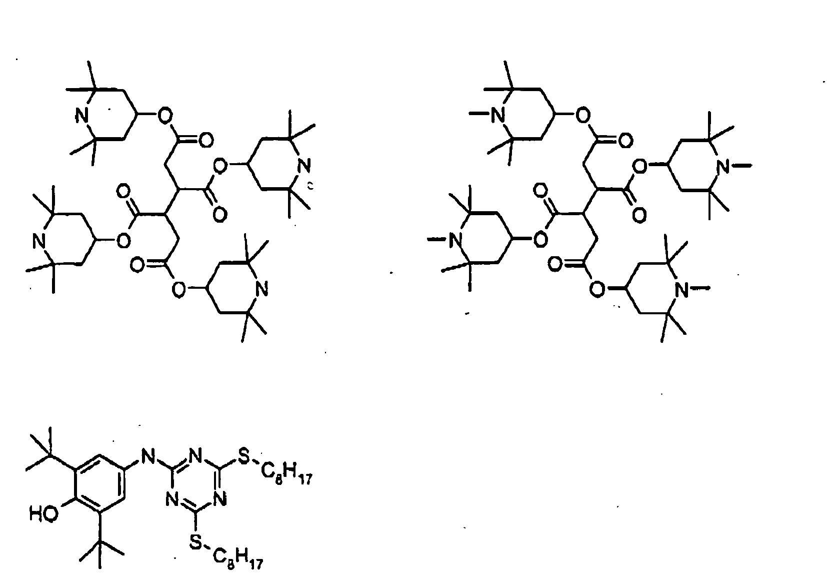

In einer bevorzugten Ausführungsform der vorliegenden Erfindung enthalten die mesogenen Medien eine oder mehere Verbindungen ausgewählt aus des Gruppe der Verbindungen der Tabelle E.

In der folgenden Tabelle, Tabelle F, sind Beispielverbindungen zusammengestellt, die in den mesogenen Medien gemäß der vorliegenden Erfindung vorzugsweise als chirale Dotierstoffe verwendet werden können.

**Tabelle F**

| |
|---|
| 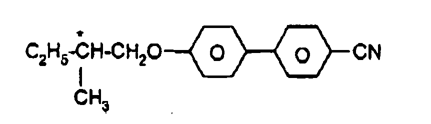 |
| **C15** |
| 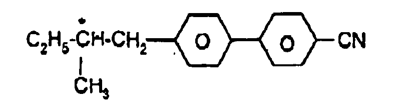 |
| **CB 15** |

| |
|---|
| 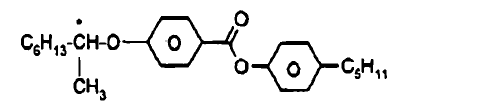 **CM 21** |
| 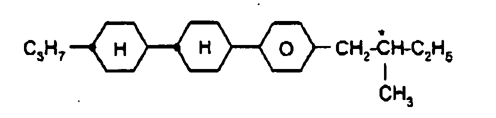 **CM 44** |
| 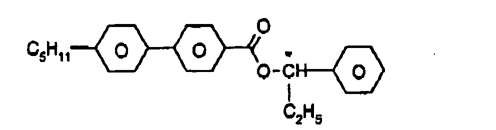 **CM 45** |
| 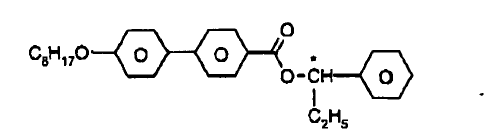 **CM 47** |
| 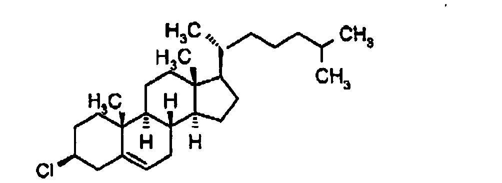 **cc** |
| 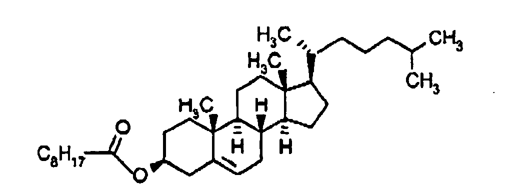 **CN** |

| |
|---|
| 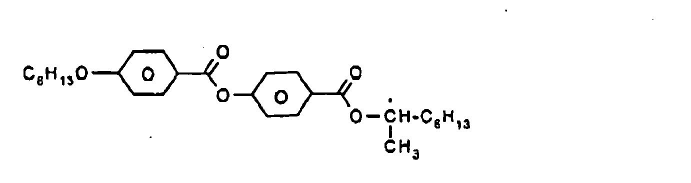 **R/S-811** |
| 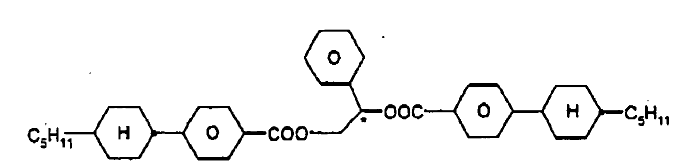 **R/S-1011** |
| 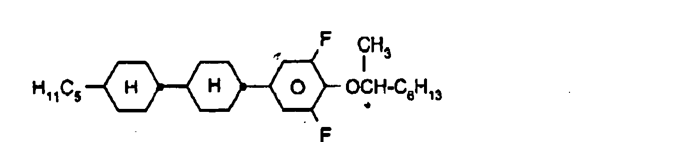 **R/S-2011** |
| 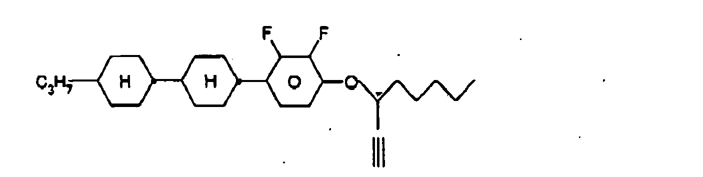 **R/S-3011** |
| 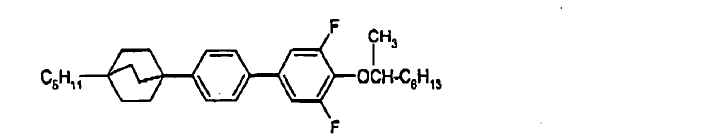 **R/S-4011** |
| 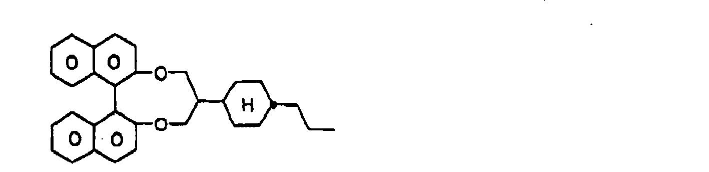 **R/S-5011** |

In einer bevorzugten Ausführungsform der vorliegenden Erfindung enthalten die mesogenen Medien eine oder mehrere Verbindungen ausgewählt aus der Gruppe der Verbindungen der Tabelle F.

Vorzugsweise enthalten die mesogenen Medien gemäß der vorliegenden Anmeldung zwei oder mehr, vorzugsweise vier oder mehr, Verbindungen ausgewählt aus der Gruppe bestehend aus den Verbindungen der obigen Tabellen.

Die Flüssigkristallmedien gemäß der vorliegenden Erfindung enthalten vorzugsweise
- sieben oder mehr, vorzugsweise acht oder mehr Verbindungen, vorzugsweise Verbindungen mit drei oder mehr, vorzugsweise vier oder mehr unterschiedlichen Formeln, ausgewählt aus der Gruppe der Verbindungen der Tabelle D.

### Beispiele

Die folgenden Beispiele erläutern die vorliegende Erfindung, ohne sie in irgendeiner Weise zu beschränken.

Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

### Beispiel 1

Es wird eine Flüssigkristallmischung mit der Zusammensetzung und den Eigenschaften wie in der folgenden Tabelle angegeben hergestellt.

| Zusammensetzung | | | Physikalische Eigenschaften | | | |
|---|---|---|---|---|---|---|
| Verbindung | | | T(N,I) | = | 94,5 | °C |
| Nr. | Abkürzung | | | | | |
| 1 | CPGU-3-OT | 5,0 | Δn (20 °C, 589,3 nm) | = | 0,1020 | |
| 2 | PGUQU-3-F | 7,0 | | | | |
| 3 | APUQU-2-F | 5,0 | ε\|\| (20 °C, 1 kHz) | = | 10,2 | |
| 4 | APUQU-3-F | 7,0 | Δε (20 °C, 1 kHz) | = | 7,2 | |
| 5 | CCQU-3-F | 9,0 | | | | |
| 6 | CC-3-V | 43,5 | γ₁ (20 °C) | = | 74 | mPa·s |
| 7 | CCP-V-1 | 14,0 | | | | |
| 8 | CCP-V2-1 | 5,5 | V₁₀ (20°C) | = | 1,75 | V |
| 9 | PGP-2-3 | 2,0 | V₉₀ (20 °C) | = | 2,62 | V |
| 10 | PGP-2-4 | 2.0 | | | | |
| Σ | | 100,0 | | | | |

Diese Mischung eignet sich sehr gut für Anzeigen im TN-Modus und insbesondere für Anzeigen zur Anwendung in Computermonitoren (5 V Treiber) mit hohem Klärpunkt (breitem Arbeitstemperaturbereich).

### Beispiel 2

Es wird eine Flüssigkristallmischung mit der Zusammensetzung und den Eigenschaften wie in der folgenden Tabelle angegeben hergestellt.

| Zusammensetzung | | | Physikalische Eigenschaften | | | |
|---|---|---|---|---|---|---|
| Verbindung | | | T(N,I) | = | 97,5 | °C |
| Nr. | Abkürzung | | | | | |
| 1 | CPGU-3-OT | 5,0 | Δn (20 °C, 589,3 nm) | = | 0,1038 | |
| 2 | PGUQU-3-F | 6,0 | | | | |
| 3 | APUQU-2-F | 6,0 | ε\|\|(20°C, 1 kHz) | = | 10,0 | |
| 4 | APUQU-3-F | 6,0 | Δε (20 °C, 1 kHz) | = | 6,9 | |
| 5 | CCQU-3-F | 11,0 | | | | |
| 6 | CC-3-V | 44,0 | γ₁ (20°C) | = | 74 | mPa.s |
| 7 | CCP-V-1 | 15,0 | | | | |
| 8 | PGP-2-3 | 2,0 | V₁₀ (20 °C) | = | 1,74 | V |
| 9 | PGP-2-4 | 2,0 | V₉₀ (20 °C) | **=** | 2,65 | V |
| 10 | CPGP-4-3 | 3,0 | | | | |
| Σ | | 100.0 | | | | |

Diese Mischung eignet sich sehr gut für Anzeigen im TN-Modus und insbesondere für Anzeigen zur Anwendung in Computermonitoren (5 V Treiber) mit hohem Klärpunkt (breitem Arbeitstemperaturbereich).

### Beispiel 3

Es wird eine Flüssigkristallmischung mit der Zusammensetzung und den Eigenschaften wie in der folgenden Tabelle angegeben hergestellt.

| Zusammensetzung | | | Physikalische Eigenschaften | | | |
|---|---|---|---|---|---|---|
| Verbindung | | | T(N,I) | = | 75 | °C |
| Nr. | Abkürzung | | | | | |
| 1 | CPGU-3-OT | 6,0 | Δn (20 °C, 589,3 nm) | = | 0,1268 | |
| 2 | PGUQU-3-F | 7,0 | | | | |
| 3 | APUQU-3-F | 10,0 | ε\|\| (20 °C, 1 kHz) | = | 12,8 | |
| 4 | PUQU-3-F | 5,5 | Δε (20 °C, 1 kHz) | = | 9,3 | |
| 5 | PGU-3-F | 9,0 | | | | |
| 6 | CC-3-V | 46,0 | γ₁ (20 °C) | = | 65 | mPa · s |
| 7 | CCP-V-1 | 2,5 | | | | |
| 8 | PGP-2-3 | 4,0 | V₁₀ (20°C) | = | 1,41 | V |
| 9 | PGP-2-4 | 5,0 | V₉₀ (20 °C) | = | 2,10 | V |
| 10 | PGP-2-5 | 5.0 | | | | |
| Σ | | 100.0 | | | | |

Diese Mischung eignet sich sehr gut für Anzeigen im TN-Modus und insbesondere für Anzeigen zur Anwendung in "Note Books" (4 V Treiber).

### Beispiel 4

Es wird eine Flüssigkristallmischung mit der Zusammensetzung und den Eigenschaften wie in der folgenden Tabelle angegeben hergestellt

| Zusammensetzung | | | Physikalische Eigenschaften | | | |
|---|---|---|---|---|---|---|
| Verbindung | | | T(N,I) | = | 75 | °C |
| Nr. | Abkürzung | | | | | |
| 1 | CPGU-3-OT | 5,0 | Δn (20 °C, 589,3 nm) | = | 0,1278 | |
| 2 | PGUQU-3-F | 6,5 | | | | |
| 3 | APUQU-3-F | 4,0 | ε\|\| (20 °C, 1 kHz) | = | 8.3 | |
| 4 | PGU-3-F | 8,5 | Δε (20 °C, 1 kHz) | = | 5,2 | |
| 5 | CC-3-V | 53,0 | | | | |
| 6 | PGP-2-3 | 6,0 | γ₁ (20°C) | = | 55 | mPa·s |
| 7 | PGP-2-4 | 7,0 | | | | |
| 8 | PGP-2-5 | 10.0 | V₁₀ (20°C) | = | 1,81 | V |
| Σ | | 100.0 | V₉₀ (20 °C) | = | 2,65 | V |

Diese Mischung eignet sich sehr gut für Anzeigen im TN-Modus und insbesondere für Anzeigen zur Anwendung in Computermonitoren (6 V Treiber).

### Beispiel 5

Es wird eine Flüssigkristallmischung mit der Zusammensetzung und den Eigenschaften wie in der folgenden Tabelle angegeben hergestellt.

| Zusammensetzung | | | Physikalische Eigenschaften | | | |
|---|---|---|---|---|---|---|
| Verbindung | | | T(N,I) | = | 76 | °C |
| Nr. | Abkürzung | | | | | |
| 1 | CPGU-3-OT | 5,0 | Δn (20 °C, 589,3 nm) | = | 0,1052 | |
| 2 | PGUQU-3-F | 7,0 | | | | |
| 3 | APUQU-2-F | 9,0 | ε\|\| (20°C, 1 kHz) | = | 18,1 | |
| 4 | APUQU-3-F | 9,0 | Δε (20 °C, 1 kHz) | = | 14.2 | |
| 5 | CCQU-3-F | 9,0 | | | | |
| 6 | PUQU-3-F | 14,0 | γ₁ (20 °C) | = | 80 | mPa · s |
| 7 | CC-3-V | 38,0 | | | | |
| 8 | CCP-V-1 | 9,0 | V₁₀ (20°C) | = | 1,13 | V |
| Σ | | 100,0 | V₉₀ (20 °C) | = | 1.73 | V |

Diese Mischung eignet sich sehr gut für Anzeigen im TN-Modus und insbesondere für Anzeigen zur Anwendung in Notebooks (insbesondere mit 3,3 V Treibern).

### Beispiel 6

Es wird eine Flüssigkristallmischung mit der Zusammensetzung und den Eigenschaften wie in der folgenden Tabelle angegeben hergestellt.

| Zusammensetzung | | | Physikalische_Eigenschaften | | | |
|---|---|---|---|---|---|---|
| Verbindung | | | T(N,l) | = | 75 | °C |
| Nr. | Abkürzung | | | | | |
| 1 | CPGU-3-OT | 5,0 | Δn (20 °C, 589,3 nm) | **=** | 0,1130 | |
| 2 | CG UQU-3-F | 9,0 | | | | |
| 3 | PGUQU-3-F | 7,0 | ε\|\| (20 °C, 1 kHz) | = | 21,6 | |
| 4 | APUQU-2-F | 7,0 | Δε (20 °C, 1 kHz) | = | 17,2 | |
| 5 | APUQU-3-F | 7,0 | | | | |
| 6 | ACQU-2-F | 8,0 | γ₁ (20 °C) | = | 98 | mpa · s |
| 7 | PUQU-3-F | 11,0 | | | | |
| 8 | PGU-3-F | 4,0 | V₁₀ (20 °C) | = | 1,01 | V |
| 9 | CC-3-V | 32,0 | V₉₀ (20 °C) | = | 1,55 | V |
| 10 | CCP-V-1 | 9,0 | | | | |
| Σ | | 100,0 | | | | |

Diese Mischung eignet sich sehr gut für Anzeigen im TN-Modus und insbesondere für Anzeigen zur Anwendung in Notebooks (insbesondere mit 2,5 V Treibern).

### Beispiel 7

Es wird eine Flüssigkristallmischung mit der Zusammensetzung und den Eigenschaften wie in der folgenden Tabelle angegeben hergestellt.

| Zusammensetzung | | | Physikalische Eigenschaften | | | |
|---|---|---|---|---|---|---|
| Verbindung | | | T(N,I) | = | 75.5 | °C |
| Nr. | Abkürzung | | | | | |
| 1 | CPGU-3-OT | 4,0 | Δn (20 °C, 589,3 nm) | = | 0.1125 | |
| 2 | CGUQU-3-F | 9,0 | | | | |
| 3 | PGUQU-3-F | 9,0 | ε\|\| (20 °C, 1 kHz) | = | 23,6 | |
| 4 | APUQU-2-F | 8,0 | Δε (20 °C, 1 kHz) | = | 19,1 | |
| 5 | APUQU-3-F | 8,0 | | | | |
| 6 | ACQU-2-F | 10.0 | γ₁(20°C) | = | 107 | mPa · s |
| 7 | PUQU-3-F | 13,0 | | | | |
| 8 | CC-3-V | 30,0 | V₁₀ (20 °C) | = | 0.97 | V |
| 9 | CCP-V-1 | 9,0 | V₉₀ (20 °C) | = | 1,50 | V |
| Σ | | 100,0 | | | | |

Diese Mischung eignet sich sehr gut für Anzeigen im TN-Modus und insbesondere für Anzeigen zur Anwendung in Notebooks (insbesondere mit 2,5 V Treibern).

### Beispiel 8

Es wird eine Flüssigkristallmischung mit der Zusammensetzung und den Eigenschaften wie in der folgenden Tabelle angegeben hergestellt.

| Zusammensetzung | | | Physikalische Eigenschaften | | | |
|---|---|---|---|---|---|---|
| Verbindung | | | T(N,I) | = | 74,0 | °C |
| Nr. | Abkürzung | | T(S,N) | < | -40 | °C |
| 1 | CPGU-3-OT | 3,0 | | | | |
| 2 | PGUQU-3-F | 7,0 | Δn (20 °C, 589,3 nm) | = | 0,1144 | |
| 3 | CDUQU-3-F | 9,0 | | | | |
| 4 | APUQU-2-F | 7,0 | ε\|\| (20 °C, 1 kHz) | = | 22,0 | |
| 5 | APUQU-3-F | 8,0 | Δε (20 °C, 1 kHz) | = | 17,6 | |
| 6 | ACQU-2-F | 2,0 | | | | |
| 7 | PUQU-3-F | 14,0 | γ₁ (20 °C) | = | 93 | mPa · s |
| 8 | PGU-3-F | 7,0 | | | | |
| 9 | CC-3-V | 33,0 | V₁₀ (20°C) | **=** | 1,02 | V |
| 10 | CCP-V-1 | 10,0 | V₉₀ (20°C) | = | 1,56 | V |
| Σ | | 100,0 | | | | |

Diese Mischung eignet sich sehr gut für Anzeigen im TN-Modus und insbesondere für Anzeigen zur Anwendung in Notebooks (insbesondere mit 2,5 V Treibern).

### Beispiel 9

Es wird eine Flüssigkristallmischung mit der Zusammensetzung und den Eigenschaften wie in der folgenden Tabelle angegeben hergestellt.

| Zusammensetzung | | | Physikalische Eigenschaften | | | |
|---|---|---|---|---|---|---|
| Verbindung | | | T(N,I) | = | 73,5 | °C |
| Nr. | Abkürzung | | T(S,N) | < | -40 | °C |
| 1 | CPGU-3-OT | 3,0 | | | | |
| 2 | PGUQU-3-F | 8,0 | Δn (20 °C, 589,3 nm) | = | 0,1140 | |
| 3 | CDUQU-3-F | 9,0 | | | | |
| 4 | APUQU-2-F | 6,0 | ε\|\| (20 °C, 1 kHz) | = | 22,0 | |
| 5 | APUQU-3-F | 8,0 | Δε (20 °C, 1 kHz) | = | 17,6 | |
| 6 | ACQU-2-F | 2,0 | | | | |
| 7 | PUQU-3-F | 15,0 | γ₁ (20°C) | = | 92 | mPa · s |
| 8 | DGU-3-F | 6,0 | | | | |
| 9 | CC-3-V | 33,0 | V₁₀ (20 °C) | = | 1,00 | V |
| 10 | CCP-V-1 | 10,0 | V₉₀ (20 °C) | = | 1,54 | V |
| Σ | | 100,0 | | | | |

Diese Mischung eignet sich sehr gut für Anzeigen im TN-Modus und insbesondere für Anzeigen zur Anwendung in Notebooks (insbesondere mit 2,5 V Treibern).

### Beispiel 10

Es wird eine Flüssigkristallmischung mit der Zusammensetzung und den Eigenschaften wie in der folgenden Tabelle angegeben hergestellt.

| Zusammensetzung | | | Physikalische Eigenschaften | | | |
|---|---|---|---|---|---|---|
| Verbindung | | | T(N,I) | = | 74,0 | °C |
| Nr. | Abkürzung | | T(S,N) | < | -40 | °C |
| 1 | CPGU-3-OT | 4,0 | | | | |
| 2 | PGUQU-3-F | 8,0 | Δn (20 °C, 589,3 nm) | = | 0,1117 | |
| 3 | CDUQU-3-F | 8,0 | | | | |
| 4 | APUQU-2-F | 7,0 | ε\|\| (20°C, 1 kHz) | = | 22.5 | |
| 5 | APUQU-3-F | 8,0 | Δε (20 °C. 1 kHz) | = | 18,0 | |
| 6 | ACQU-2-F | 9,0 | | | | |
| 7 | PUQU-3-F | 10,0 | γ1 (20°C) | = | 98 | mPa·S |
| 8 | PGU-3-F | 7,0 | | | | |
| 9 | CC-3-V | 33,0 | V₁₀ (20°C) | = | 1.00 1,00 | V |
| 10 | CCP-V-1 | 7,0 | V₉₀ (20°C) | = | 1,54 | V |
| Σ | | 100,0 | | | | |

Diese Mischung eignet sich sehr gut für Anzeigen im TN-Modus und insbesondere für Anzeigen zur Anwendung in Notebooks (insbesondere mit 2,5 V Treibern).

### Beispiel 11

Es wird eine Flüssigkristallmischung mit der Zusammensetzung und den Eigenschaften wie in der folgenden Tabelle angegeben hergestellt.

| Zusammensetzung | | | Physikalische Eigenschaften | | | |
|---|---|---|---|---|---|---|
| Verbindung | | | T(N,I) | = | 75,5 | °C |
| Nr. | Abkürzung | | T(S,N) | < | -40 | °C |
| 1 | CPGU-3-OT | 3,0 | | | | |
| 2 | PGUQU-3-F | 8,0 | Δn (20 °C, 589,3 nm) | = | 0,1128 | |
| 3 | CDUQU-3-F | 8,0 | | | | |
| 4 | APUQU-2-F | 6,0 | ε\|\| (20°C.1kHz) | = | 22,8 | |
| 5 | APUQU-3-F | 8,0 | Δε (20 °C, 1 kHz) | = | 18,3 | |
| 6 | ACQU-2-F | 9,0 | | | | |
| 7 | PUQU-3-F | 11,0 | γ1 (20 °C) | = | 101 | mPa · s |
| 8 | PGU-3-F | 7,0 | | | | |
| 9 | CC-3-V | 31,0 | V₁₀ (20 °C) | = | 0,99 | V |
| 10 | CCP-V-1 | 9,0 | V₉₀ (20 °C) | = | 1,55 | V |
| Σ | | 100,0 | | | | |

Diese Mischung eignet sich sehr gut für Anzeigen im TN-Modus und insbesondere für Anzeigen zur Anwendung in Notebooks (insbesondere mit 2,5 V Treibern).

### Beispiel 12

Es wird eine Flüssigkristallmischung mit der Zusammensetzung und den Eigenschaften wie in der folgenden Tabelle angegeben hergestellt.

| Zusammensetzung | | | Physikalische Eigenschaften | | | |
|---|---|---|---|---|---|---|
| Verbindung | | | T(N,I) | = | 74,5 | °C |
| Nr. | Abkürzung | | T(S,N) | < | -40 | °C |
| 1 | CPGU-3-OT | 3,0 | | | | |
| 2 | PGUQU-3-F | 8,0 | Δn (20 °C, 589,3 nm) | = | 0,1122 | |
| 3 | CDUQU-3-F | 8,0 | | | | |
| 4 | APUQU-2-F | 6,0 | ε\|\| (20°C, 1 kHz) | = | 24,4 | |
| 5 | APUQU-3-F | 8,0 | Δε (20 °C, 1 kHz) | = | 19,7 | |
| 6 | ACQU-2-F | 4,0 | | | | |
| 7 | ACQU-3-F | 10,0 | γ₁ (20°C) | = | 109 | mPa · s |
| 8 | PUQU-3-F | 9,0 | | | | |
| 9 | PGU-3-F | 87,0 | | | | |
| 10 | CC-3-V | 28,5 | V₁₀ (20°C) | = | 0,95 | V |
| 11 | CCP-V-1 | 7,5 | V₉₀ (20 °C) | = | 1,47 | V |
| Σ | | 100,0 | | | | |

Diese Mischung eignet sich sehr gut für Anzeigen im TN-Modus und insbesondere für Anzeigen zur Anwendung in Notebooks (insbesondere mit 2,5 V Treibern).

## Patentansprüche

1. Flüssigkristallmedium, **dadurch gekennzeichnet, dass** es folgende Komponenten enthält
- eine erste dielektrisch positive Komponente, Komponente A, enthaltend eine oder mehrere dielektrisch positive Verbindungen der Formel IA, eine oder mehrere dielektrisch positive Verbindungen der Formel IB und eine oder mehrere dielektrisch positive Verbindungen der Formel IC 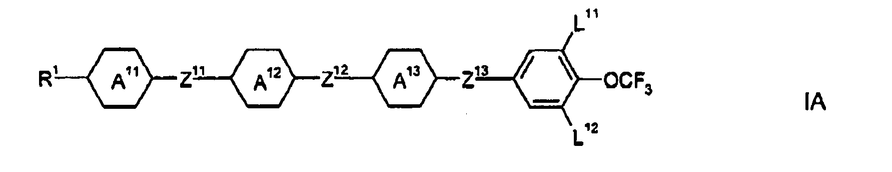 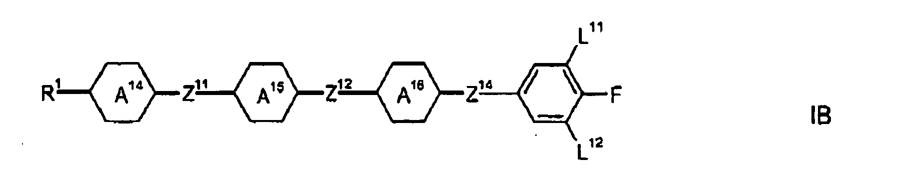 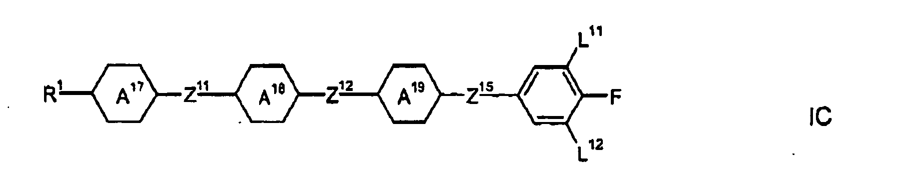 worin
R¹ Alkyl, Alkoxy, fluoriertes Alkyl oder fluoriertes Alkoxy mit 1 bis 7 Atomen, Alkenyl, Alkenyloxy, Alkoxyalkyl oder fluoriertes Alkenyl mit 2 bis 7 Atomen, 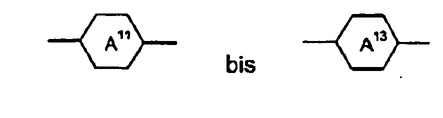
unabhängig voneinander 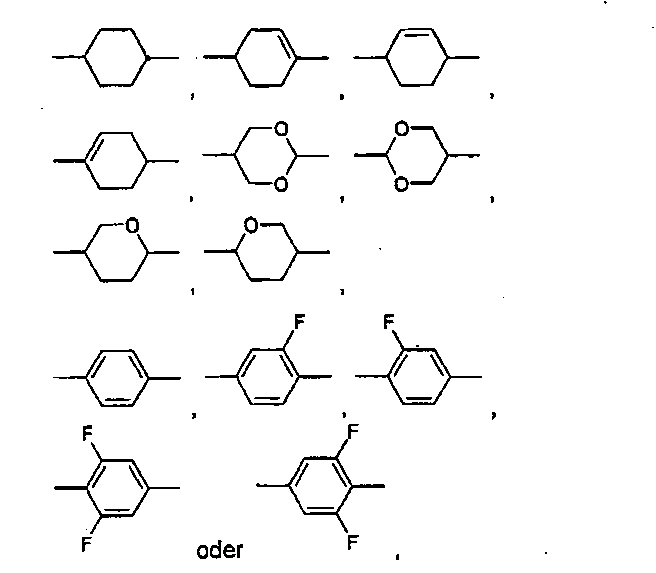 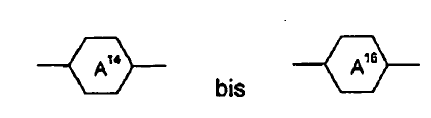 unabhängig voneinander 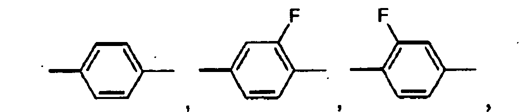 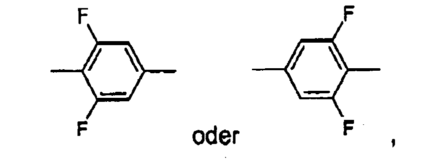 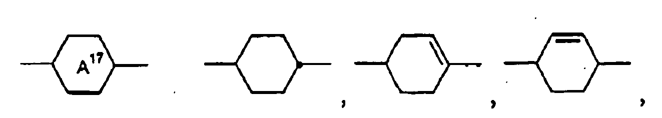 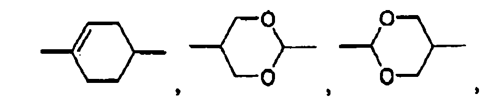 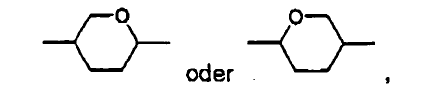 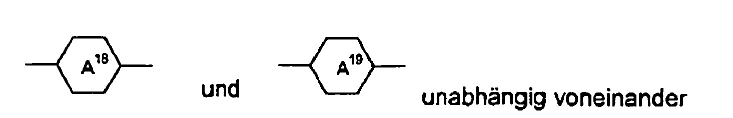 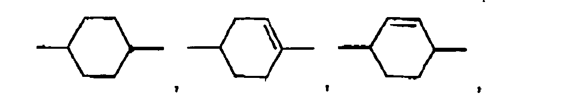 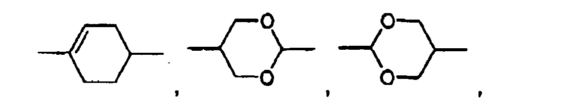 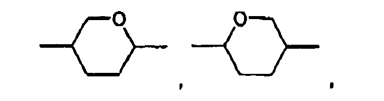 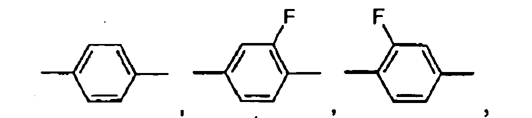 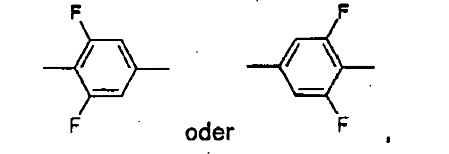
Z¹¹ bis Z¹⁵ unabhängig voneinander -CH₂CH₂-, -CF₂CF₂-, -COO-, *trans-* -CH=CH-, *trans*-CF=CF-, -CH₂O-, -CF₂O- oder eine Einfachbindung,
L¹¹ und L¹² unabhängig voneinander H, F oder CI und
- gegebenenfalls eine zweite dielektrisch positive Komponente, Komponente B, enthaltend eine oder mehrere dielektrisch positive Verbindungen, vorzugsweise ausgewählt aus der Gruppe der Verbindungen der Formeln II und III 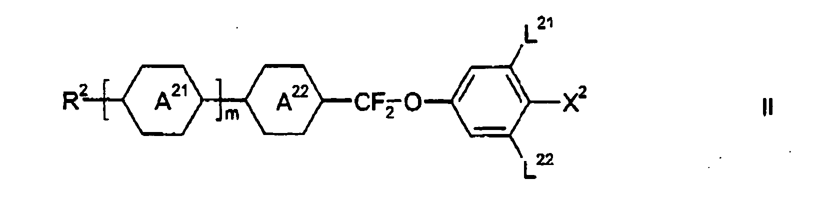 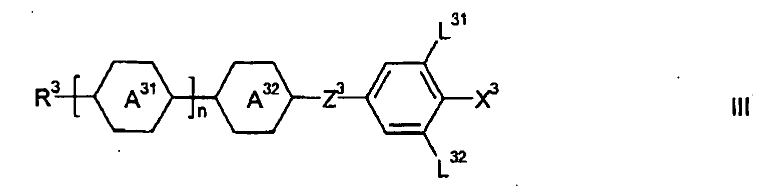 worin
R² und R³ unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten, 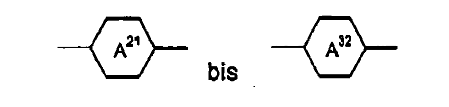
bei jedem Erscheinen unabhängig voneinander 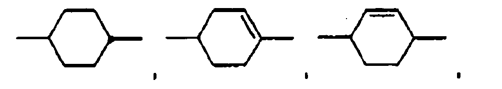 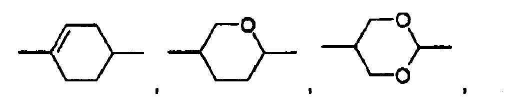 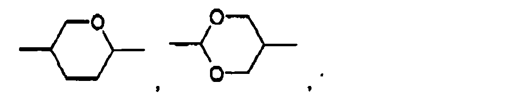 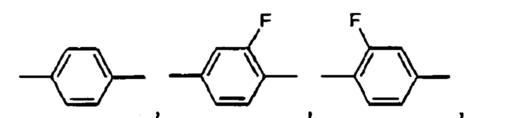 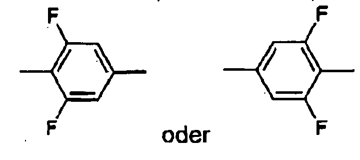 bedeuten
L²¹, L²², L³¹ und L³² unabhängig voneinander H oder F bedeuten,
X² und X³ unabhängig voneinander Halogen, halogeniertes Alkyl oder Alkoxy mit 1 bis 3 GAtomen oder halogeniertes Alkenyl oder Alkenyloxy mit 2 oder 3 C-Atomen bedeuten,
Z³ -CH₂CH₂-, -CF₂CF₂-, -COO-, *trans-* -CH=CH-, *trans-* -CF=CF-, -CH₂O- oder eine Einfachbindung bedeutet und
m und n unabhängig voneinander 0,1 oder 3 bedeuten, und
im Fall, dass X² nicht F oder OCF₃ bedeutet, m auch 2 bedeuten kann und
im Fall, dass X³ nicht F oder OCF₃ und/oder Z³ nicht eine Einfachbindung bedeutet, n auch 2 bedeuten kann und
- gegebenenfalls eine dielektrisch neutrale Komponente, Komponente C, enthaltend eine oder mehrere dielektrisch neutrale Verbindungen der Formel IV 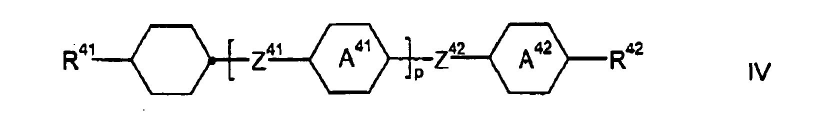 worin
R⁴¹ und R⁴² unabhängig voneinander die oben unter Formel II für R² angegebene Bedeutung besitzen, 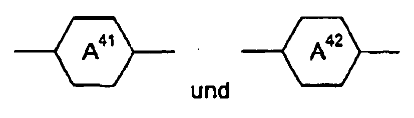
unabhängig voneinander und bei zweifachem Auftreten von 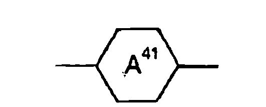 auch diese unabhängig voneinander 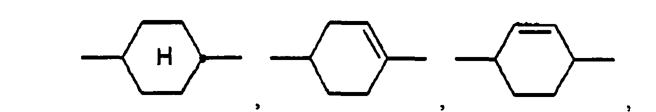 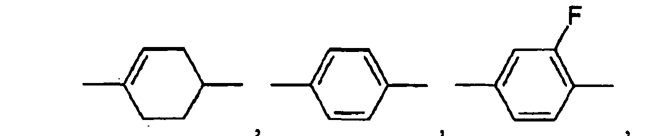 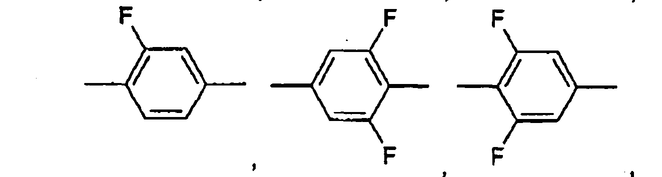 oder 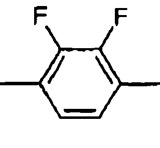 bedeuten,
Z⁴¹ und Z⁴² unabhängig voneinander und bei zweifachem Auftreten von Z⁴¹ auch diese unabhängig voneinander -CH₂CH₂-, -COO-, *trans-* -CH=CH-, *trans-* -CF=CF-, -CH₂O-, -CF₂O-, -CΞG oder eine Einfachbindung bedeuten und
p 0, 1 oder 2 bedeutet.

2. Flüssigkristallmedium nach Anspruch 1, **dadurch gekennzeichnet, dass** die Konzentration der Komponente A im Medium im Bereich von 5 % bis 40 % liegt.

3. Flüssigkristallmedium nach einem oder mehreren der Ansprüche 1 und 2, **dadurch gekennzeichnet, dass** die Komponente A eine oder mehrere Verbindungen der Formel IA enthält, worin Z¹³ eine Einfachbindung bedeutet.

4. Flüssigkristallmedium nach einem oder mehreren der Ansprüche 1 bis 3, **dadurch gekennzeichnet, dass** es eine oder mehrere Verbindungen der Formel 11 wie in Anspruch 1 angegeben enthält.

5. Flüssigkristallmedium nach einem oder mehreren der Ansprüche 1 bis 4, **dadurch gekennzeichnet, dass** es eine oder mehrere Verbindungen der Formel III wie in Anspruch 1 angegeben enthält.

6. Flüssigkristallmedium nach einem oder mehreren der Ansprüche 1 bis 5, **dadurch gekennzeichnet, dass** es eine oder mehrere dielektrisch neutrale Verbindungen der Formel IV wie in Anspruch 1 angegeben enthält.

7. Flüssigkristallmedium nach einem oder mehreren der Ansprüche 1 bis 6, **dadurch gekennzeichnet, dass** es eine dielektrisch neutrale Komponente, Komponente D enthält, enthaltend eine oder mehrere dielektrisch neutrale Verbindungen der Formel VI 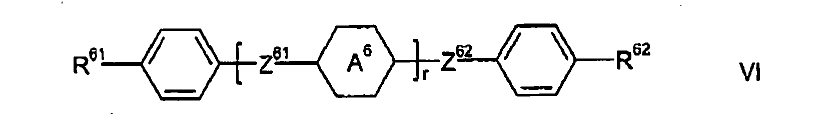 worin
R⁶¹ und R⁶² unabhängig voneinander die für R² unter Formel II in Anspruch 3 angegebene Bedeutung besitzen, 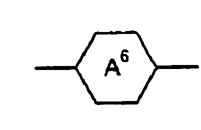
und bei zweifachem Auftreten bei jedem Auftreten unabhängig voneinander 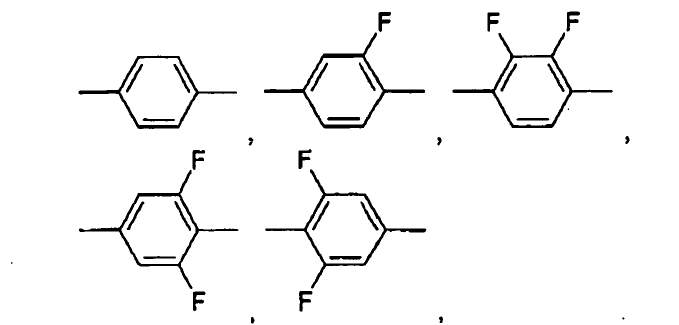 oder 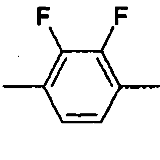 bedeuten,
Z⁶¹ und Z⁶² unabhängig voneinander und bei zweifachem Auftreten von Z⁶¹ auch diese unabhängig voneinander -CH₂CH₂-, -COO-, *trans-* -CH=CH-, *trans-* -CF=CF-, -CH₂O-, -CF₂O- oder eine Einfachbindung bedeuten und
r 0, 1 oder 2 bedeutet.

8. Flüssigkristallanzeige, **dadurch gekennzeichnet, dass** sie ein Flüssigkristallmedium nach einem oder mehreren der Ansprüche 1 bis 7 enthält.

9. Flüssigkristallanzeige nach Anspruch 8, **dadurch gekennzeichnet, dass** sie durch eine Aktivmatrix adressiert wird.

10. Verwendung eines Flüssigkristallmediums nach einem oder mehreren der Ansprüche 1 bis 7 in einer Flüssigkristallanzeige.

## Claims

1. Liquid-crystal medium, **characterised in that** it comprises the following components:
- a first dielectrically positive component, component A, comprising one or more dielectrically positive compounds of the formula IA, one or more dielectrically positive compounds of the formula IB and one or more dielectrically positive compounds of the formula IC 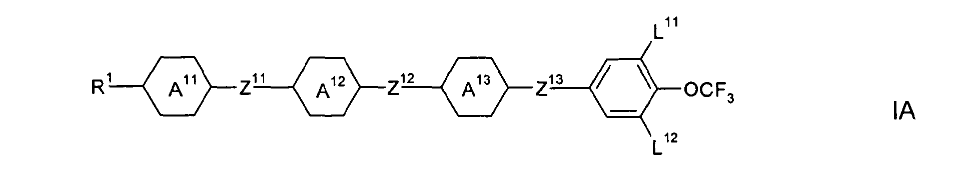 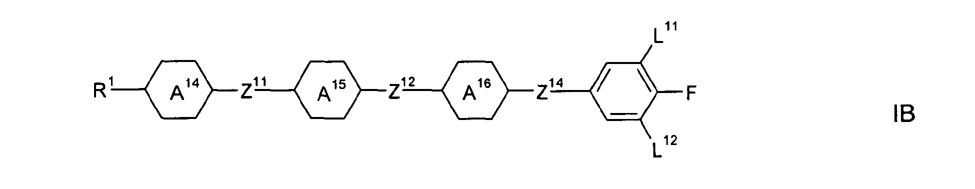 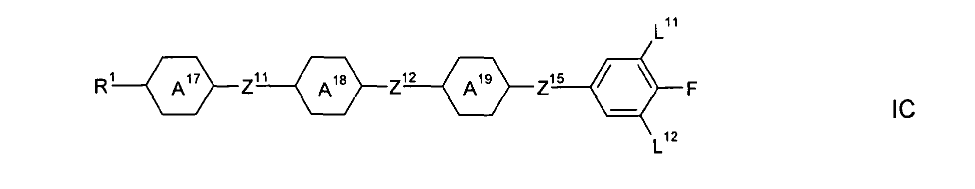 in which
R¹ denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, 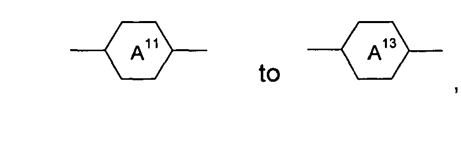
independently of one another, denote 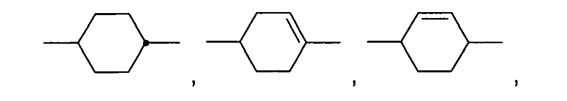 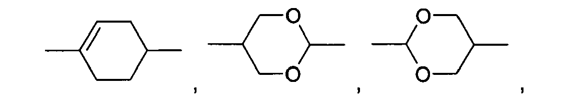 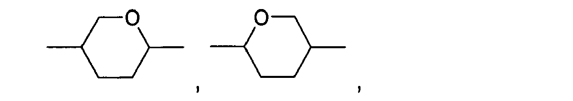 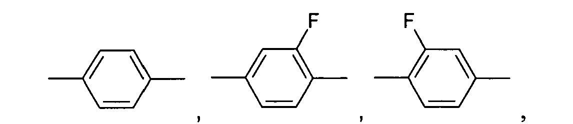 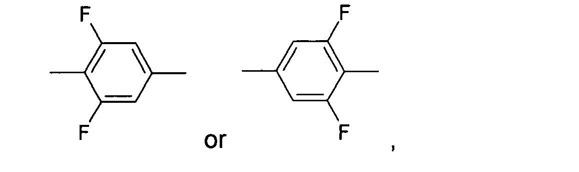 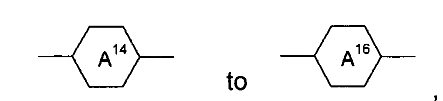 independently of one another, denote 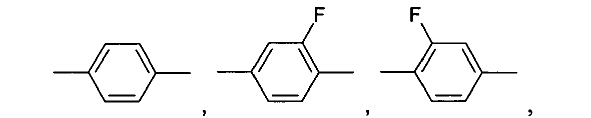 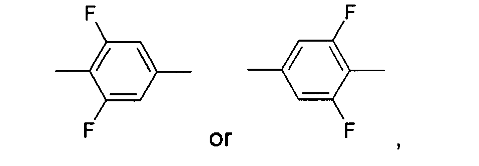 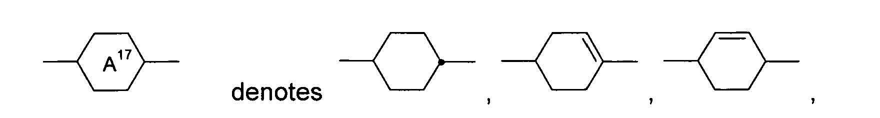 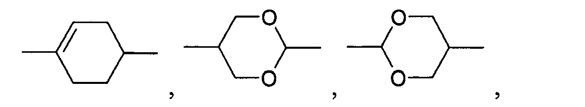 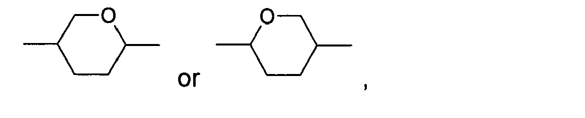 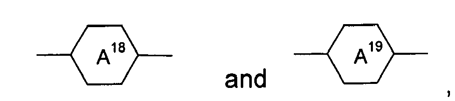 independently of one another, denote 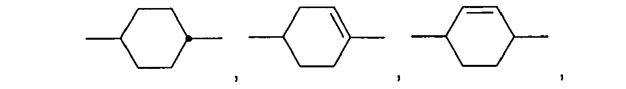 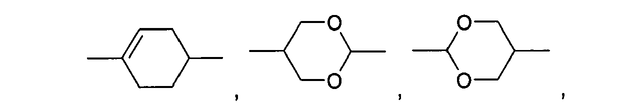 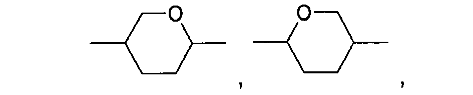 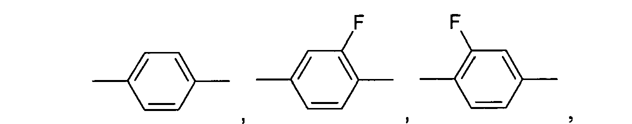 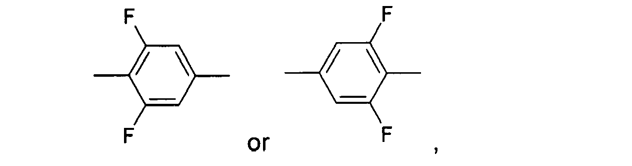
Z¹¹ to Z¹⁵, independently of one another, denote -CH₂CH₂-, -CF₂CF₂-, -COO-, *trans*-CH=CH-, *trans*-CF=CF-, -CH₂O-, -CF₂O- or a single bond,
L¹¹ and L¹², independently of one another, denote H, F or Cl, and
- optionally a second dielectrically positive component, component B, comprising one or more dielectrically positive compounds, preferably selected from the group of the compounds of the formulae II and III 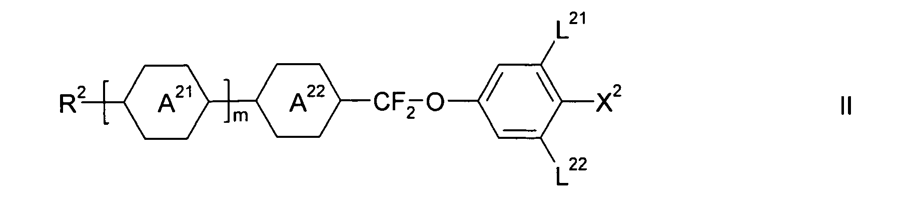 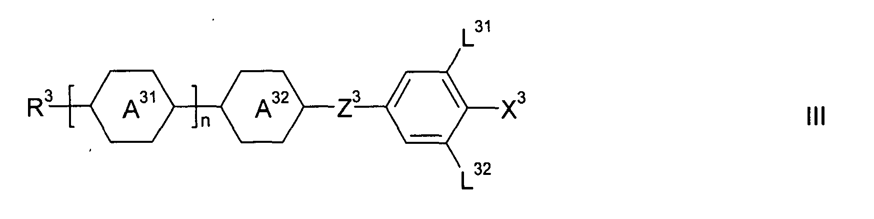 in which
R² and R³, independently of one another, denote alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, 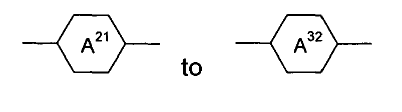
on each appearance, independently of one another, denote 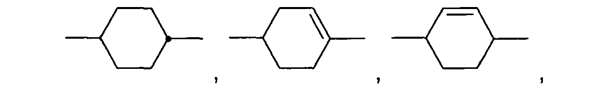 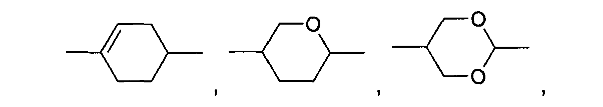 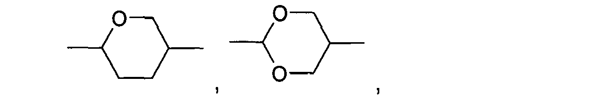 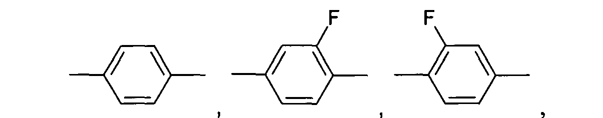 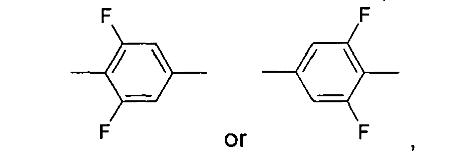
L²¹, L²², L³¹ and L³², independently of one another, denote H or F,
X² and X³, independently of one another, denote halogen, halo- genated alkyl or alkoxy having 1 to 3 C atoms or halo- genated alkenyl or alkenyloxy having 2 or 3 C atoms,
Z³ denotes -CH₂CH₂-, -CF₂CF₂-, -COO-, *trans*-CH=CH-, *trans*-CF=CF-, -CH₂O- or a single bond, and
m and n, independently of one another, denote 0, 1 or 3, and,
in the case where X² does not denote F or OCF₃, m may also denote 2, and,
in the case where X³ does not denote F or OCF₃ and/or Z³ does not denote a single bond, n may also denote 2, and
- optionally a dielectrically neutral component, component C, comprising one or more dielectrically neutral compounds of the formula IV 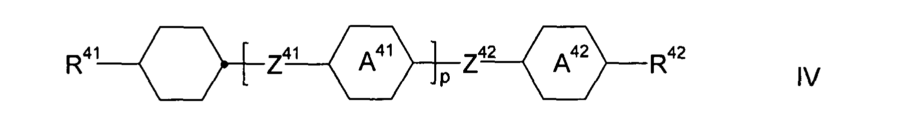 in which
R⁴¹ and R⁴², independently of one another, have the meaning indi- cated above for R² under formula II, 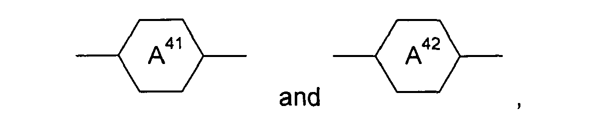
independently of one another and, if 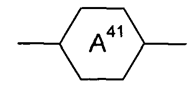 occurs twice, also these independently of one another, denote 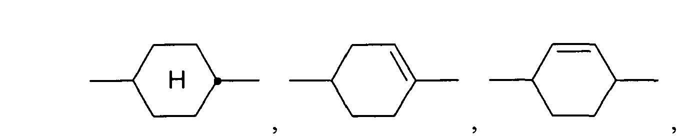 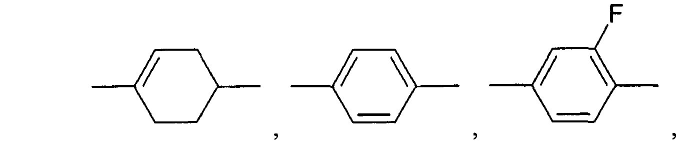 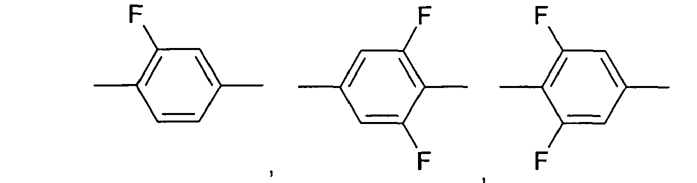 or 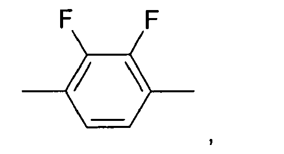
Z⁴¹ and Z⁴², independently of one another and, if Z⁴¹ occurs twice, also these independently of one another, denote -CH₂CH₂-, -COO-, *trans*-CH=CH-, *trans*-CF=CF-, -CH₂O-, -CF₂O-, -C=C- or a single bond, and
p denotes 0, 1 or 2.

2. Liquid-crystal medium according to Claim 1, **characterised in that** the concentration of component A in the medium is in the range from 5% to 40%.

3. Liquid-crystal medium according to one or more of Claims 1 and 2, **characterised in that** component A comprises one or more compounds of the formula IA in which Z¹³ denotes a single bond.

4. Liquid-crystal medium according to one or more of Claims 1 to 3, **characterised in that** it comprises one or more compounds of the formula II as indicated in Claim 1.

5. Liquid-crystal medium according to one or more of Claims 1 to 4, **characterised in that** it comprises one or more compounds of the formula III as indicated in Claim 1.

6. Liquid-crystal medium according to one or more of Claims 1 to 5, **characterised in that** it comprises one or more dielectrically neutral compounds of the formula IV as indicated in Claim 1.

7. Liquid-crystal medium according to one or more of Claims 1 to 6, **characterised in that** it comprises a dielectrically neutral component, component D, comprising one or more dielectrically neutral compounds of the formula VI 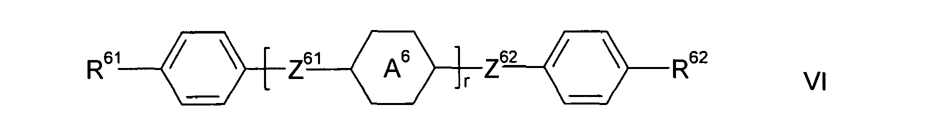 in which
R⁶¹ and R⁶², independently of one another, have the meaning indicated for R² under formula II in Claim 3, 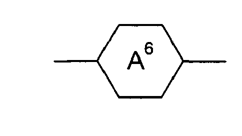 , and if it occurs twice, independently of one another on each occurrence, denotes 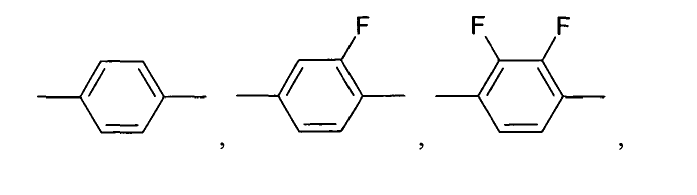 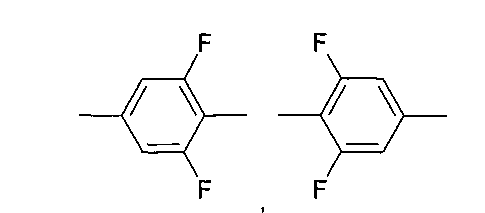 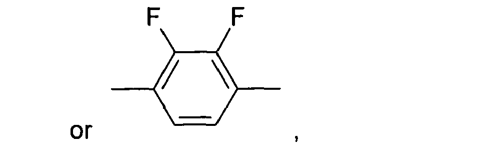
Z⁶¹ and Z⁶², independently of one another and, if Z⁶¹ occurs twice, also these independently of one another, denote -CH₂CH₂-, -COO-, *trans*-CH=CH-, *trans*-CF=CF-, -CH₂O-, -CF₂O- or a single bond, and
r denotes 0, 1 or 2.

8. Liquid-crystal display, **characterised in that** it contains a liquid-crystal medium according to one or more of Claims 1 to 7.

9. Liquid-crystal display according to Claim 8, **characterised in that** it is addressed by an active matrix.

10. Use of a liquid-crystal medium according to one or more of Claims 1 to 7 in a liquid-crystal display.

## Revendications

1. Milieu cristallin liquide, **caractérisé en ce qu'**il comprend les composants qui suivent :
- un premier composant diélectriquement positif, soit le composant A, comprenant un ou plusieurs composé(s) diélectriquement positif(s) de la formule IA, un ou plusieurs composé(s) diélectriquement positif(s) de la formule IB et un ou plusieurs composé(s) diélectriquement positif(s) de la formule IC 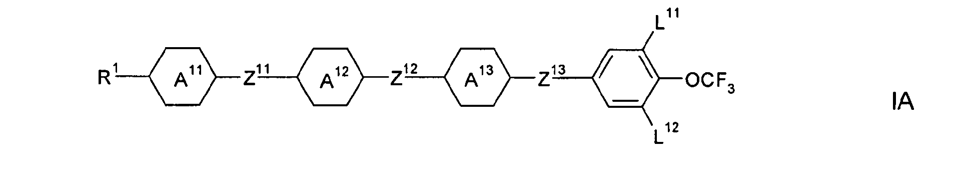 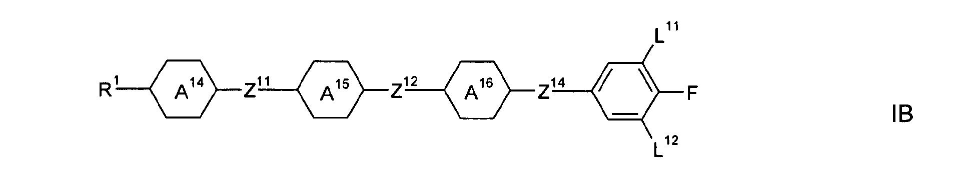 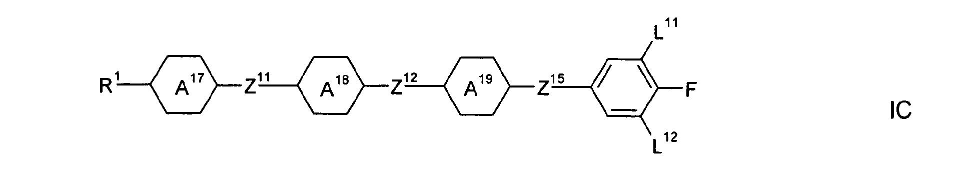 dans lesquelles
R¹ représente alkyle, alcoxy, alkyle fluoré ou alcoxy fluoré comportant de 1 à 7 atomes de C, alkényle, alkényloxy, alkoxyalkyle ou alkényle fluoré comportant de 2 à 7 atomes de C, 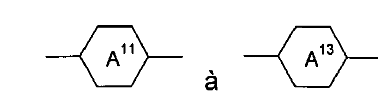
représentent, indépendamment les uns des autres, 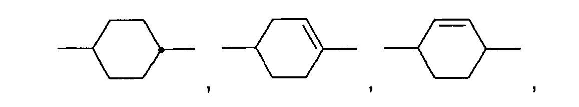 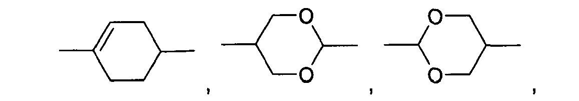 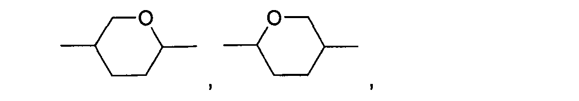 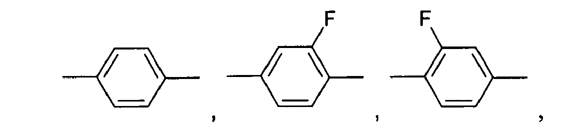 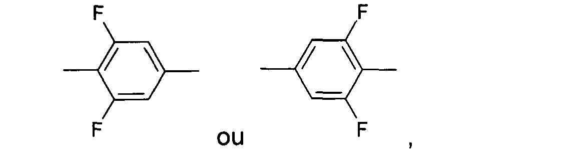 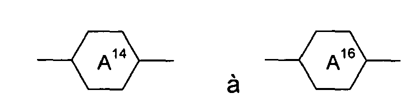 représentent, indépendamment les uns des autres, 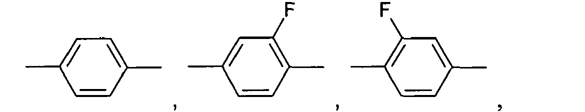 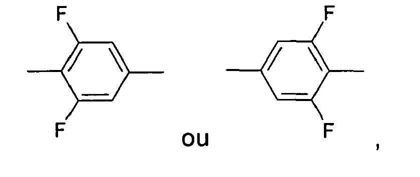 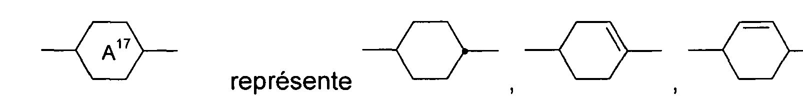 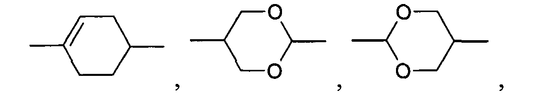 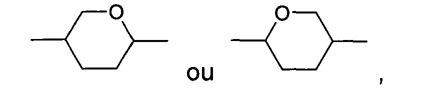 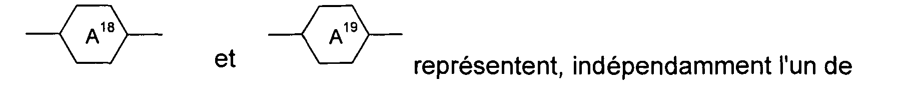 l'autre, 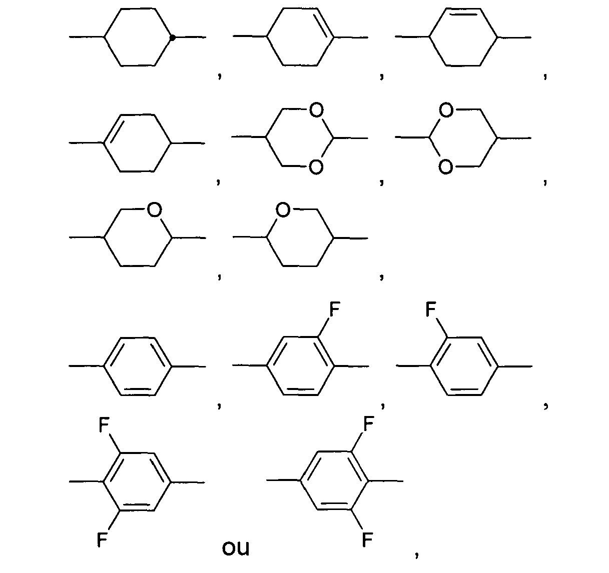
Z¹¹ à Z¹⁵ représentent, indépendamment les uns des autres, -CH₂CH₂-, -CF₂CF₂-, -COO-, *trans*-CH=CH-, *trans-* CF=CF-, -CH₂O-, -CF₂O- ou une liaison simple,
L¹¹ et L¹² représentent, indépendamment l'un de l'autre, H, F ou Cl, et
- en option, un second composant diélectriquement positif, soit le composant B, comprenant un ou plusieurs composés diélectriquement positifs, de préférence choisis parmi le groupe des composés des formules II et III 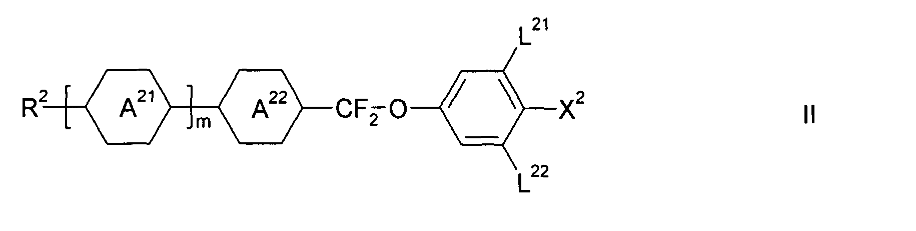 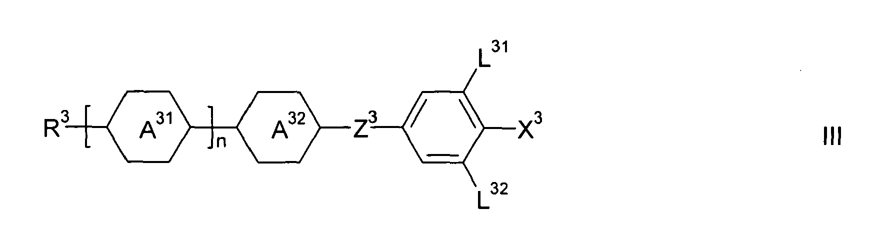 dans lesquelles
R² et R³ représentent, indépendamment l'un de l'autre, alkyle, alcoxy, alkyle fluoré ou alcoxy fluoré comportant de 1 à 7 atomes de C, alkényle, alkényloxy, alcoxyalkyle ou alkényle fluoré comportant de 2 à 7 atomes de C, 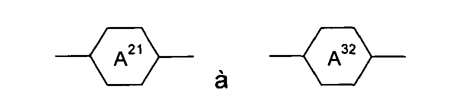 représentent, pour chaque occurrence, indépendamment les unes des autres, 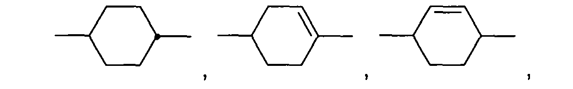 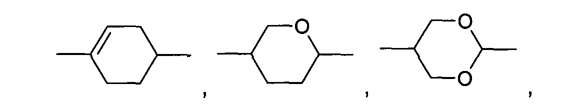 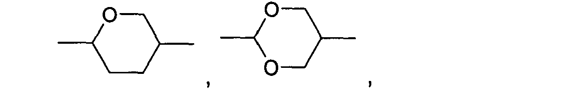 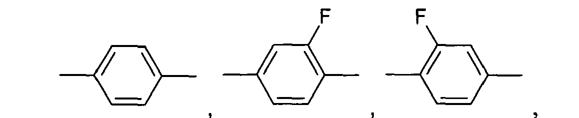 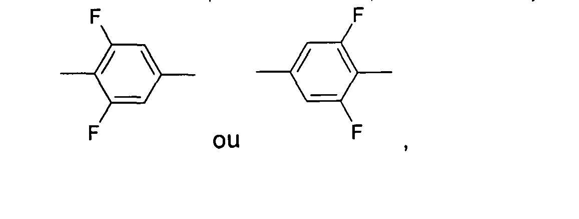
L²¹, L²², L³¹ et L³² représentent, indépendamment les uns des autres, H ou F,
X² et X³ représentent, indépendamment les uns des autres, halogène, alkyle ou alcoxy halogéné comportant de 1 à 3 atomes de C ou alkényle ou alkényloxy halogéné comportant 2 ou 3 atomes de C,
Z³ représente -CH₂CH₂-, -CF₂CF₂-, -COO-, *trans*-CH=CH-, *trans*-CF=CF-, -CH₂O- ou une liaison simple, et
m and n, représentent, indépendamment l'un de l'autre, 0, 1 ou 3, et,
dans le cas où X² ne représente pas F ou OCF₃, m peut également représenter 2, et
dans le cas où X³ ne représente pas F ou OCF₃ et/ou Z³ ne représente pas une liaison simple, n peut également représenter 2, et
- en option, un composant diélectriquement neutre, soit le composant C, comprenant un ou plusieurs composé(s) diélectriquement neutre(s) de la formule IV 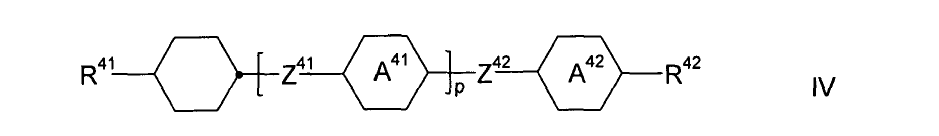 dans laquelle
R⁴¹ et R⁴² présentent, indépendamment l'un de l'autre, la significa- tion indiquée ci-avant pour R² sous la formule II, 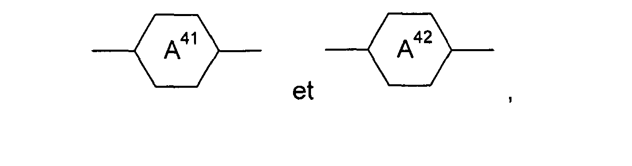
représentent indépendamment l'un de l'autre, et si 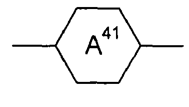 présente une occurrence de deux, ces occurrences représentent, également indépendamment l'une de l'autre, 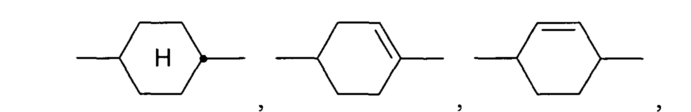 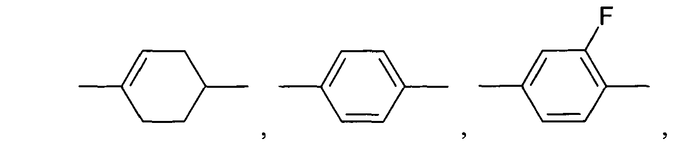 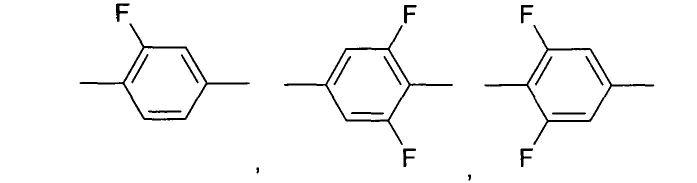 ou 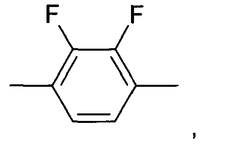
Z⁴¹ et Z⁴² représentent indépendamment l'un de l'autre, et si Z⁴¹ présente une occurrence de deux, ces occurrences représentent, également indépendamment l'une de l'autre, -CH₂CH₂-, -COO-, *trans*-CH=CH-, *trans*-CF=CF-, -CH₂O- -CF₂O- -C=C- ou une liaison simple, et
p représente 0, 1 ou 2.

2. Milieu cristallin liquide selon la revendication 1, **caractérisé en ce que** la concentration du composant A dans le milieu est dans la plage de 5% à 40%.

3. Milieu cristallin liquide selon une ou plusieurs des revendications 1 et 2, **caractérisé en ce que** le composant A comprend un ou plusieurs composés de la formule IA dans laquelle Z¹³ représente une liaison simple.

4. Milieu cristallin liquide selon une ou plusieurs des revendications 1 à 3, **caractérisé en ce qu'**il comprend un ou plusieurs composé(s) de la formule II comme indiqué selon la revendication 1.

5. Milieu cristallin liquide selon une ou plusieurs des revendications 1 à 4, **caractérisé en ce qu'**il comprend un ou plusieurs composé(s) de la formule III comme indiqué selon la revendication 1.

6. Milieu cristallin liquide selon une ou plusieurs des revendications 1 à 5, **caractérisé en ce qu'**il comprend un ou plusieurs composé(s) diélectriquement neutre(s) de la formule IV comme indiqué selon la revendication 1.

7. Milieu cristallin liquide selon une ou plusieurs des revendications 1 à 6, **caractérisé en ce qu'**il comprend un composant diélectriquement neutre, soit le composant D, comprenant un ou plusieurs composé(s) diélectriquement neutre(s) de la formule VI 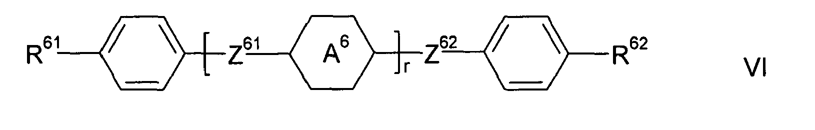 dans laquelle
R⁶¹ et R⁶² présentent, indépendamment l'un de l'autre, la significa- tion indiquée pour R² sous la formule II selon la revendi- cation 3, 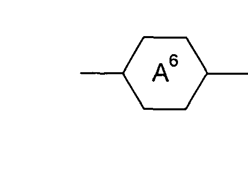
représente, et s'il présente une occurrence de deux, ces occurrences représentent, également indépendamment l'une de l'autre
ou 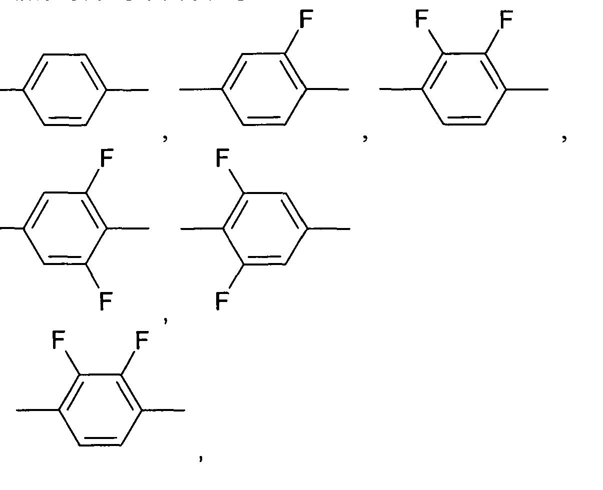
Z⁶¹ et Z⁶² représentent, indépendamment l'un de l'autre, et si Z⁶¹ présente une occurrence de deux, ces occurrences représentent, également indépendamment l'une de l'autre -CH₂CH₂-, -COO-, *trans*-CH=CH-, *trans*-CF=CF-, -CH₂O-, -CF₂O- ou une liaison simple, et
r représente 0, 1 ou 2.

8. Affichage à cristaux liquides, **caractérisé en ce qu'**il contient un milieu cristallin liquide selon une ou plusieurs des revendications 1 à 7.

9. Affichage à cristaux liquides selon la revendication 8, **caractérisé en ce qu'**il est adressé au moyen d'une matrice active.

10. Utilisation d'un milieu cristallin liquide selon une ou plusieurs des revendications 1 à 7 dans un affichage à cristaux liquides.
